# EUROPEAN PATENT SPECIFICATION

(11) **EP 4 603 318 B1**
(45) Date of publication and mention of the grant of the patent: **09.12.2026**
(21) Application number: 25154345.0
(22) Date of filing: 28.01.2025
(51) Int. Cl.: B60K 35/81

(54) **USER INTERFACES FOR HYBRID GAUGES**
BENUTZERSCHNITTSTELLEN FÜR HYBRIDE MESSGERÄTE
INTERFACES UTILISATEUR POUR JAUGES HYBRIDES

(30) Priority: 13.02.2024 US 202463553081 P; 19.03.2024 US 202463567265 P; 24.04.2024 US 202463638335 P; 10.05.2024 US 202463645710 P; 07.06.2024 US 202463657728 P; 20.06.2024 US 202463662412 P; 28.06.2024 US 202463665983 P; 27.09.2024 US 202463700446 P; 10.01.2025 US 202519017231
(43) Date of publication of application: 20.08.2025
(60) Divisional application: 26197733.4 / 4 813 719
(73) Proprietor: Apple Inc., Cupertino, CA 95014 (US)
(72) Inventor: CRICK, Benjamin J., Cupertino (US); ALBRECHT-BUEHLER, Conrad H., Cupertino (US); AMINI, Mani, Cupertino (US); DELLINGER, Richard R., Cupertino (US); KIM, Yun Jae, Cupertino (US); XU, Xinchao, Cupertino (US)
(74) Representative: Barton, Russell Glen

(56) References cited:
- US-A1- 2019 225 221
- US-A1- 2020 039 532
- US-A1- 2020 384 859
- US-A1- 2020 398 666
- US-A1- 2022 153 136

## Description

### FIELD

The present disclosure relates generally to computer user interfaces, and more specifically to techniques for managing user interfaces for hybrid gauges.

### BACKGROUND

A vehicle instrument is an instrument that indicates and/or measures some parameter(s) in a vehicle, such as a car, plane, and/or boat. Instruments are often part of a vehicle dashboard and/or instrument cluster. A gauge is an instrument (with or without a scale), that provides visual feedback of the amount, level, or contents of a parameter of a vehicle.

Further background information can be found from US 2019/225221 A1 which is directed to a hybrid vehicle comprising an engine, a motor and a meter display device.

### BRIEF SUMMARY

The invention is defined by the appended set of claims. Some techniques for managing user interfaces for hybrid gauges using electronic devices, however, are generally cumbersome and inefficient. For example, some existing techniques use a complex and time-consuming user interface, which may include multiple key presses or keystrokes. Existing techniques require more time than necessary, wasting user time and device energy. This latter consideration is particularly important in battery-operated devices.

Accordingly, the present technique provides electronic devices with faster, more efficient methods and interfaces for managing user interfaces for hybrid gauges. Such methods and interfaces optionally complement or replace other methods for displaying information using gauges. Such methods and interfaces reduce the cognitive burden on a user and produce a more efficient human-machine interface. For battery-operated computing devices, such methods and interfaces conserve power and increase the time between battery charges. Such methods and interfaces also provide helpful feedback to the user about the operating conditions of a vehicle, thereby enabling the user to better understand the state of the vehicle and/or computer system of the vehicle.

A computer system is described, in accordance with an example. The computer system is configured to communicate with one or more display generation components and comprises: means for displaying, via the one or more display generation components and as part of an instrument cluster, a power gauge that includes: a path that corresponds to amounts of power, including electric power and combustion power, wherein the path includes: a first segment that corresponds to an amount of electric power being generated and/or stored; a second segment that corresponds to an amount of electric power being used; and a third segment that corresponds to an amount of power of a combustion engine; and an indicator that moves along the path based on changes in the amounts of electric power and combustion power, and wherein the indicator indicates amounts of electric power and combustion power; means, while displaying the power gauge, for detecting a change in amount of power; and means, responsive to detecting the change in amount of power, for updating, via the one or more display generation components, the power gauge by moving the indicator along the path based on the change in amount of power.

A computer program product is described, in accordance with an example. The compute program product comprises one or more programs configured to be executed by one or more processors of a computer system that is in communication with one or more display generation components, the one or more programs including instructions for: displaying, via the one or more display generation components and as part of an instrument cluster, a power gauge that includes: a path that corresponds to amounts of power, including electric power and combustion power, wherein the path includes: a first segment that corresponds to an amount of electric power being generated and/or stored; a second segment that corresponds to an amount of electric power being used; and a third segment that corresponds to an amount of power of a combustion engine; and an indicator that moves along the path based on changes in the amounts of electric power and combustion power, and wherein the indicator indicates amounts of electric power and combustion power; while displaying the power gauge, detecting a change in amount of power; and in response to detecting the change in amount of power, updating, via the one or more display generation components, the power gauge by moving the indicator along the path based on the change in amount of power.

A method is described in accordance with an example. The method comprises: at a computer system, wherein the computer system is in communication with one or more display generation components: displaying, via the one or more display generation components and as part of an instrument cluster, a power gauge that corresponds to an electric motor, including: in accordance with a determination that a charge level of a battery is above a threshold charge level, displaying the power gauge with a first visual appearance; and in accordance with a determination that the charge level of the battery is not above the threshold charge level, displaying the power gauge with a second visual appearance that is different from the first visual appearance.

A non-transitory computer-readable storage medium is described in accordance with an example. The non-transitory computer-readable storage medium stores one or more programs configured to be executed by one or more processors of a computer system that is in communication with one or more display generation components, the one or more programs including instructions for: displaying, via the one or more display generation components and as part of an instrument cluster, a power gauge that corresponds to an electric motor, including: in accordance with a determination that a charge level of a battery is above a threshold charge level, displaying the power gauge with a first visual appearance; and in accordance with a determination that the charge level of the battery is not above the threshold charge level, displaying the power gauge with a second visual appearance that is different from the first visual appearance.

A transitory computer-readable storage medium is described in accordance with an example. The transitory computer-readable storage medium stores one or more programs configured to be executed by one or more processors of a computer system that is in communication with one or more display generation components, the one or more programs including instructions for: displaying, via the one or more display generation components and as part of an instrument cluster, a power gauge that corresponds to an electric motor, including: in accordance with a determination that a charge level of a battery is above a threshold charge level, displaying the power gauge with a first visual appearance; and in accordance with a determination that the charge level of the battery is not above the threshold charge level, displaying the power gauge with a second visual appearance that is different from the first visual appearance.

A computer system is described in accordance with an example. The computer system is configured to communicate with one or more display generation components and comprises: one or more processors; and memory storing one or more programs configured to be executed by the one or more processors, the one or more programs including instructions for: displaying, via the one or more display generation components and as part of an instrument cluster, a power gauge that corresponds to an electric motor, including: in accordance with a determination that a charge level of a battery is above a threshold charge level, displaying the power gauge with a first visual appearance; and in accordance with a determination that the charge level of the battery is not above the threshold charge level, displaying the power gauge with a second visual appearance that is different from the first visual appearance.

A computer system is described in accordance with an example. The computer system is configured to communicate with one or more display generation components and comprises: means for displaying, via the one or more display generation components and as part of an instrument cluster, a power gauge that corresponds to an electric motor, including: in accordance with a determination that a charge level of a battery is above a threshold charge level, displaying the power gauge with a first visual appearance; and in accordance with a determination that the charge level of the battery is not above the threshold charge level, displaying the power gauge with a second visual appearance that is different from the first visual appearance.

A computer program product is described in accordance with an example. The computer program product comprises one or more programs configured to be executed by one or more processors of a computer system that is in communication with one or more display generation components, the one or more programs including instructions for: displaying, via the one or more display generation components and as part of an instrument cluster, a power gauge that corresponds to an electric motor, including: in accordance with a determination that a charge level of a battery is above a threshold charge level, displaying the power gauge with a first visual appearance; and in accordance with a determination that the charge level of the battery is not above the threshold charge level, displaying the power gauge with a second visual appearance that is different from the first visual appearance.

In accordance with some examples, a method is described. The method comprises: at a computer system, wherein the computer system is in communication with one or more display generation components: concurrently displaying, via the one or more display generation components and as part of an instrument cluster, a first power gauge and a second power gauge that is different from the first power gauge, wherein the first power gauge is visually emphasized relative to the second power gauge; while displaying the first power gauge visually emphasized relative to the second power gauge, detecting that a set of one or more conditions is met; and in response to detecting that the set of one or more conditions is met, increasing a visual emphasis of the second power gauge relative to the first power gauge.

In accordance with some examples, a non-transitory computer-readable storage medium is described. The non-transitory computer-readable storage medium stores one or more programs configured to be executed by one or more processors of a computer system that is in communication with one or more display generation components, the one or more programs including instructions for: concurrently displaying, via the one or more display generation components and as part of an instrument cluster, a first power gauge and a second power gauge that is different from the first power gauge, wherein the first power gauge is visually emphasized relative to the second power gauge; while displaying the first power gauge visually emphasized relative to the second power gauge, detecting that a set of one or more conditions is met; and in response to detecting that the set of one or more conditions is met, increasing a visual emphasis of the second power gauge relative to the first power gauge.

In accordance with some examples, a transitory computer-readable storage medium is described. The transitory computer-readable storage medium stores one or more programs configured to be executed by one or more processors of a computer system that is in communication with one or more display generation components, the one or more programs including instructions for: concurrently displaying, via the one or more display generation components and as part of an instrument cluster, a first power gauge and a second power gauge that is different from the first power gauge, wherein the first power gauge is visually emphasized relative to the second power gauge; while displaying the first power gauge visually emphasized relative to the second power gauge, detecting that a set of one or more conditions is met; and in response to detecting that the set of one or more conditions is met, increasing a visual emphasis of the second power gauge relative to the first power gauge.

In accordance with some examples, a computer system is described. The computer system is configured to communicate with one or more display generation components and comprises: one or more processors; and memory storing one or more programs configured to be executed by the one or more processors, the one or more programs including instructions for: concurrently displaying, via the one or more display generation components and as part of an instrument cluster, a first power gauge and a second power gauge that is different from the first power gauge, wherein the first power gauge is visually emphasized relative to the second power gauge; while displaying the first power gauge visually emphasized relative to the second power gauge, detecting that a set of one or more conditions is met; and in response to detecting that the set of one or more conditions is met, increasing a visual emphasis of the second power gauge relative to the first power gauge.

In accordance with some examples, a computer system is described. The computer system is configured to communicate with one or more display generation components and comprises: means for concurrently displaying, via the one or more display generation components and as part of an instrument cluster, a first power gauge and a second power gauge that is different from the first power gauge, wherein the first power gauge is visually emphasized relative to the second power gauge; means, while displaying the first power gauge visually emphasized relative to the second power gauge, for detecting that a set of one or more conditions is met; and means, responsive to detecting that the set of one or more conditions is met, for increasing a visual emphasis of the second power gauge relative to the first power gauge.

In accordance with some examples, a computer program product is described. The computer program product comprises one or more programs configured to be executed by one or more processors of a computer system that is in communication with one or more display generation components, the one or more programs including instructions for: concurrently displaying, via the one or more display generation components and as part of an instrument cluster, a first power gauge and a second power gauge that is different from the first power gauge, wherein the first power gauge is visually emphasized relative to the second power gauge; while displaying the first power gauge visually emphasized relative to the second power gauge, detecting that a set of one or more conditions is met; and in response to detecting that the set of one or more conditions is met, increasing a visual emphasis of the second power gauge relative to the first power gauge.

In accordance with some examples, a method is described. The method comprises: at a computer system, wherein the computer system is in communication with a first set of one or more display generation components and one or more input devices: displaying, via the first set of one or more display generation components, a representation of a respective region of a second set of one or more display generation components that is different from the first set of one or more display generation components; while displaying the representation of the respective region of the second set of one or more display generation components, detecting, via the one or more input devices, a first set of one or more inputs; and in response to detecting the first set of one or more inputs, setting a configuration of one or more graphical elements of the respective region of the second set of one or more display generation components, including: in accordance with a determination that the respective region of the second set of one or more display generation components corresponds to a first region of the second set of one or more display generation components, setting a configuration of one or more graphical elements of the first region of the second set of one or more display generation components; and in accordance with a determination that the respective region of the second set of one or more display generation components corresponds to a second region of the second set of one or more display generation components that is different from the first region of the second set of one or more display generation components, setting a configuration of one or more graphical elements of the second region of the second set of one or more display generation components, wherein the one or more graphical elements are displayed in the respective region of the second set of one or more display generation components according to the configuration set in response to detecting the first set of one or more inputs.

In accordance with some examples, a non-transitory computer-readable storage medium is described. The non-transitory computer-readable storage medium stores one or more programs configured to be executed by one or more processors of a computer system that is in communication with a first set of one or more display generation components and one or more input devices. The one or more programs include instructions for: displaying, via the first set of one or more display generation components, a representation of a respective region of a second set of one or more display generation components that is different from the first set of one or more display generation components; while displaying the representation of the respective region of the second set of one or more display generation components, detecting, via the one or more input devices, a first set of one or more inputs; and in response to detecting the first set of one or more inputs, setting a configuration of one or more graphical elements of the respective region of the second set of one or more display generation components, including: in accordance with a determination that the respective region of the second set of one or more display generation components corresponds to a first region of the second set of one or more display generation components, setting a configuration of one or more graphical elements of the first region of the second set of one or more display generation components; and in accordance with a determination that the respective region of the second set of one or more display generation components corresponds to a second region of the second set of one or more display generation components that is different from the first region of the second set of one or more display generation components, setting a configuration of one or more graphical elements of the second region of the second set of one or more display generation components, wherein the one or more graphical elements are displayed in the respective region of the second set of one or more display generation components according to the configuration set in response to detecting the first set of one or more inputs.

In accordance with some examples, a transitory computer-readable storage medium is described. The transitory computer-readable storage medium stores one or more programs configured to be executed by one or more processors of a computer system that is in communication with a first set of one or more display generation components and one or more input devices. The one or more programs include instructions for: displaying, via the first set of one or more display generation components, a representation of a respective region of a second set of one or more display generation components that is different from the first set of one or more display generation components; while displaying the representation of the respective region of the second set of one or more display generation components, detecting, via the one or more input devices, a first set of one or more inputs; and in response to detecting the first set of one or more inputs, setting a configuration of one or more graphical elements of the respective region of the second set of one or more display generation components, including: in accordance with a determination that the respective region of the second set of one or more display generation components corresponds to a first region of the second set of one or more display generation components, setting a configuration of one or more graphical elements of the first region of the second set of one or more display generation components; and in accordance with a determination that the respective region of the second set of one or more display generation components corresponds to a second region of the second set of one or more display generation components that is different from the first region of the second set of one or more display generation components, setting a configuration of one or more graphical elements of the second region of the second set of one or more display generation components, wherein the one or more graphical elements are displayed in the respective region of the second set of one or more display generation components according to the configuration set in response to detecting the first set of one or more inputs.

In accordance with some examples, a computer system configured to communicate with a first set of one or more display generation components and one or more input devices is described. The computer system comprises one or more processors and memory storing one or more programs configured to be executed by the one or more processors. The one or more programs include instructions for: displaying, via the first set of one or more display generation components, a representation of a respective region of a second set of one or more display generation components that is different from the first set of one or more display generation components; while displaying the representation of the respective region of the second set of one or more display generation components, detecting, via the one or more input devices, a first set of one or more inputs; and in response to detecting the first set of one or more inputs, setting a configuration of one or more graphical elements of the respective region of the second set of one or more display generation components, including: in accordance with a determination that the respective region of the second set of one or more display generation components corresponds to a first region of the second set of one or more display generation components, setting a configuration of one or more graphical elements of the first region of the second set of one or more display generation components; and in accordance with a determination that the respective region of the second set of one or more display generation components corresponds to a second region of the second set of one or more display generation components that is different from the first region of the second set of one or more display generation components, setting a configuration of one or more graphical elements of the second region of the second set of one or more display generation components, wherein the one or more graphical elements are displayed in the respective region of the second set of one or more display generation components according to the configuration set in response to detecting the first set of one or more inputs.

In accordance with some examples, a computer system configured to communicate with a first set of one or more display generation components and one or more input devices is described. The computer system comprises: means for displaying, via the first set of one or more display generation components, a representation of a respective region of a second set of one or more display generation components that is different from the first set of one or more display generation components; means for, while displaying the representation of the respective region of the second set of one or more display generation components, detecting, via the one or more input devices, a first set of one or more inputs; and means for, in response to detecting the first set of one or more inputs, setting a configuration of one or more graphical elements of the respective region of the second set of one or more display generation components, including: in accordance with a determination that the respective region of the second set of one or more display generation components corresponds to a first region of the second set of one or more display generation components, setting a configuration of one or more graphical elements of the first region of the second set of one or more display generation components; and in accordance with a determination that the respective region of the second set of one or more display generation components corresponds to a second region of the second set of one or more display generation components that is different from the first region of the second set of one or more display generation components, setting a configuration of one or more graphical elements of the second region of the second set of one or more display generation components, wherein the one or more graphical elements are displayed in the respective region of the second set of one or more display generation components according to the configuration set in response to detecting the first set of one or more inputs.

In accordance with some examples, a computer program product is described. The computer program product comprises one or more programs configured to be executed by one or more processors of a computer system that is in communication with a first set of one or more display generation components and one or more input devices. The one or more programs include instructions for: displaying, via the first set of one or more display generation components, a representation of a respective region of a second set of one or more display generation components that is different from the first set of one or more display generation components; while displaying the representation of the respective region of the second set of one or more display generation components, detecting, via the one or more input devices, a first set of one or more inputs; and in response to detecting the first set of one or more inputs, setting a configuration of one or more graphical elements of the respective region of the second set of one or more display generation components, including: in accordance with a determination that the respective region of the second set of one or more display generation components corresponds to a first region of the second set of one or more display generation components, setting a configuration of one or more graphical elements of the first region of the second set of one or more display generation components; and in accordance with a determination that the respective region of the second set of one or more display generation components corresponds to a second region of the second set of one or more display generation components that is different from the first region of the second set of one or more display generation components, setting a configuration of one or more graphical elements of the second region of the second set of one or more display generation components, wherein the one or more graphical elements are displayed in the respective region of the second set of one or more display generation components according to the configuration set in response to detecting the first set of one or more inputs.

In accordance with some examples, a method is described. The method comprises: at a computer system, wherein the computer system is in communication with one or more display generation components: receiving an indication of an input corresponding to a parameter; in response to receiving the indication of the input corresponding to the parameter, initiating, via the one or more display generation components, display of a respective graphical indication corresponding to the parameter; and after a threshold amount of time has elapsed since initiating display of the respective graphical indication corresponding to the parameter: in accordance with a determination that the computer system is operating in a first mode of operation, ceasing display of the respective graphical indication corresponding to the parameter; and in accordance with a determination that the computer system is operating in a second mode of operation that is different from the first mode of operation, maintaining display of the respective graphical indication corresponding to the parameter.

In accordance with some examples, a non-transitory computer-readable storage medium is described. The non-transitory computer-readable storage medium stores one or more programs configured to be executed by one or more processors of a computer system that is in communication with one or more display generation components. The one or more programs include instructions for: receiving an indication of an input corresponding to a parameter; in response to receiving the indication of the input corresponding to the parameter, initiating, via the one or more display generation components, display of a respective graphical indication corresponding to the parameter; and after a threshold amount of time has elapsed since initiating display of the respective graphical indication corresponding to the parameter: in accordance with a determination that the computer system is operating in a first mode of operation, ceasing display of the respective graphical indication corresponding to the parameter; and in accordance with a determination that the computer system is operating in a second mode of operation that is different from the first mode of operation, maintaining display of the respective graphical indication corresponding to the parameter.

In accordance with some examples, a transitory computer-readable storage medium is described. The transitory computer-readable storage medium stores one or more programs configured to be executed by one or more processors of a computer system that is in communication with one or more display generation components. The one or more programs include instructions for: receiving an indication of an input corresponding to a parameter; in response to receiving the indication of the input corresponding to the parameter, initiating, via the one or more display generation components, display of a respective graphical indication corresponding to the parameter; and after a threshold amount of time has elapsed since initiating display of the respective graphical indication corresponding to the parameter: in accordance with a determination that the computer system is operating in a first mode of operation, ceasing display of the respective graphical indication corresponding to the parameter; and in accordance with a determination that the computer system is operating in a second mode of operation that is different from the first mode of operation, maintaining display of the respective graphical indication corresponding to the parameter.

In accordance with some examples, a computer system configured to communicate with one or more display generation components is described. The computer system comprises one or more processors and memory storing one or more programs configured to be executed by the one or more processors. The one or more programs include instructions for: receiving an indication of an input corresponding to a parameter; in response to receiving the indication of the input corresponding to the parameter, initiating, via the one or more display generation components, display of a respective graphical indication corresponding to the parameter; and after a threshold amount of time has elapsed since initiating display of the respective graphical indication corresponding to the parameter: in accordance with a determination that the computer system is operating in a first mode of operation, ceasing display of the respective graphical indication corresponding to the parameter; and in accordance with a determination that the computer system is operating in a second mode of operation that is different from the first mode of operation, maintaining display of the respective graphical indication corresponding to the parameter.

In accordance with some examples, a computer system configured to communicate with one or more display generation components is described. The computer system comprises: means for receiving an indication of an input corresponding to a parameter; means for, in response to receiving the indication of the input corresponding to the parameter, initiating, via the one or more display generation components, display of a respective graphical indication corresponding to the parameter; and means for, after a threshold amount of time has elapsed since initiating display of the respective graphical indication corresponding to the parameter: in accordance with a determination that the computer system is operating in a first mode of operation, ceasing display of the respective graphical indication corresponding to the parameter; and in accordance with a determination that the computer system is operating in a second mode of operation that is different from the first mode of operation, maintaining display of the respective graphical indication corresponding to the parameter.

In accordance with some examples, a computer program product is described. The computer program product comprises one or more programs configured to be executed by one or more processors of a computer system that is in communication with one or more display generation components. The one or more programs include instructions for: receiving an indication of an input corresponding to a parameter; in response to receiving the indication of the input corresponding to the parameter, initiating, via the one or more display generation components, display of a respective graphical indication corresponding to the parameter; and after a threshold amount of time has elapsed since initiating display of the respective graphical indication corresponding to the parameter: in accordance with a determination that the computer system is operating in a first mode of operation, ceasing display of the respective graphical indication corresponding to the parameter; and in accordance with a determination that the computer system is operating in a second mode of operation that is different from the first mode of operation, maintaining display of the respective graphical indication corresponding to the parameter.

Executable instructions for performing these functions are, optionally, included in a non-transitory computer-readable storage medium or other computer program product configured for execution by one or more processors. Executable instructions for performing these functions are, optionally, included in a transitory computer-readable storage medium or other computer program product configured for execution by one or more processors.

Thus, devices are provided with faster, more efficient methods and interfaces for managing user interfaces for hybrid gauges, thereby increasing the effectiveness, efficiency, and user satisfaction with such devices. Such methods and interfaces may complement or replace other methods for displaying information using gauges.

### DESCRIPTION OF THE FIGURES

For a better understanding of the various described embodiments, reference should be made to the Description of Embodiments below, in conjunction with the following drawings in which like reference numerals refer to corresponding parts throughout the figures.
FIG. 1A is a block diagram illustrating a portable multifunction device with a touch-sensitive display in accordance with some embodiments.
FIG. 1B is a block diagram illustrating exemplary components for event handling in accordance with some embodiments.
FIG. 2 illustrates a portable multifunction device having a touch screen in accordance with some embodiments.
FIG. 3A is a block diagram of an exemplary multifunction device with a display and a touch-sensitive surface in accordance with some embodiments.
FIGS. 3B-3G illustrate the use of Application Programming Interfaces (APIs) to perform operations.
FIG. 4A illustrates an exemplary user interface for a menu of applications on a portable multifunction device in accordance with some embodiments.
FIG. 4B illustrates an exemplary user interface for a multifunction device with a touch-sensitive surface that is separate from the display in accordance with some embodiments.
FIG. 5A illustrates a personal electronic device in accordance with some embodiments.
FIG. 5B is a block diagram illustrating a personal electronic device in accordance with some embodiments.
FIGS. 6A-6O illustrate exemplary user interfaces for managing user interfaces for hybrid gauges, in accordance with the claimed invention.
FIG. 7 is a flow diagram illustrating methods of managing user interfaces for hybrid gauges, in accordance with the claimed invention.
FIGS. 8A-8J illustrate example user interfaces for managing user interfaces for hybrid gauges, in accordance with some embodiments.
FIG. 9 is a flow diagram illustrating methods of managing user interfaces for hybrid gauges, in accordance with some embodiments.
FIGS. 10A-10P illustrate example user interfaces for managing the visual emphasis of gauges, in accordance with some embodiments.
FIG. 11 is a flow diagram illustrating methods of managing the visual emphasis of gauges, in accordance with some embodiments.
FIGS. 12A-12AD illustrate exemplary user interfaces, in accordance with some embodiments.
FIG. 13 is a flow diagram illustrating methods of configuring a display, in accordance with some embodiments.
FIG. 14 is a flow diagram illustrating methods of displaying user interfaces, in accordance with some embodiments.

### DESCRIPTION OF EMBODIMENTS

The following description sets forth exemplary methods, parameters, and the like. It should be recognized, however, that such description is not intended as a limitation on the scope of the present disclosure but is instead provided as a description of exemplary embodiments.

There is a need for electronic devices that provide efficient methods and interfaces for managing user interfaces for hybrid gauges. In some embodiments, a single hybrid gauge includes information about electricity generation, electric motor usage, and combustion engine usage. Such techniques can reduce the cognitive burden on a user who views gauges to determine the state of a vehicle and/or computer system of the vehicle, thereby enhancing productivity. Further, such techniques can reduce processor and battery power otherwise wasted on redundant user inputs.

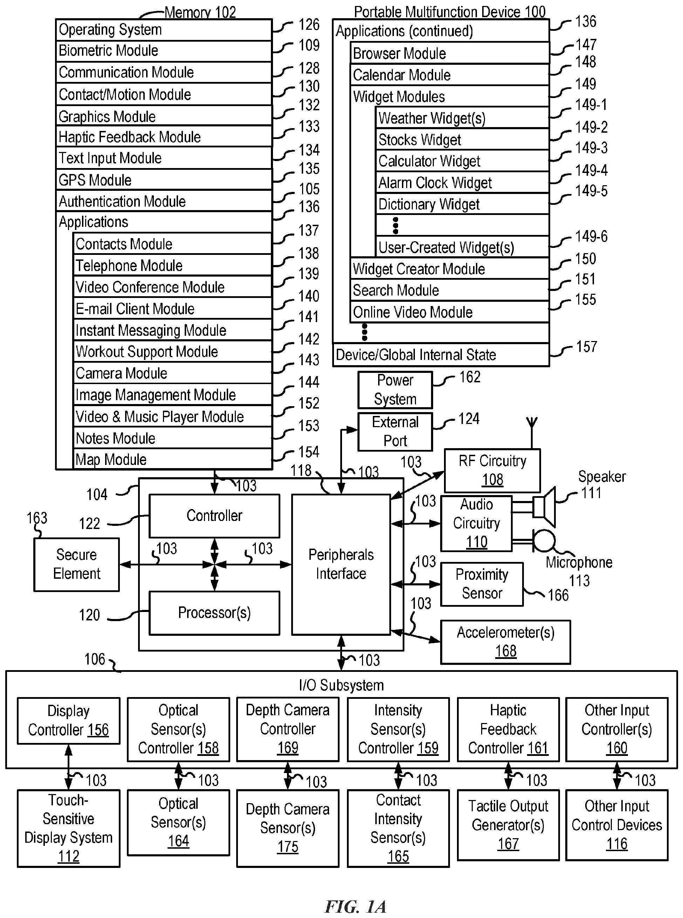

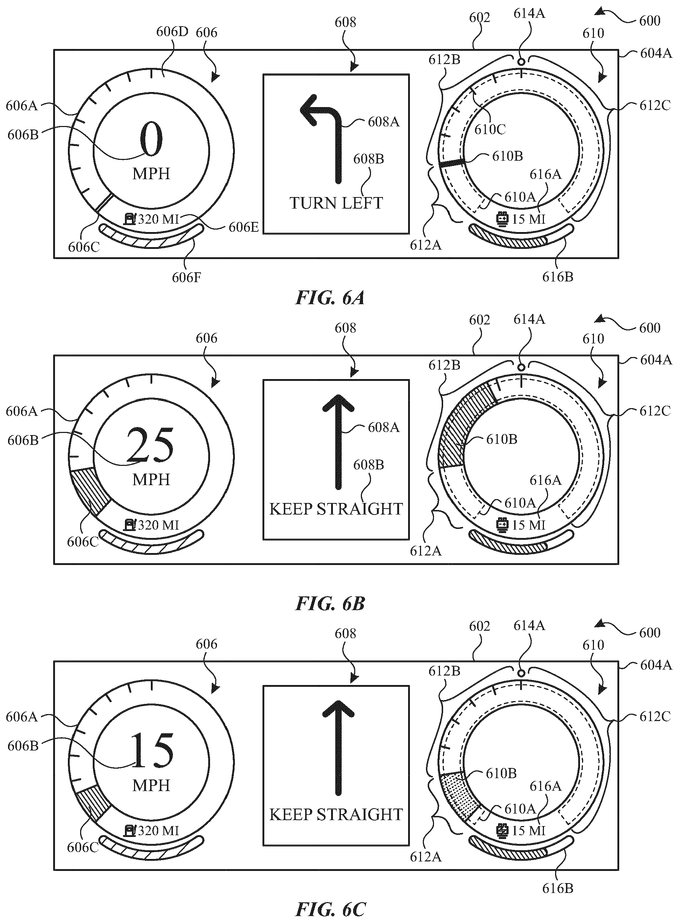

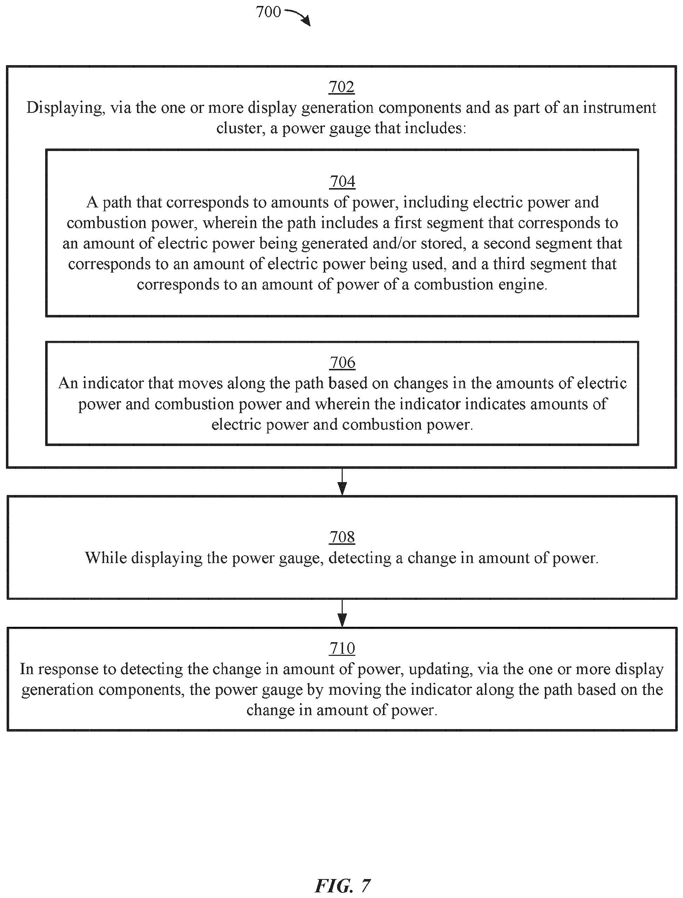

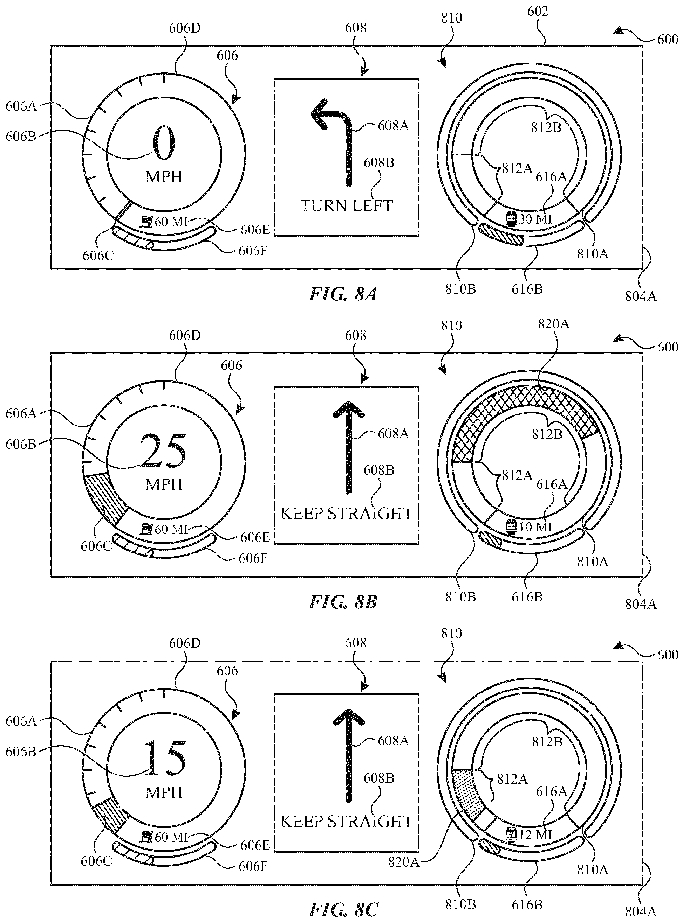

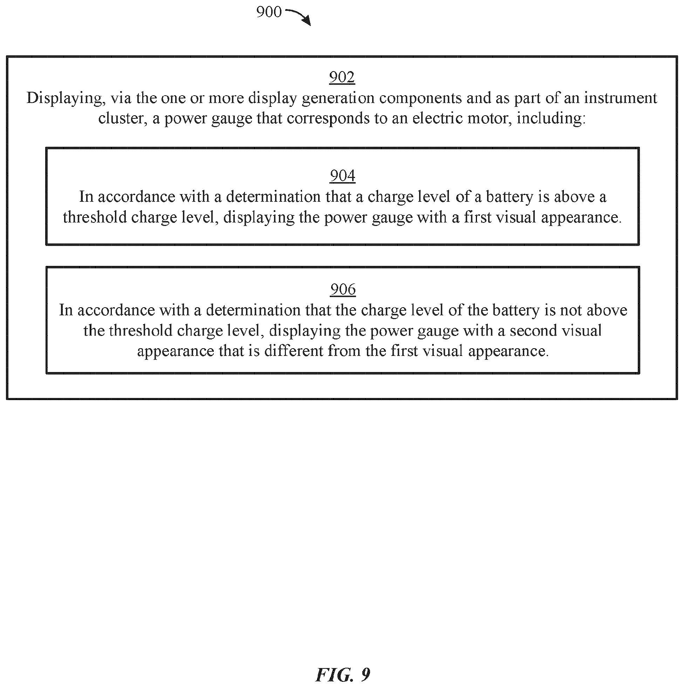

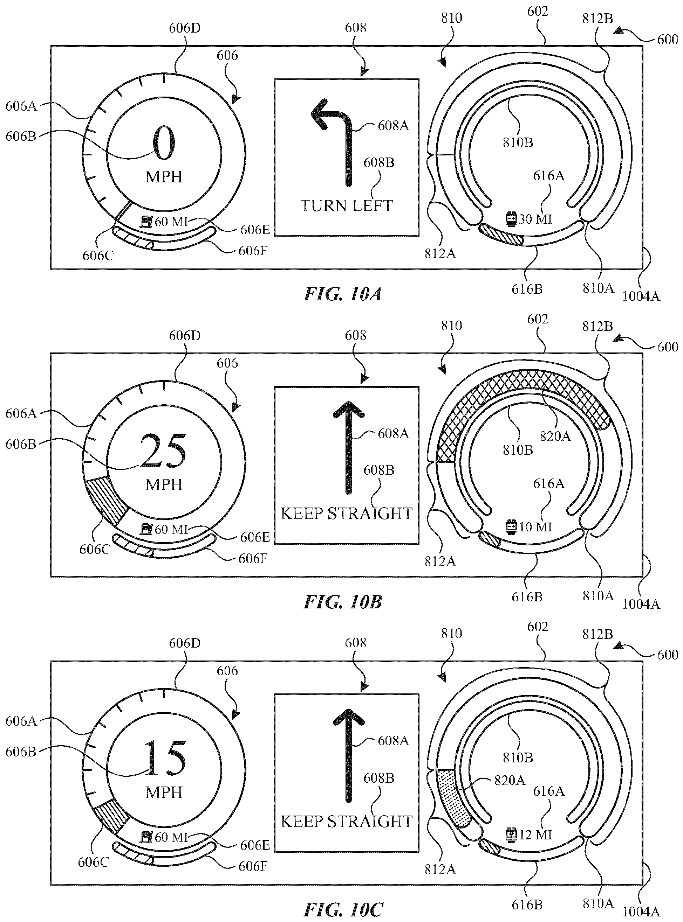

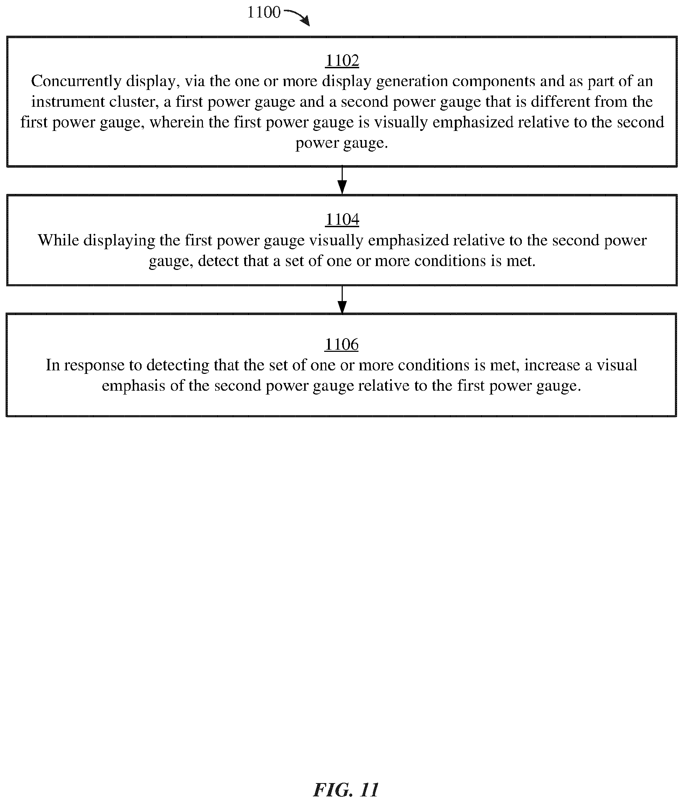

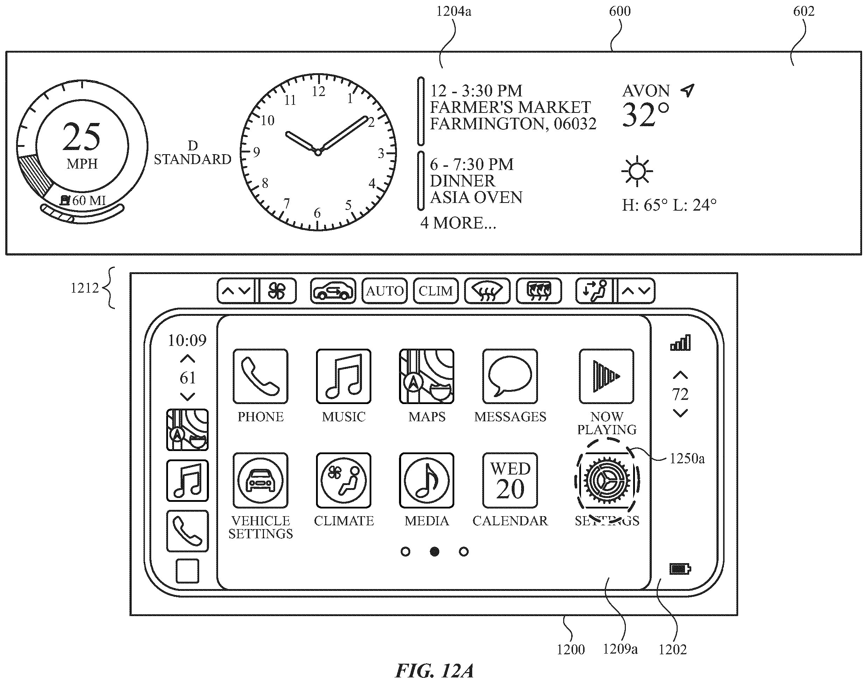

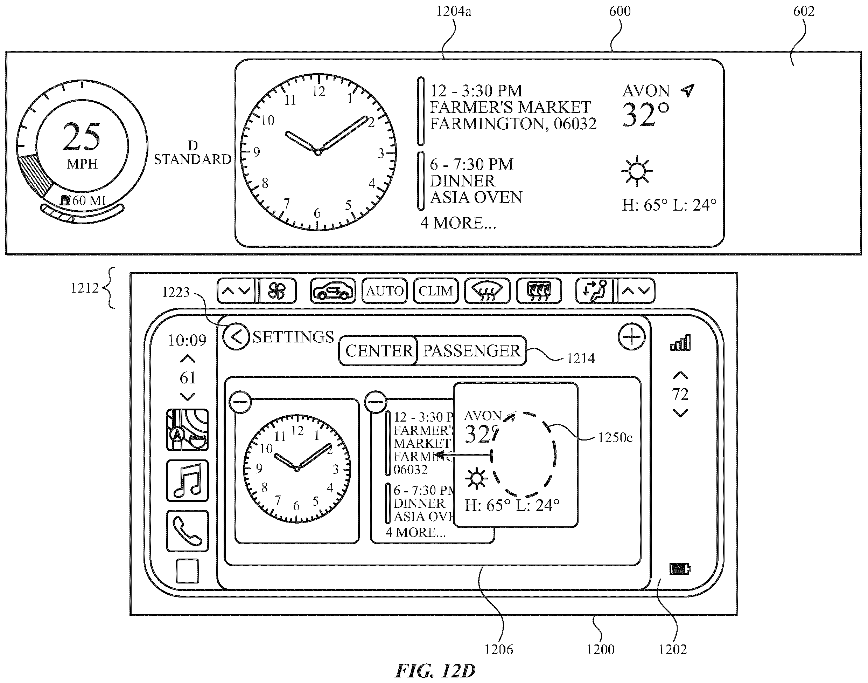

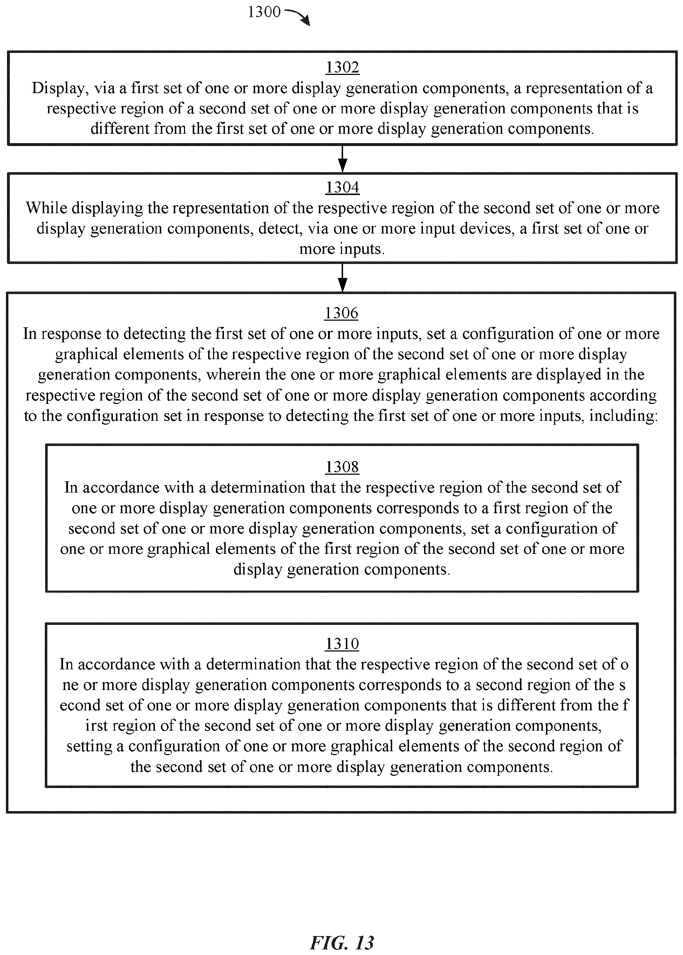

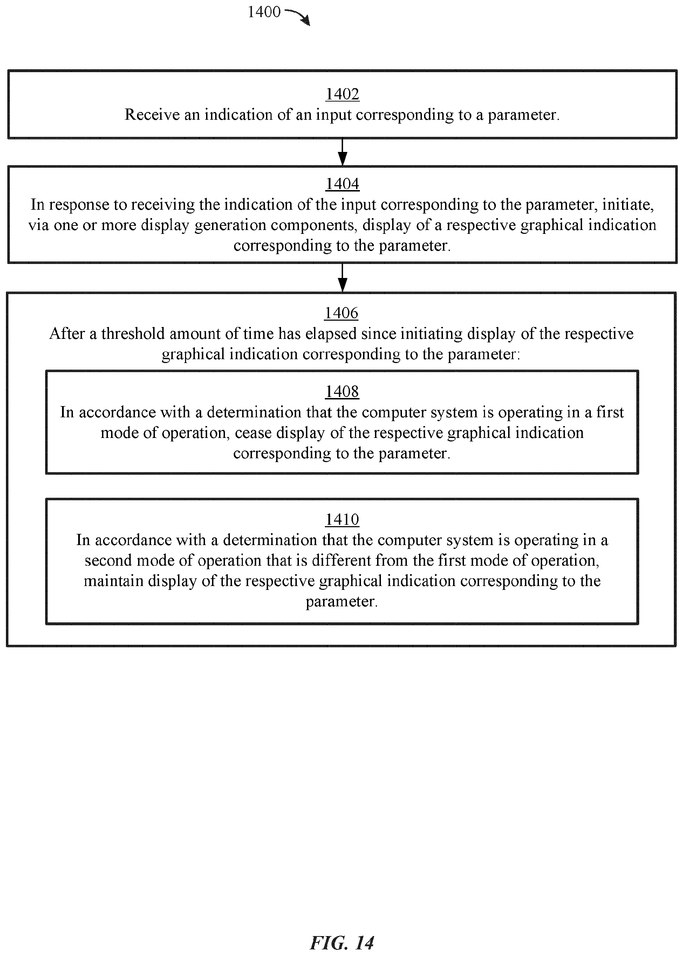

Below, FIGS. 1A-1B, 2, 3A, 4A-4B, and 5A-5B provide a description of exemplary devices for performing the techniques for managing user interfaces for hybrid gauges. FIGS. 6A-6O illustrate exemplary user interfaces for managing user interfaces for hybrid gauges, in accordance with some embodiments. FIG. 7 is a flow diagram illustrating methods of managing user interfaces for hybrid gauges, in accordance with some embodiments. The user interfaces in FIGS. 6A-6O are used to illustrate the processes described below, including the processes in FIG. 7. FIGS. 8A-8J illustrate example user interfaces for managing user interfaces for hybrid gauges, in accordance with some embodiments. FIG. 9 is a flow diagram illustrating methods of managing user interfaces for hybrid gauges, in accordance with some embodiments. The user interfaces in FIGS. 8A-8J are used to illustrate the processes described below, including the processes in FIG. 9. FIGS. 10A-10P illustrate example user interfaces for managing the visual emphasis of gauges, in accordance with some embodiments. FIG. 11 is a flow diagram illustrating methods of managing the visual emphasis of gauges, in accordance with some embodiments. The user interfaces in FIGS. 10A-10P are used to illustrate the processes described below, including the processes in FIG. 11. FIGS. 12A-12AD illustrate exemplary user interfaces, in accordance with some embodiments. FIG. 13 and FIG. 14 are flow diagrams illustrating methods of managing user interfaces, in accordance with some embodiments. The user interfaces in FIGS. 12A-12AD are used to illustrate the processes described below, including the processes in FIG. 13 and FIG. 14.

The processes described below enhance the operability of the devices and make the user-device interfaces more efficient (e.g., by helping the user to provide proper inputs and reducing user mistakes when operating/interacting with the device) through various techniques, including by providing improved visual feedback to the user, reducing the number of inputs needed to perform an operation, providing additional control options without cluttering the user interface with additional displayed controls, performing an operation when a set of conditions has been met without requiring further user input, and/or additional techniques. These techniques also reduce power usage and improve battery life of the device by enabling the user to use the device more quickly and efficiently.

In addition, in methods described herein where one or more steps are contingent upon one or more conditions having been met, it should be understood that the described method can be repeated in multiple repetitions so that over the course of the repetitions all of the conditions upon which steps in the method are contingent have been met in different repetitions of the method. For example, if a method requires performing a first step if a condition is satisfied, and a second step if the condition is not satisfied, then a person of ordinary skill would appreciate that the claimed steps are repeated until the condition has been both satisfied and not satisfied, in no particular order. Thus, a method described with one or more steps that are contingent upon one or more conditions having been met could be rewritten as a method that is repeated until each of the conditions described in the method has been met. This, however, is not required of system or computer readable medium claims where the system or computer readable medium contains instructions for performing the contingent operations based on the satisfaction of the corresponding one or more conditions and thus is capable of determining whether the contingency has or has not been satisfied without explicitly repeating steps of a method until all of the conditions upon which steps in the method are contingent have been met. A person having ordinary skill in the art would also understand that, similar to a method with contingent steps, a system or computer readable storage medium can repeat the steps of a method as many times as are needed to ensure that all of the contingent steps have been performed.

Although the following description uses terms "first," "second," etc. to describe various elements, these elements should not be limited by the terms. In some embodiments, these terms are used to distinguish one element from another. For example, a first touch could be termed a second touch, and, similarly, a second touch could be termed a first touch, without departing from the scope of the various described embodiments. In some embodiments, the first touch and the second touch are two separate references to the same touch. In some embodiments, the first touch and the second touch are both touches, but they are not the same touch.

The terminology used in the description of the various described embodiments herein is for the purpose of describing particular embodiments only and is not intended to be limiting. As used in the description of the various described embodiments and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

The term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

Embodiments of electronic devices, user interfaces for such devices, and associated processes for using such devices are described. In some embodiments, the device is a portable communications device, such as a mobile telephone, that also contains other functions, such as PDA and/or music player functions. Exemplary embodiments of portable multifunction devices include, without limitation, the iPhone^{®}, iPod Touch^{®}, and iPad^{®} devices from Apple Inc. of Cupertino, California. Other portable electronic devices, such as laptops or tablet computers with touch-sensitive surfaces (e.g., touch screen displays and/or touchpads), are, optionally, used. It should also be understood that, in some embodiments, the device is not a portable communications device, but is a desktop computer with a touch-sensitive surface (e.g., a touch screen display and/or a touchpad). In some embodiments, the electronic device is a computer system that is in communication (e.g., via wireless communication, via wired communication) with a display generation component. The display generation component is configured to provide visual output, such as display via a CRT display, display via an LED display, or display via image projection. In some embodiments, the display generation component is integrated with the computer system. In some embodiments, the display generation component is separate from the computer system. As used herein, "displaying" content includes causing to display the content (e.g., video data rendered or decoded by display controller 156) by transmitting, via a wired or wireless connection, data (e.g., image data or video data) to an integrated or external display generation component to visually produce the content.

In the discussion that follows, an electronic device that includes a display and a touch-sensitive surface is described. It should be understood, however, that the electronic device optionally includes one or more other physical user-interface devices, such as a physical keyboard, a mouse, and/or a joystick.

The device typically supports a variety of applications, such as one or more of the following: a drawing application, a presentation application, a word processing application, a website creation application, a disk authoring application, a spreadsheet application, a gaming application, a telephone application, a video conferencing application, an e-mail application, an instant messaging application, a workout support application, a photo management application, a digital camera application, a digital video camera application, a web browsing application, a digital music player application, and/or a digital video player application.

The various applications that are executed on the device optionally use at least one common physical user-interface device, such as the touch-sensitive surface. One or more functions of the touch-sensitive surface as well as corresponding information displayed on the device are, optionally, adjusted and/or varied from one application to the next and/or within a respective application. In this way, a common physical architecture (such as the touch-sensitive surface) of the device optionally supports the variety of applications with user interfaces that are intuitive and transparent to the user.

Attention is now directed toward embodiments of portable devices with touch-sensitive displays. FIG. 1A is a block diagram illustrating portable multifunction device 100 with touch-sensitive display system 112 in accordance with some embodiments. Touch-sensitive display 112 is sometimes called a "touch screen" for convenience and is sometimes known as or called a "touch-sensitive display system." Device 100 includes memory 102 (which optionally includes one or more computer-readable storage mediums), memory controller 122, one or more processing units (CPUs) 120, peripherals interface 118, RF circuitry 108, audio circuitry 110, speaker 111, microphone 113, input/output (I/O) subsystem 106, other input control devices 116, and external port 124. Device 100 optionally includes one or more optical sensors 164. Device 100 optionally includes one or more contact intensity sensors 165 for detecting intensity of contacts on device 100 (e.g., a touch-sensitive surface such as touch-sensitive display system 112 of device 100). Device 100 optionally includes one or more tactile output generators 167 for generating tactile outputs on device 100 (e.g., generating tactile outputs on a touch-sensitive surface such as touch-sensitive display system 112 of device 100 or touchpad 355 of device 300). These components optionally communicate over one or more communication buses or signal lines 103.

As used in the specification and claims, the term "intensity" of a contact on a touch-sensitive surface refers to the force or pressure (force per unit area) of a contact (e.g., a finger contact) on the touch-sensitive surface, or to a substitute (proxy) for the force or pressure of a contact on the touch-sensitive surface. The intensity of a contact has a range of values that includes at least four distinct values and more typically includes hundreds of distinct values (e.g., at least 256). Intensity of a contact is, optionally, determined (or measured) using various approaches and various sensors or combinations of sensors. For example, one or more force sensors underneath or adjacent to the touch-sensitive surface are, optionally, used to measure force at various points on the touch-sensitive surface. In some implementations, force measurements from multiple force sensors are combined (e.g., a weighted average) to determine an estimated force of a contact. Similarly, a pressure-sensitive tip of a stylus is, optionally, used to determine a pressure of the stylus on the touch-sensitive surface. Alternatively, the size of the contact area detected on the touch-sensitive surface and/or changes thereto, the capacitance of the touch-sensitive surface proximate to the contact and/or changes thereto, and/or the resistance of the touch-sensitive surface proximate to the contact and/or changes thereto are, optionally, used as a substitute for the force or pressure of the contact on the touch-sensitive surface. In some implementations, the substitute measurements for contact force or pressure are used directly to determine whether an intensity threshold has been exceeded (e.g., the intensity threshold is described in units corresponding to the substitute measurements). In some implementations, the substitute measurements for contact force or pressure are converted to an estimated force or pressure, and the estimated force or pressure is used to determine whether an intensity threshold has been exceeded (e.g., the intensity threshold is a pressure threshold measured in units of pressure). Using the intensity of a contact as an attribute of a user input allows for user access to additional device functionality that may otherwise not be accessible by the user on a reduced-size device with limited real estate for displaying affordances (e.g., on a touch-sensitive display) and/or receiving user input (e.g., via a touch-sensitive display, a touch-sensitive surface, or a physical/mechanical control such as a knob or a button).

As used in the specification and claims, the term "tactile output" refers to physical displacement of a device relative to a previous position of the device, physical displacement of a component (e.g., a touch-sensitive surface) of a device relative to another component (e.g., housing) of the device, or displacement of the component relative to a center of mass of the device that will be detected by a user with the user's sense of touch. For example, in situations where the device or the component of the device is in contact with a surface of a user that is sensitive to touch (e.g., a finger, palm, or other part of a user's hand), the tactile output generated by the physical displacement will be interpreted by the user as a tactile sensation corresponding to a perceived change in physical characteristics of the device or the component of the device. For example, movement of a touch-sensitive surface (e.g., a touch-sensitive display or trackpad) is, optionally, interpreted by the user as a "down click" or "up click" of a physical actuator button. In some cases, a user will feel a tactile sensation such as an "down click" or "up click" even when there is no movement of a physical actuator button associated with the touch-sensitive surface that is physically pressed (e.g., displaced) by the user's movements. As another example, movement of the touch-sensitive surface is, optionally, interpreted or sensed by the user as "roughness" of the touch-sensitive surface, even when there is no change in smoothness of the touch-sensitive surface. While such interpretations of touch by a user will be subject to the individualized sensory perceptions of the user, there are many sensory perceptions of touch that are common to a large majority of users. Thus, when a tactile output is described as corresponding to a particular sensory perception of a user (e.g., an "up click," a "down click," "roughness"), unless otherwise stated, the generated tactile output corresponds to physical displacement of the device or a component thereof that will generate the described sensory perception for a typical (or average) user.

It should be appreciated that device 100 is only one example of a portable multifunction device, and that device 100 optionally has more or fewer components than shown, optionally combines two or more components, or optionally has a different configuration or arrangement of the components. The various components shown in FIG. 1A are implemented in hardware, software, or a combination of both hardware and software, including one or more signal processing and/or application-specific integrated circuits.

Memory 102 optionally includes high-speed random access memory and optionally also includes non-volatile memory, such as one or more magnetic disk storage devices, flash memory devices, or other non-volatile solid-state memory devices. Memory controller 122 optionally controls access to memory 102 by other components of device 100.

Peripherals interface 118 can be used to couple input and output peripherals of the device to CPU 120 and memory 102. The one or more processors 120 run or execute various software programs (such as computer programs (e.g., including instructions)) and/or sets of instructions stored in memory 102 to perform various functions for device 100 and to process data. In some embodiments, peripherals interface 118, CPU 120, and memory controller 122 are, optionally, implemented on a single chip, such as chip 104. In some other embodiments, they are, optionally, implemented on separate chips.

RF (radio frequency) circuitry 108 receives and sends RF signals, also called electromagnetic signals. RF circuitry 108 converts electrical signals to/from electromagnetic signals and communicates with communications networks and other communications devices via the electromagnetic signals. RF circuitry 108 optionally includes well-known circuitry for performing these functions, including but not limited to an antenna system, an RF transceiver, one or more amplifiers, a tuner, one or more oscillators, a digital signal processor, a CODEC chipset, a subscriber identity module (SIM) card, memory, and so forth. RF circuitry 108 optionally communicates with networks, such as the Internet, also referred to as the World Wide Web (WWW), an intranet and/or a wireless network, such as a cellular telephone network, a wireless local area network (LAN) and/or a metropolitan area network (MAN), and other devices by wireless communication. The RF circuitry 108 optionally includes well-known circuitry for detecting near field communication (NFC) fields, such as by a short-range communication radio. The wireless communication optionally uses any of a plurality of communications standards, protocols, and technologies, including but not limited to Global System for Mobile Communications (GSM), Enhanced Data GSM Environment (EDGE), high-speed downlink packet access (HSDPA), high-speed uplink packet access (HSUPA), Evolution, Data-Only (EV-DO), HSPA, HSPA+, Dual-Cell HSPA (DC-HSPDA), long term evolution (LTE), near field communication (NFC), wideband code division multiple access (W-CDMA), code division multiple access (CDMA), time division multiple access (TDMA), Bluetooth, Bluetooth Low Energy (BTLE), Wireless Fidelity (Wi-Fi) (e.g., IEEE 802.11a, IEEE 802.11b, IEEE 802.11g, IEEE 802.11n, and/or IEEE 802.11ac), voice over Internet Protocol (VoIP), Wi-MAX, a protocol for e-mail (e.g., Internet message access protocol (IMAP) and/or post office protocol (POP)), instant messaging (e.g., extensible messaging and presence protocol (XMPP), Session Initiation Protocol for Instant Messaging and Presence Leveraging Extensions (SIMPLE), Instant Messaging and Presence Service (IMPS)), and/or Short Message Service (SMS), or any other suitable communication protocol, including communication protocols not yet developed as of the filing date of this document.

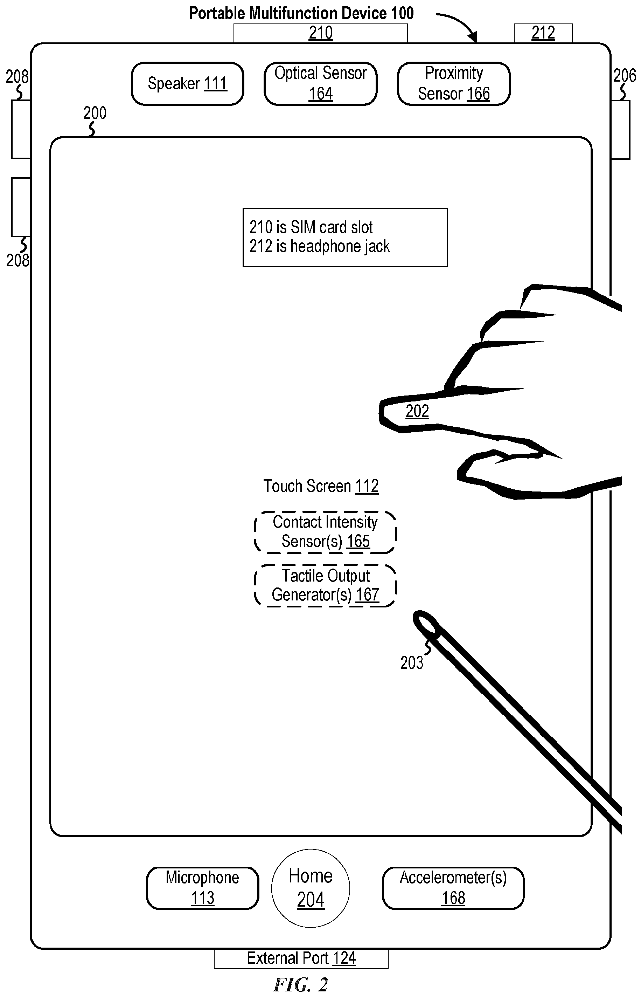

Audio circuitry 110, speaker 111, and microphone 113 provide an audio interface between a user and device 100. Audio circuitry 110 receives audio data from peripherals interface 118, converts the audio data to an electrical signal, and transmits the electrical signal to speaker 111. Speaker 111 converts the electrical signal to human-audible sound waves. Audio circuitry 110 also receives electrical signals converted by microphone 113 from sound waves. Audio circuitry 110 converts the electrical signal to audio data and transmits the audio data to peripherals interface 118 for processing. Audio data is, optionally, retrieved from and/or transmitted to memory 102 and/or RF circuitry 108 by peripherals interface 118. In some embodiments, audio circuitry 110 also includes a headset jack (e.g., 212, FIG. 2). The headset jack provides an interface between audio circuitry 110 and removable audio input/output peripherals, such as output-only headphones or a headset with both output (e.g., a headphone for one or both ears) and input (e.g., a microphone).

I/O subsystem 106 couples input/output peripherals on device 100, such as touch screen 112 and other input control devices 116, to peripherals interface 118. I/O subsystem 106 optionally includes display controller 156, optical sensor controller 158, depth camera controller 169, intensity sensor controller 159, haptic feedback controller 161, and one or more input controllers 160 for other input or control devices. The one or more input controllers 160 receive/send electrical signals from/to other input control devices 116. The other input control devices 116 optionally include physical buttons (e.g., push buttons, rocker buttons, etc.), dials, slider switches, joysticks, click wheels, and so forth. In some embodiments, input controller(s) 160 are, optionally, coupled to any (or none) of the following: a keyboard, an infrared port, a USB port, and a pointer device such as a mouse. The one or more buttons (e.g., 208, FIG. 2) optionally include an up/down button for volume control of speaker 111 and/or microphone 113. The one or more buttons optionally include a push button (e.g., 206, FIG. 2). In some embodiments, the electronic device is a computer system that is in communication (e.g., via wireless communication, via wired communication) with one or more input devices. In some embodiments, the one or more input devices include a touch-sensitive surface (e.g., a trackpad, as part of a touch-sensitive display). In some embodiments, the one or more input devices include one or more camera sensors (e.g., one or more optical sensors 164 and/or one or more depth camera sensors 175), such as for tracking a user's gestures (e.g., hand gestures and/or air gestures) as input. In some embodiments, the one or more input devices are integrated with the computer system. In some embodiments, the one or more input devices are separate from the computer system. In some embodiments, an air gesture is a gesture that is detected without the user touching an input element that is part of the device (or independently of an input element that is a part of the device) and is based on detected motion of a portion of the user's body through the air including motion of the user's body relative to an absolute reference (e.g., an angle of the user's arm relative to the ground or a distance of the user's hand relative to the ground), relative to another portion of the user's body (e.g., movement of a hand of the user relative to a shoulder of the user, movement of one hand of the user relative to another hand of the user, and/or movement of a finger of the user relative to another finger or portion of a hand of the user), and/or absolute motion of a portion of the user's body (e.g., a tap gesture that includes movement of a hand in a predetermined pose by a predetermined amount and/or speed, or a shake gesture that includes a predetermined speed or amount of rotation of a portion of the user's body).

A quick press of the push button optionally disengages a lock of touch screen 112 or optionally begins a process that uses gestures on the touch screen to unlock the device, as described in U.S. Patent Application 11/322,549, "Unlocking a Device by Performing Gestures on an Unlock Image," filed December 23, 2005, U.S. Pat. No. 7,657 849. A longer press of the push button (e.g., 206) optionally turns power to device 100 on or off. The functionality of one or more of the buttons are, optionally, user-customizable. Touch screen 112 is used to implement virtual or soft buttons and one or more soft keyboards.

Touch-sensitive display 112 provides an input interface and an output interface between the device and a user. Display controller 156 receives and/or sends electrical signals from/to touch screen 112. Touch screen 112 displays visual output to the user. The visual output optionally includes graphics, text, icons, video, and any combination thereof (collectively termed "graphics"). In some embodiments, some or all of the visual output optionally corresponds to user-interface objects.

Touch screen 112 has a touch-sensitive surface, sensor, or set of sensors that accepts input from the user based on haptic and/or tactile contact. Touch screen 112 and display controller 156 (along with any associated modules and/or sets of instructions in memory 102) detect contact (and any movement or breaking of the contact) on touch screen 112 and convert the detected contact into interaction with user-interface objects (e.g., one or more soft keys, icons, web pages, or images) that are displayed on touch screen 112. In an exemplary embodiment, a point of contact between touch screen 112 and the user corresponds to a finger of the user.

Touch screen 112 optionally uses LCD (liquid crystal display) technology, LPD (light emitting polymer display) technology, or LED (light emitting diode) technology, although other display technologies are used in other embodiments. Touch screen 112 and display controller 156 optionally detect contact and any movement or breaking thereof using any of a plurality of touch sensing technologies now known or later developed, including but not limited to capacitive, resistive, infrared, and surface acoustic wave technologies, as well as other proximity sensor arrays or other elements for determining one or more points of contact with touch screen 112. In an exemplary embodiment, projected mutual capacitance sensing technology is used, such as that found in the iPhone^{®} and iPod Touch^{®} from Apple Inc. of Cupertino, California.

A touch-sensitive display in some embodiments of touch screen 112 is, optionally, analogous to the multi-touch sensitive touchpads described in the following U.S. Patents: 6,323,846 (Westerman et al.), 6,570,557 (Westerman et al.), and/or 6,677,932 (Westerman), and/or U.S. Patent Publication 2002/0015 024. However, touch screen 112 displays visual output from device 100, whereas touch-sensitive touchpads do not provide visual output.

A touch-sensitive display in some embodiments of touch screen 112 is described in the following applications: (1) U.S. Patent Application No. 11/381,313, "Multipoint Touch Surface Controller," filed May 2, 2006; (2) U.S. Patent Application No. 10/840,862, "Multipoint Touchscreen," filed May 6, 2004; (3) U.S. Patent Application No. 10/903,964, "Gestures For Touch Sensitive Input Devices," filed July 30, 2004; (4) U.S. Patent Application No. 11/048,264, "Gestures For Touch Sensitive Input Devices," filed January 31, 2005; (5) U.S. Patent Application No. 11/038,590, "Mode-Based Graphical User Interfaces For Touch Sensitive Input Devices," filed January 18, 2005; (6) U.S. Patent Application No. 11/228,758, "Virtual Input Device Placement On A Touch Screen User Interface," filed September 16, 2005; (7) U.S. Patent Application No. 11/228,700, "Operation Of A Computer With A Touch Screen Interface," filed September 16, 2005; (8) U.S. Patent Application No. 11/228,737, "Activating Virtual Keys Of A Touch-Screen Virtual Keyboard," filed September 16, 2005; and (9) U.S. Patent Application No. 11/367,749, "Multi-Functional Hand-Held Device," filed March 3, 2006.

Touch screen 112 optionally has a video resolution in excess of 100 dpi. In some embodiments, the touch screen has a video resolution of approximately 160 dpi. The user optionally makes contact with touch screen 112 using any suitable object or appendage, such as a stylus, a finger, and so forth. In some embodiments, the user interface is designed to work primarily with finger-based contacts and gestures, which can be less precise than stylus-based input due to the larger area of contact of a finger on the touch screen. In some embodiments, the device translates the rough finger-based input into a precise pointer/cursor position or command for performing the actions desired by the user.

In some embodiments, in addition to the touch screen, device 100 optionally includes a touchpad for activating or deactivating particular functions. In some embodiments, the touchpad is a touch-sensitive area of the device that, unlike the touch screen, does not display visual output. The touchpad is, optionally, a touch-sensitive surface that is separate from touch screen 112 or an extension of the touch-sensitive surface formed by the touch screen.

Device 100 also includes power system 162 for powering the various components. Power system 162 optionally includes a power management system, one or more power sources (e.g., battery, alternating current (AC)), a recharging system, a power failure detection circuit, a power converter or inverter, a power status indicator (e.g., a light-emitting diode (LED)) and any other components associated with the generation, management and distribution of power in portable devices.

Device 100 optionally also includes secure element 163 for securely storing information. In some embodiments, secure element 163 is a hardware component (e.g., a secure microcontroller chip) configured to securely store data or an algorithm. In some embodiments, secure element 163 provides (e.g., releases) secure information (e.g., payment information (e.g., an account number and/or a transaction-specific dynamic security code), identification information (e.g., credentials of a state-approved digital identification), and/or authentication information (e.g., data generated using a cryptography engine and/or by performing asymmetric cryptography operations)). In some embodiments, secure element 163 provides (or releases) the secure information in response to device 100 receiving authorization, such as a user authentication (e.g., fingerprint authentication; passcode authentication; detecting double-press of a hardware button when device 100 is in an unlocked state, and optionally, while device 100 has been continuously on a user's wrist since device 100 was unlocked by providing authentication credentials to device 100, where the continuous presence of device 100 on the user's wrist is determined by periodically checking that the device is in contact with the user's skin). For example, device 100 detects a fingerprint at a fingerprint sensor (e.g., a fingerprint sensor integrated into a button) of device 100. Device 100 determines whether the detected fingerprint is consistent with an enrolled fingerprint. In accordance with a determination that the fingerprint is consistent with the enrolled fingerprint, secure element 163 provides (e.g., releases) the secure information. In accordance with a determination that the fingerprint is not consistent with the enrolled fingerprint, secure element 163 forgoes providing (e.g., releasing) the secure information.

Device 100 optionally also includes one or more optical sensors 164. FIG. 1A shows an optical sensor coupled to optical sensor controller 158 in I/O subsystem 106. Optical sensor 164 optionally includes charge-coupled device (CCD) or complementary metal-oxide semiconductor (CMOS) phototransistors. Optical sensor 164 receives light from the environment, projected through one or more lenses, and converts the light to data representing an image. In conjunction with imaging module 143 (also called a camera module), optical sensor 164 optionally captures still images or video. In some embodiments, an optical sensor is located on the back of device 100, opposite touch screen display 112 on the front of the device so that the touch screen display is enabled for use as a viewfinder for still and/or video image acquisition. In some embodiments, an optical sensor is located on the front of the device so that the user's image is, optionally, obtained for video conferencing while the user views the other video conference participants on the touch screen display. In some embodiments, the position of optical sensor 164 can be changed by the user (e.g., by rotating the lens and the sensor in the device housing) so that a single optical sensor 164 is used along with the touch screen display for both video conferencing and still and/or video image acquisition.

Device 100 optionally also includes one or more depth camera sensors 175. FIG. 1A shows a depth camera sensor coupled to depth camera controller 169 in I/O subsystem 106. Depth camera sensor 175 receives data from the environment to create a three-dimensional model of an object (e.g., a face) within a scene from a viewpoint (e.g., a depth camera sensor). In some embodiments, in conjunction with imaging module 143 (also called a camera module), depth camera sensor 175 is optionally used to determine a depth map of different portions of an image captured by the imaging module 143. In some embodiments, a depth camera sensor is located on the front of device 100 so that the user's image with depth information is, optionally, obtained for video conferencing while the user views the other video conference participants on the touch screen display and to capture selfies with depth map data. In some embodiments, the depth camera sensor 175 is located on the back of device, or on the back and the front of the device 100. In some embodiments, the position of depth camera sensor 175 can be changed by the user (e.g., by rotating the lens and the sensor in the device housing) so that a depth camera sensor 175 is used along with the touch screen display for both video conferencing and still and/or video image acquisition.

Device 100 optionally also includes one or more contact intensity sensors 165. FIG. 1A shows a contact intensity sensor coupled to intensity sensor controller 159 in I/O subsystem 106. Contact intensity sensor 165 optionally includes one or more piezoresistive strain gauges, capacitive force sensors, electric force sensors, piezoelectric force sensors, optical force sensors, capacitive touch-sensitive surfaces, or other intensity sensors (e.g., sensors used to measure the force (or pressure) of a contact on a touch-sensitive surface). Contact intensity sensor 165 receives contact intensity information (e.g., pressure information or a proxy for pressure information) from the environment. In some embodiments, at least one contact intensity sensor is collocated with, or proximate to, a touch-sensitive surface (e.g., touch-sensitive display system 112). In some embodiments, at least one contact intensity sensor is located on the back of device 100, opposite touch screen display 112, which is located on the front of device 100.

Device 100 optionally also includes one or more proximity sensors 166. FIG. 1A shows proximity sensor 166 coupled to peripherals interface 118. Alternately, proximity sensor 166 is, optionally, coupled to input controller 160 in I/O subsystem 106. Proximity sensor 166 optionally performs as described in U.S. Patent Application Nos. 11/241,839, "Proximity Detector In Handheld Device"; 11/240,788, "Proximity Detector In Handheld Device"; 11/620,702, "Using Ambient Light Sensor To Augment Proximity Sensor Output"; 11/586,862, "Automated Response To And Sensing Of User Activity In Portable Devices"; and 11/638,251, "Methods And Systems For Automatic Configuration Of Peripheras". In some embodiments, the proximity sensor turns off and disables touch screen 112 when the multifunction device is placed near the user's ear (e.g., when the user is making a phone call).

Device 100 optionally also includes one or more tactile output generators 167. FIG. 1A shows a tactile output generator coupled to haptic feedback controller 161 in I/O subsystem 106. Tactile output generator 167 optionally includes one or more electroacoustic devices such as speakers or other audio components and/or electromechanical devices that convert energy into linear motion such as a motor, solenoid, electroactive polymer, piezoelectric actuator, electrostatic actuator, or other tactile output generating component (e.g., a component that converts electrical signals into tactile outputs on the device). Contact intensity sensor 165 receives tactile feedback generation instructions from haptic feedback module 133 and generates tactile outputs on device 100 that are capable of being sensed by a user of device 100. In some embodiments, at least one tactile output generator is collocated with, or proximate to, a touch-sensitive surface (e.g., touch-sensitive display system 112) and, optionally, generates a tactile output by moving the touch-sensitive surface vertically (e.g., in/out of a surface of device 100) or laterally (e.g., back and forth in the same plane as a surface of device 100). In some embodiments, at least one tactile output generator sensor is located on the back of device 100, opposite touch screen display 112, which is located on the front of device 100.

Device 100 optionally also includes one or more accelerometers 168. FIG. 1A shows accelerometer 168 coupled to peripherals interface 118. Alternately, accelerometer 168 is, optionally, coupled to an input controller 160 in I/O subsystem 106. Accelerometer 168 optionally performs as described in U.S. Patent Publication No. 20050190059, "Acceleration-based Theft Detection System for Portable Electronic Devices," and U.S. Patent Publication No. 20060017692, "Methods And Apparatuses For Operating A Portable Device Based On An Accelerometer," both of which are incorporated by reference herein in their entirety. In some embodiments, information is displayed on the touch screen display in a portrait view or a landscape view based on an analysis of data received from the one or more accelerometers. Device 100 optionally includes, in addition to accelerometer(s) 168, a magnetometer and a GPS (or GLONASS or other global navigation system) receiver for obtaining information concerning the location and orientation (e.g., portrait or landscape) of device 100.

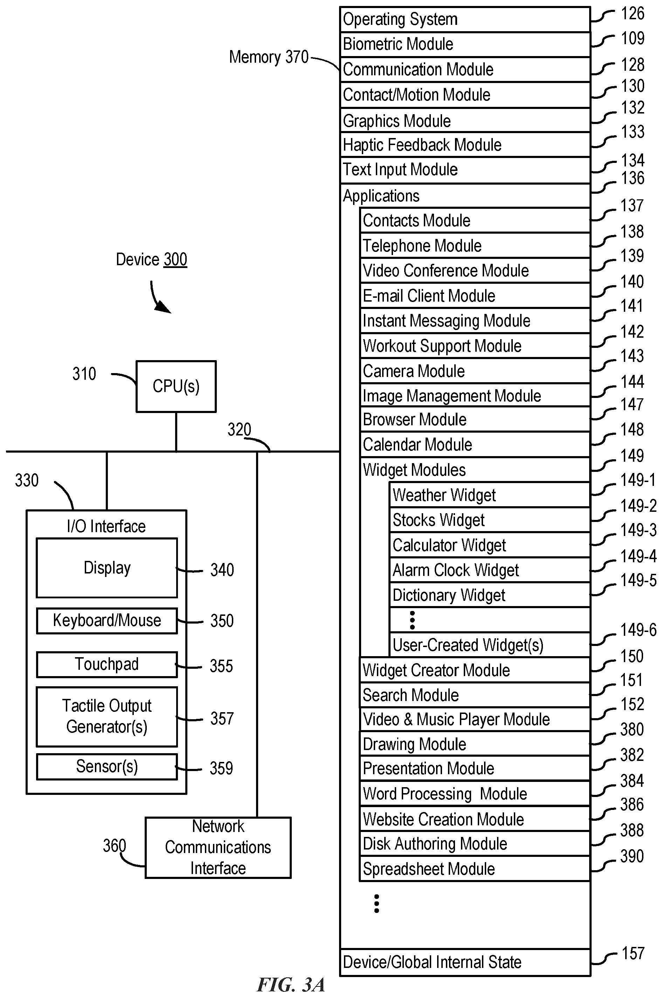

In some embodiments, the software components stored in memory 102 include operating system 126, biometric module 109, communication module (or set of instructions) 128, contact/motion module (or set of instructions) 130, graphics module (or set of instructions) 132, text input module (or set of instructions) 134, Global Positioning System (GPS) module (or set of instructions) 135, authentication module 105, and applications (or sets of instructions) 136. Furthermore, in some embodiments, memory 102 (FIG. 1A) or 370 (FIG. 3A) stores device/global internal state 157, as shown in FIGS. 1A and 3A. Device/global internal state 157 includes one or more of: active application state, indicating which applications, if any, are currently active; display state, indicating what applications, views or other information occupy various regions of touch screen display 112; sensor state, including information obtained from the device's various sensors and input control devices 116; and location information concerning the device's location and/or attitude.

Operating system 126 (e.g., Darwin, RTXC, LINUX, UNIX, OS X, iOS, WINDOWS, or an embedded operating system such as VxWorks) includes various software components and/or drivers for controlling and managing general system tasks (e.g., memory management, storage device control, power management, etc.) and facilitates communication between various hardware and software components.

Communication module 128 facilitates communication with other devices over one or more external ports 124 and also includes various software components for handling data received by RF circuitry 108 and/or external port 124. External port 124 (e.g., Universal Serial Bus (USB), FIREWIRE, etc.) is adapted for coupling directly to other devices or indirectly over a network (e.g., the Internet, wireless LAN, etc.). In some embodiments, the external port is a multi-pin (e.g., 30-pin) connector that is the same as, or similar to and/or compatible with, the 30-pin connector used on iPod^{®} (trademark of Apple Inc.) devices.

Biometric module 109 optionally stores information about one or more enrolled biometric features (e.g., fingerprint feature information, facial recognition feature information, eye and/or iris feature information) for use to verify whether received biometric information matches the enrolled biometric features. In some embodiments, the information stored about the one or more enrolled biometric features includes data that enables the comparison between the stored information and received biometric information without including enough information to reproduce the enrolled biometric features. In some embodiments, biometric module 109 stores the information about the enrolled biometric features in association with a user account of device 100. In some embodiments, biometric module 109 compares the received biometric information to an enrolled biometric feature to determine whether the received biometric information matches the enrolled biometric feature.

Contact/motion module 130 optionally detects contact with touch screen 112 (in conjunction with display controller 156) and other touch-sensitive devices (e.g., a touchpad or physical click wheel). Contact/motion module 130 includes various software components for performing various operations related to detection of contact, such as determining if contact has occurred (e.g., detecting a finger-down event), determining an intensity of the contact (e.g., the force or pressure of the contact or a substitute for the force or pressure of the contact), determining if there is movement of the contact and tracking the movement across the touch-sensitive surface (e.g., detecting one or more finger-dragging events), and determining if the contact has ceased (e.g., detecting a finger-up event or a break in contact). Contact/motion module 130 receives contact data from the touch-sensitive surface. Determining movement of the point of contact, which is represented by a series of contact data, optionally includes determining speed (magnitude), velocity (magnitude and direction), and/or an acceleration (a change in magnitude and/or direction) of the point of contact. These operations are, optionally, applied to single contacts (e.g., one finger contacts) or to multiple simultaneous contacts (e.g., "multitouch"/multiple finger contacts). In some embodiments, contact/motion module 130 and display controller 156 detect contact on a touchpad.

In some embodiments, contact/motion module 130 uses a set of one or more intensity thresholds to determine whether an operation has been performed by a user (e.g., to determine whether a user has "clicked" on an icon). In some embodiments, at least a subset of the intensity thresholds are determined in accordance with software parameters (e.g., the intensity thresholds are not determined by the activation thresholds of particular physical actuators and can be adjusted without changing the physical hardware of device 100). For example, a mouse "click" threshold of a trackpad or touch screen display can be set to any of a large range of predefined threshold values without changing the trackpad or touch screen display hardware. Additionally, in some implementations, a user of the device is provided with software settings for adjusting one or more of the set of intensity thresholds (e.g., by adjusting individual intensity thresholds and/or by adjusting a plurality of intensity thresholds at once with a system-level click "intensity" parameter).

Contact/motion module 130 optionally detects a gesture input by a user. Different gestures on the touch-sensitive surface have different contact patterns (e.g., different motions, timings, and/or intensities of detected contacts). Thus, a gesture is, optionally, detected by detecting a particular contact pattern. For example, detecting a finger tap gesture includes detecting a finger-down event followed by detecting a finger-up (liftoff) event at the same position (or substantially the same position) as the finger-down event (e.g., at the position of an icon). As another example, detecting a finger swipe gesture on the touch-sensitive surface includes detecting a finger-down event followed by detecting one or more finger-dragging events, and subsequently followed by detecting a finger-up (liftoff) event.

Graphics module 132 includes various known software components for rendering and displaying graphics on touch screen 112 or other display, including components for changing the visual impact (e.g., brightness, transparency, saturation, contrast, or other visual property) of graphics that are displayed. As used herein, the term "graphics" includes any object that can be displayed to a user, including, without limitation, text, web pages, icons (such as user-interface objects including soft keys), digital images, videos, animations, and the like.

In some embodiments, graphics module 132 stores data representing graphics to be used. Each graphic is, optionally, assigned a corresponding code. Graphics module 132 receives, from applications etc., one or more codes specifying graphics to be displayed along with, if necessary, coordinate data and other graphic property data, and then generates screen image data to output to display controller 156.

Haptic feedback module 133 includes various software components for generating instructions used by tactile output generator(s) 167 to produce tactile outputs at one or more locations on device 100 in response to user interactions with device 100.

Text input module 134, which is, optionally, a component of graphics module 132, provides soft keyboards for entering text in various applications (e.g., contacts module 137, e-mail client module 140, IM module 141, browser module 147, and any other application that needs text input).

GPS module 135 determines the location of the device and provides this information for use in various applications (e.g., to telephone module 138 for use in location-based dialing; to camera module 143 as picture/video metadata; and to applications that provide location-based services such as weather widgets, local yellow page widgets, and map/navigation widgets).

Authentication module 105 determines whether a requested operation (e.g., requested by an application of applications 136) is authorized to be performed. In some embodiments, authentication module 105 receives for an operation to be perform that optionally requires authentication. Authentication module 105 determines whether the operation is authorized to be performed, such as based on a series of factors, including the lock status of device 100, the location of device 100, whether a security delay has elapsed, whether received biometric information matches enrolled biometric features, and/or other factors. Once authentication module 105 determines that the operation is authorized to be performed, authentication module 105 triggers performance of the operation.

Applications 136 optionally include the following modules (or sets of instructions), or a subset or superset thereof:
- Contacts module 137 (sometimes called an address book or contact list);
- Telephone module 138;
- Video conference module 139;
- E-mail client module 140;
- Instant messaging (IM) module 141;
- Workout support module 142;
- Camera module 143 for still and/or video images;
- Image management module 144;
- Video player module;
- Music player module;
- Browser module 147;
- Calendar module 148;
- Widget modules 149, which optionally include one or more of: weather widget 149-1, stocks widget 149-2, calculator widget 149-3, alarm clock widget 149-4, dictionary widget 149-5, and other widgets obtained by the user, as well as user-created widgets 149-6;
- Widget creator module 150 for making user-created widgets 149-6;
- Search module 151;
- Video and music player module 152, which merges video player module and music player module;
- Notes module 153;
- Map module 154; and/or
- Online video module 155.

Examples of other applications 136 that are, optionally, stored in memory 102 include other word processing applications, other image editing applications, drawing applications, presentation applications, JAVA-enabled applications, encryption, digital rights management, voice recognition, and voice replication.

In conjunction with touch screen 112, display controller 156, contact/motion module 130, graphics module 132, and text input module 134, contacts module 137 are, optionally, used to manage an address book or contact list (e.g., stored in application internal state 192 of contacts module 137 in memory 102 or memory 370), including: adding name(s) to the address book; deleting name(s) from the address book; associating telephone number(s), e-mail address(es), physical address(es) or other information with a name; associating an image with a name; categorizing and sorting names; providing telephone numbers or e-mail addresses to initiate and/or facilitate communications by telephone module 138, video conference module 139, e-mail client module 140, or IM module 141; and so forth.

In conjunction with RF circuitry 108, audio circuitry 110, speaker 111, microphone 113, touch screen 112, display controller 156, contact/motion module 130, graphics module 132, and text input module 134, telephone module 138 are optionally, used to enter a sequence of characters corresponding to a telephone number, access one or more telephone numbers in contacts module 137, modify a telephone number that has been entered, dial a respective telephone number, conduct a conversation, and disconnect or hang up when the conversation is completed. As noted above, the wireless communication optionally uses any of a plurality of communications standards, protocols, and technologies.

In conjunction with RF circuitry 108, audio circuitry 110, speaker 111, microphone 113, touch screen 112, display controller 156, optical sensor 164, optical sensor controller 158, contact/motion module 130, graphics module 132, text input module 134, contacts module 137, and telephone module 138, video conference module 139 includes executable instructions to initiate, conduct, and terminate a video conference between a user and one or more other participants in accordance with user instructions.

In conjunction with RF circuitry 108, touch screen 112, display controller 156, contact/motion module 130, graphics module 132, and text input module 134, e-mail client module 140 includes executable instructions to create, send, receive, and manage e-mail in response to user instructions. In conjunction with image management module 144, e-mail client module 140 makes it very easy to create and send e-mails with still or video images taken with camera module 143.

In conjunction with RF circuitry 108, touch screen 112, display controller 156, contact/motion module 130, graphics module 132, and text input module 134, the instant messaging module 141 includes executable instructions to enter a sequence of characters corresponding to an instant message, to modify previously entered characters, to transmit a respective instant message (for example, using a Short Message Service (SMS) or Multimedia Message Service (MMS) protocol for telephony-based instant messages or using XMPP, SIMPLE, or IMPS for Internet-based instant messages), to receive instant messages, and to view received instant messages. In some embodiments, transmitted and/or received instant messages optionally include graphics, photos, audio files, video files and/or other attachments as are supported in an MMS and/or an Enhanced Messaging Service (EMS). As used herein, "instant messaging" refers to both telephony-based messages (e.g., messages sent using SMS or MMS) and Internet-based messages (e.g., messages sent using XMPP, SIMPLE, or IMPS).

In conjunction with RF circuitry 108, touch screen 112, display controller 156, contact/motion module 130, graphics module 132, text input module 134, GPS module 135, map module 154, and music player module, workout support module 142 includes executable instructions to create workouts (e.g., with time, distance, and/or calorie burning goals); communicate with workout sensors (sports devices); receive workout sensor data; calibrate sensors used to monitor a workout; select and play music for a workout; and display, store, and transmit workout data.

In conjunction with touch screen 112, display controller 156, optical sensor(s) 164, optical sensor controller 158, contact/motion module 130, graphics module 132, and image management module 144, camera module 143 includes executable instructions to capture still images or video (including a video stream) and store them into memory 102, modify characteristics of a still image or video, or delete a still image or video from memory 102.

In conjunction with touch screen 112, display controller 156, contact/motion module 130, graphics module 132, text input module 134, and camera module 143, image management module 144 includes executable instructions to arrange, modify (e.g., edit), or otherwise manipulate, label, delete, present (e.g., in a digital slide show or album), and store still and/or video images.

In conjunction with RF circuitry 108, touch screen 112, display controller 156, contact/motion module 130, graphics module 132, and text input module 134, browser module 147 includes executable instructions to browse the Internet in accordance with user instructions, including searching, linking to, receiving, and displaying web pages or portions thereof, as well as attachments and other files linked to web pages.

In conjunction with RF circuitry 108, touch screen 112, display controller 156, contact/motion module 130, graphics module 132, text input module 134, e-mail client module 140, and browser module 147, calendar module 148 includes executable instructions to create, display, modify, and store calendars and data associated with calendars (e.g., calendar entries, to-do lists, etc.) in accordance with user instructions.

In conjunction with RF circuitry 108, touch screen 112, display controller 156, contact/motion module 130, graphics module 132, text input module 134, and browser module 147, widget modules 149 are mini-applications that are, optionally, downloaded and used by a user (e.g., weather widget 149-1, stocks widget 149-2, calculator widget 149-3, alarm clock widget 149-4, and dictionary widget 149-5) or created by the user (e.g., user-created widget 149-6). In some embodiments, a widget includes an HTML (Hypertext Markup Language) file, a CSS (Cascading Style Sheets) file, and a JavaScript file. In some embodiments, a widget includes an XML (Extensible Markup Language) file and a JavaScript file (e.g., Yahoo! Widgets).

In conjunction with RF circuitry 108, touch screen 112, display controller 156, contact/motion module 130, graphics module 132, text input module 134, and browser module 147, the widget creator module 150 are, optionally, used by a user to create widgets (e.g., turning a user-specified portion of a web page into a widget).

In conjunction with touch screen 112, display controller 156, contact/motion module 130, graphics module 132, and text input module 134, search module 151 includes executable instructions to search for text, music, sound, image, video, and/or other files in memory 102 that match one or more search criteria (e.g., one or more user-specified search terms) in accordance with user instructions.

In conjunction with touch screen 112, display controller 156, contact/motion module 130, graphics module 132, audio circuitry 110, speaker 111, RF circuitry 108, and browser module 147, video and music player module 152 includes executable instructions that allow the user to download and play back recorded music and other sound files stored in one or more file formats, such as MP3 or AAC files, and executable instructions to display, present, or otherwise play back videos (e.g., on touch screen 112 or on an external, connected display via external port 124). In some embodiments, device 100 optionally includes the functionality of an MP3 player, such as an iPod (trademark of Apple Inc.).

In conjunction with touch screen 112, display controller 156, contact/motion module 130, graphics module 132, and text input module 134, notes module 153 includes executable instructions to create and manage notes, to-do lists, and the like in accordance with user instructions.

In conjunction with RF circuitry 108, touch screen 112, display controller 156, contact/motion module 130, graphics module 132, text input module 134, GPS module 135, and browser module 147, map module 154 are, optionally, used to receive, display, modify, and store maps and data associated with maps (e.g., driving directions, data on stores and other points of interest at or near a particular location, and other location-based data) in accordance with user instructions.

In conjunction with touch screen 112, display controller 156, contact/motion module 130, graphics module 132, audio circuitry 110, speaker 111, RF circuitry 108, text input module 134, e-mail client module 140, and browser module 147, online video module 155 includes instructions that allow the user to access, browse, receive (e.g., by streaming and/or download), play back (e.g., on the touch screen or on an external, connected display via external port 124), send an e-mail with a link to a particular online video, and otherwise manage online videos in one or more file formats, such as H.264. In some embodiments, instant messaging module 141, rather than e-mail client module 140, is used to send a link to a particular online video. Additional description of the online video application can be found in U.S. Provisional Patent Application No. 60/936,562, "Portable Multifunction Device, Method, and Graphical User Interface for Playing Online Videos," filed June 20, 2007, and U.S. Patent Application No. 11/968,067, "Portable Multifunction Device, Method, and Graphical User Interface for Playing Online Videos," filed December 31, 2007.

Each of the above-identified modules and applications corresponds to a set of executable instructions for performing one or more functions described above and the methods described in this application (e.g., the computer-implemented methods and other information processing methods described herein). These modules (e.g., sets of instructions) need not be implemented as separate software programs (such as computer programs (e.g., including instructions)), procedures, or modules, and thus various subsets of these modules are, optionally, combined or otherwise rearranged in various embodiments. For example, video player module is, optionally, combined with music player module into a single module (e.g., video and music player module 152, FIG. 1A). In some embodiments, memory 102 optionally stores a subset of the modules and data structures identified above. Furthermore, memory 102 optionally stores additional modules and data structures not described above.

In some embodiments, device 100 is a device where operation of a predefined set of functions on the device is performed exclusively through a touch screen and/or a touchpad. By using a touch screen and/or a touchpad as the primary input control device for operation of device 100, the number of physical input control devices (such as push buttons, dials, and the like) on device 100 is, optionally, reduced.

The predefined set of functions that are performed exclusively through a touch screen and/or a touchpad optionally include navigation between user interfaces. In some embodiments, the touchpad, when touched by the user, navigates device 100 to a main, home, or root menu from any user interface that is displayed on device 100. In such embodiments, a "menu button" is implemented using a touchpad. In some other embodiments, the menu button is a physical push button or other physical input control device instead of a touchpad.

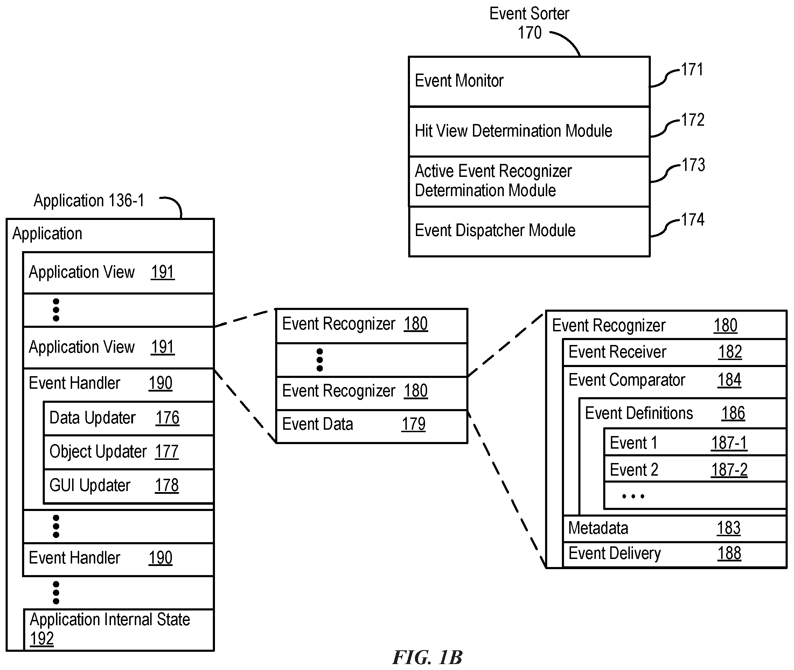

FIG. 1B is a block diagram illustrating exemplary components for event handling in accordance with some embodiments. In some embodiments, memory 102 (FIG. 1A) or 370 (FIG. 3A) includes event sorter 170 (e.g., in operating system 126) and a respective application 136-1 (e.g., any of the aforementioned applications 137-151, 155, 380-390).

Event sorter 170 receives event information and determines the application 136-1 and application view 191 of application 136-1 to which to deliver the event information. Event sorter 170 includes event monitor 171 and event dispatcher module 174. In some embodiments, application 136-1 includes application internal state 192, which indicates the current application view(s) displayed on touch-sensitive display 112 when the application is active or executing. In some embodiments, device/global internal state 157 is used by event sorter 170 to determine which application(s) is (are) currently active, and application internal state 192 is used by event sorter 170 to determine application views 191 to which to deliver event information.

In some embodiments, application internal state 192 includes additional information, such as one or more of: resume information to be used when application 136-1 resumes execution, user interface state information that indicates information being displayed or that is ready for display by application 136-1, a state queue for enabling the user to go back to a prior state or view of application 136-1, and a redo/undo queue of previous actions taken by the user.

Event monitor 171 receives event information from peripherals interface 118. Event information includes information about a sub-event (e.g., a user touch on touch-sensitive display 112, as part of a multi-touch gesture). Peripherals interface 118 transmits information it receives from I/O subsystem 106 or a sensor, such as proximity sensor 166, accelerometer(s) 168, and/or microphone 113 (through audio circuitry 110). Information that peripherals interface 118 receives from I/O subsystem 106 includes information from touch-sensitive display 112 or a touch-sensitive surface.

In some embodiments, event monitor 171 sends requests to the peripherals interface 118 at predetermined intervals. In response, peripherals interface 118 transmits event information. In other embodiments, peripherals interface 118 transmits event information only when there is a significant event (e.g., receiving an input above a predetermined noise threshold and/or for more than a predetermined duration).

In some embodiments, event sorter 170 also includes a hit view determination module 172 and/or an active event recognizer determination module 173.

Hit view determination module 172 provides software procedures for determining where a sub-event has taken place within one or more views when touch-sensitive display 112 displays more than one view. Views are made up of controls and other elements that a user can see on the display.

Another aspect of the user interface associated with an application is a set of views, sometimes herein called application views or user interface windows, in which information is displayed and touch-based gestures occur. The application views (of a respective application) in which a touch is detected optionally correspond to programmatic levels within a programmatic or view hierarchy of the application. For example, the lowest level view in which a touch is detected is, optionally, called the hit view, and the set of events that are recognized as proper inputs are, optionally, determined based, at least in part, on the hit view of the initial touch that begins a touch-based gesture.

Hit view determination module 172 receives information related to sub-events of a touch-based gesture. When an application has multiple views organized in a hierarchy, hit view determination module 172 identifies a hit view as the lowest view in the hierarchy which should handle the sub-event. In most circumstances, the hit view is the lowest level view in which an initiating sub-event occurs (e.g., the first sub-event in the sequence of sub-events that form an event or potential event). Once the hit view is identified by the hit view determination module 172, the hit view typically receives all sub-events related to the same touch or input source for which it was identified as the hit view.

Active event recognizer determination module 173 determines which view or views within a view hierarchy should receive a particular sequence of sub-events. In some embodiments, active event recognizer determination module 173 determines that only the hit view should receive a particular sequence of sub-events. In other embodiments, active event recognizer determination module 173 determines that all views that include the physical location of a sub-event are actively involved views, and therefore determines that all actively involved views should receive a particular sequence of sub-events. In other embodiments, even if touch sub-events were entirely confined to the area associated with one particular view, views higher in the hierarchy would still remain as actively involved views.

Event dispatcher module 174 dispatches the event information to an event recognizer (e.g., event recognizer 180). In embodiments including active event recognizer determination module 173, event dispatcher module 174 delivers the event information to an event recognizer determined by active event recognizer determination module 173. In some embodiments, event dispatcher module 174 stores in an event queue the event information, which is retrieved by a respective event receiver 182.

In some embodiments, operating system 126 includes event sorter 170. Alternatively, application 136-1 includes event sorter 170. In yet other embodiments, event sorter 170 is a stand-alone module, or a part of another module stored in memory 102, such as contact/motion module 130.

In some embodiments, application 136-1 includes a plurality of event handlers 190 and one or more application views 191, each of which includes instructions for handling touch events that occur within a respective view of the application's user interface. Each application view 191 of the application 136-1 includes one or more event recognizers 180. Typically, a respective application view 191 includes a plurality of event recognizers 180. In other embodiments, one or more of event recognizers 180 are part of a separate module, such as a user interface kit or a higher level object from which application 136-1 inherits methods and other properties. In some embodiments, a respective event handler 190 includes one or more of: data updater 176, object updater 177, GUI updater 178, and/or event data 179 received from event sorter 170. Event handler 190 optionally utilizes or calls data updater 176, object updater 177, or GUI updater 178 to update the application internal state 192. Alternatively, one or more of the application views 191 include one or more respective event handlers 190. Also, in some embodiments, one or more of data updater 176, object updater 177, and GUI updater 178 are included in a respective application view 191.

A respective event recognizer 180 receives event information (e.g., event data 179) from event sorter 170 and identifies an event from the event information. Event recognizer 180 includes event receiver 182 and event comparator 184. In some embodiments, event recognizer 180 also includes at least a subset of: metadata 183, and event delivery instructions 188 (which optionally include sub-event delivery instructions).

Event receiver 182 receives event information from event sorter 170. The event information includes information about a sub-event, for example, a touch or a touch movement. Depending on the sub-event, the event information also includes additional information, such as location of the sub-event. When the sub-event concerns motion of a touch, the event information optionally also includes speed and direction of the sub-event. In some embodiments, events include rotation of the device from one orientation to another (e.g., from a portrait orientation to a landscape orientation, or vice versa), and the event information includes corresponding information about the current orientation (also called device attitude) of the device.

Event comparator 184 compares the event information to predefined event or sub-event definitions and, based on the comparison, determines an event or sub-event, or determines or updates the state of an event or sub-event. In some embodiments, event comparator 184 includes event definitions 186. Event definitions 186 contain definitions of events (e.g., predefined sequences of sub-events), for example, event 1 (187-1), event 2 (187-2), and others. In some embodiments, sub-events in an event (e.g., 187-1 and/or 187-2) include, for example, touch begin, touch end, touch movement, touch cancellation, and multiple touching. In one example, the definition for event 1 (187-1) is a double tap on a displayed object. The double tap, for example, comprises a first touch (touch begin) on the displayed object for a predetermined phase, a first liftoff (touch end) for a predetermined phase, a second touch (touch begin) on the displayed object for a predetermined phase, and a second liftoff (touch end) for a predetermined phase. In another example, the definition for event 2 (187-2) is a dragging on a displayed object. The dragging, for example, comprises a touch (or contact) on the displayed object for a predetermined phase, a movement of the touch across touch-sensitive display 112, and liftoff of the touch (touch end). In some embodiments, the event also includes information for one or more associated event handlers 190.

In some embodiments, event definitions 186 include a definition of an event for a respective user-interface object. In some embodiments, event comparator 184 performs a hit test to determine which user-interface object is associated with a sub-event. For example, in an application view in which three user-interface objects are displayed on touch-sensitive display 112, when a touch is detected on touch-sensitive display 112, event comparator 184 performs a hit test to determine which of the three user-interface objects is associated with the touch (sub-event). If each displayed object is associated with a respective event handler 190, the event comparator uses the result of the hit test to determine which event handler 190 should be activated. For example, event comparator 184 selects an event handler associated with the sub-event and the object triggering the hit test.

In some embodiments, the definition for a respective event (187) also includes delayed actions that delay delivery of the event information until after it has been determined whether the sequence of sub-events does or does not correspond to the event recognizer's event type.

When a respective event recognizer 180 determines that the series of sub-events do not match any of the events in event definitions 186, the respective event recognizer 180 enters an event impossible, event failed, or event ended state, after which it disregards subsequent sub-events of the touch-based gesture. In this situation, other event recognizers, if any, that remain active for the hit view continue to track and process sub-events of an ongoing touch-based gesture.

In some embodiments, a respective event recognizer 180 includes metadata 183 with configurable properties, flags, and/or lists that indicate how the event delivery system should perform sub-event delivery to actively involved event recognizers. In some embodiments, metadata 183 includes configurable properties, flags, and/or lists that indicate how event recognizers interact, or are enabled to interact, with one another. In some embodiments, metadata 183 includes configurable properties, flags, and/or lists that indicate whether sub-events are delivered to varying levels in the view or programmatic hierarchy.

In some embodiments, a respective event recognizer 180 activates event handler 190 associated with an event when one or more particular sub-events of an event are recognized. In some embodiments, a respective event recognizer 180 delivers event information associated with the event to event handler 190. Activating an event handler 190 is distinct from sending (and deferred sending) sub-events to a respective hit view. In some embodiments, event recognizer 180 throws a flag associated with the recognized event, and event handler 190 associated with the flag catches the flag and performs a predefined process.

In some embodiments, event delivery instructions 188 include sub-event delivery instructions that deliver event information about a sub-event without activating an event handler. Instead, the sub-event delivery instructions deliver event information to event handlers associated with the series of sub-events or to actively involved views. Event handlers associated with the series of sub-events or with actively involved views receive the event information and perform a predetermined process.

In some embodiments, data updater 176 creates and updates data used in application 136-1. For example, data updater 176 updates the telephone number used in contacts module 137, or stores a video file used in video player module. In some embodiments, object updater 177 creates and updates objects used in application 136-1. For example, object updater 177 creates a new user-interface object or updates the position of a user-interface object. GUI updater 178 updates the GUI. For example, GUI updater 178 prepares display information and sends it to graphics module 132 for display on a touch-sensitive display.

In some embodiments, event handler(s) 190 includes or has access to data updater 176, object updater 177, and GUI updater 178. In some embodiments, data updater 176, object updater 177, and GUI updater 178 are included in a single module of a respective application 136-1 or application view 191. In other embodiments, they are included in two or more software modules.

It shall be understood that the foregoing discussion regarding event handling of user touches on touch-sensitive displays also applies to other forms of user inputs to operate multifunction devices 100 with input devices, not all of which are initiated on touch screens. For example, mouse movement and mouse button presses, optionally coordinated with single or multiple keyboard presses or holds; contact movements such as taps, drags, scrolls, etc. on touchpads; pen stylus inputs; movement of the device; oral instructions; detected eye movements; biometric inputs; and/or any combination thereof are optionally utilized as inputs corresponding to sub-events which define an event to be recognized.

FIG. 2 illustrates a portable multifunction device 100 having a touch screen 112 in accordance with some embodiments. The touch screen optionally displays one or more graphics within user interface (UI) 200. In this embodiment, as well as others described below, a user is enabled to select one or more of the graphics by making a gesture on the graphics, for example, with one or more fingers 202 (not drawn to scale in the figure) or one or more styluses 203 (not drawn to scale in the figure). In some embodiments, selection of one or more graphics occurs when the user breaks contact with the one or more graphics. In some embodiments, the gesture optionally includes one or more taps, one or more swipes (from left to right, right to left, upward and/or downward), and/or a rolling of a finger (from right to left, left to right, upward and/or downward) that has made contact with device 100. In some implementations or circumstances, inadvertent contact with a graphic does not select the graphic. For example, a swipe gesture that sweeps over an application icon optionally does not select the corresponding application when the gesture corresponding to selection is a tap.

Device 100 optionally also include one or more physical buttons, such as "home" or menu button 204. As described previously, menu button 204 is, optionally, used to navigate to any application 136 in a set of applications that are, optionally, executed on device 100. Alternatively, in some embodiments, the menu button is implemented as a soft key in a GUI displayed on touch screen 112.

In some embodiments, device 100 includes touch screen 112, menu button 204, push button 206 for powering the device on/off and locking the device, volume adjustment button(s) 208, subscriber identity module (SIM) card slot 210, headset jack 212, and docking/charging external port 124. Push button 206 is, optionally, used to turn the power on/off on the device by depressing the button and holding the button in the depressed state for a predefined time interval; to lock the device by depressing the button and releasing the button before the predefined time interval has elapsed; and/or to unlock the device or initiate an unlock process. In an alternative embodiment, device 100 also accepts verbal input for activation or deactivation of some functions through microphone 113. Device 100 also, optionally, includes one or more contact intensity sensors 165 for detecting intensity of contacts on touch screen 112 and/or one or more tactile output generators 167 for generating tactile outputs for a user of device 100.

FIG. 3A is a block diagram of an exemplary multifunction device with a display and a touch-sensitive surface in accordance with some embodiments. Device 300 need not be portable. In some embodiments, device 300 is a laptop computer, a desktop computer, a tablet computer, a multimedia player device, a navigation device, an educational device (such as a child's learning toy), a gaming system, or a control device (e.g., a home or industrial controller). Device 300 typically includes one or more processing units (CPUs) 310, one or more network or other communications interfaces 360, memory 370, and one or more communication buses 320 for interconnecting these components. Communication buses 320 optionally include circuitry (sometimes called a chipset) that interconnects and controls communications between system components. Device 300 includes input/output (I/O) interface 330 comprising display 340, which is typically a touch screen display. I/O interface 330 also optionally includes a keyboard and/or mouse (or other pointing device) 350 and touchpad 355, tactile output generator 357 for generating tactile outputs on device 300 (e.g., similar to tactile output generator(s) 167 described above with reference to FIG. 1A), sensors 359 (e.g., optical, acceleration, proximity, touch-sensitive, and/or contact intensity sensors similar to contact intensity sensor(s) 165 described above with reference to FIG. 1A). Memory 370 includes high-speed random access memory, such as DRAM, SRAM, DDR RAM, or other random access solid state memory devices; and optionally includes non-volatile memory, such as one or more magnetic disk storage devices, optical disk storage devices, flash memory devices, or other non-volatile solid state storage devices. Memory 370 optionally includes one or more storage devices remotely located from CPU(s) 310. In some embodiments, memory 370 stores programs, modules, and data structures analogous to the programs, modules, and data structures stored in memory 102 of portable multifunction device 100 (FIG. 1A), or a subset thereof. Furthermore, memory 370 optionally stores additional programs, modules, and data structures not present in memory 102 of portable multifunction device 100. For example, memory 370 of device 300 optionally stores drawing module 380, presentation module 382, word processing module 384, website creation module 386, disk authoring module 388, and/or spreadsheet module 390, while memory 102 of portable multifunction device 100 (FIG. 1A) optionally does not store these modules.

Each of the above-identified elements in FIG. 3A is, optionally, stored in one or more of the previously mentioned memory devices. Each of the above-identified modules corresponds to a set of instructions for performing a function described above. The above-identified modules or computer programs (e.g., sets of instructions or including instructions) need not be implemented as separate software programs (such as computer programs (e.g., including instructions)), procedures, or modules, and thus various subsets of these modules are, optionally, combined or otherwise rearranged in various embodiments. In some embodiments, memory 370 optionally stores a subset of the modules and data structures identified above. Furthermore, memory 370 optionally stores additional modules and data structures not described above.

Implementations within the scope of the present disclosure can be partially or entirely realized using a tangible computer-readable storage medium (or multiple tangible computer-readable storage media of one or more types) encoding one or more computer-readable instructions. It should be recognized that computer-readable instructions can be organized in any format, including applications, widgets, processes, software, and/or components.

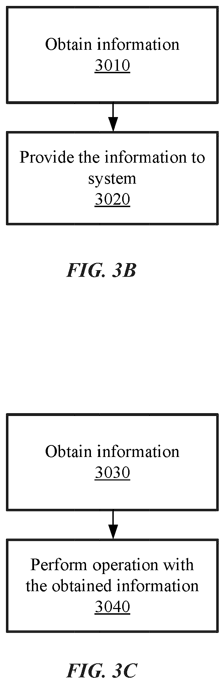

Implementations within the scope of the present disclosure include a computer-readable storage medium that encodes instructions organized as an application (e.g., application 3160) that, when executed by one or more processing units, control an electronic device (e.g., device 3150) to perform the method of FIG. 3B, the method of FIG. 3C, and/or one or more other processes and/or methods described herein.

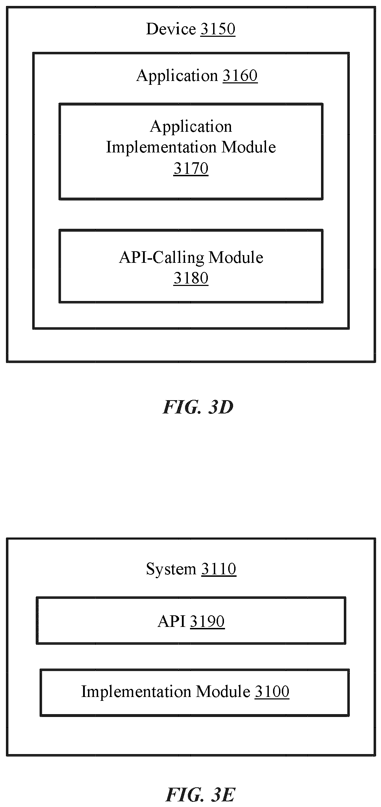

It should be recognized that application 3160 (shown in FIG. 3D) can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application. In some embodiments, application 3160 is an application that is pre-installed on device 3150 at purchase (e.g., a first-party application). In some embodiments, application 3160 is an application that is provided to device 3150 via an operating system update file (e.g., a first-party application or a second-party application). In some embodiments, application 3160 is an application that is provided via an application store. In some embodiments, the application store can be an application store that is pre-installed on device 3150 at purchase (e.g., a first-party application store). In some embodiments, the application store is a third-party application store (e.g., an application store that is provided by another application store, downloaded via a network, and/or read from a storage device).

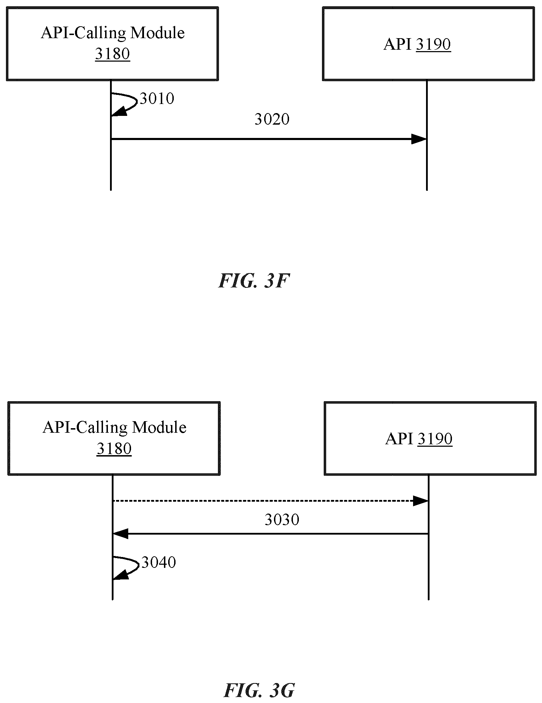

Referring to FIG. 3B and FIG. 3F, application 3160 obtains information (e.g., 3010). In some embodiments, at 3010, information is obtained from at least one hardware component of device 3150. In some embodiments, at 3010, information is obtained from at least one software module of device 3150. In some embodiments, at 3010, information is obtained from at least one hardware component external to device 3150 (e.g., a peripheral device, an accessory device, and/or a server). In some embodiments, the information obtained at 3010 includes positional information, time information, notification information, user information, environment information, electronic device state information, weather information, media information, historical information, event information, hardware information, and/or motion information. In some embodiments, in response to and/or after obtaining the information at 3010, application 3160 provides the information to a system (e.g., 3020).

In some embodiments, the system (e.g., 3110 shown in FIG. 3E) is an operating system hosted on device 3150. In some embodiments, the system (e.g., 3110 shown in FIG. 3E) is an external device (e.g., a server, a peripheral device, an accessory, and/or a personal computing device) that includes an operating system.

Referring to FIG. 3C and FIG. 3G, application 3160 obtains information (e.g., 3030). In some embodiments, the information obtained at 3030 includes positional information, time information, notification information, user information, environment information electronic device state information, weather information, media information, historical information, event information, hardware information, and/or motion information. In response to and/or after obtaining the information at 3030, application 3160 performs an operation with the information (e.g., 3040). In some embodiments, the operation performed at 3040 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 3110 based on the information.

In some embodiments, one or more steps of the method of FIG. 3B and/or the method of FIG. 3C is performed in response to a trigger. In some embodiments, the trigger includes detection of an event, a notification received from system 3110, a user input, and/or a response to a call to an API provided by system 3110.

In some embodiments, the instructions of application 3160, when executed, control device 3150 to perform the method of FIG. 3B and/or the method of FIG. 3C by calling an application programming interface (API) (e.g., API 3190) provided by system 3110. In some embodiments, application 3160 performs at least a portion of the method of FIG. 3B and/or the method of FIG. 3C without calling API 3190.

In some embodiments, one or more steps of the method of FIG. 3B and/or the method of FIG. 3C includes calling an API (e.g., API 3190) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 3D, device 3150 is illustrated. In some embodiments, device 3150 is a personal computing device, a smart phone, a smart watch, a fitness tracker, a head mounted display (HMD) device, a media device, a communal device, a speaker, a television, and/or a tablet. As illustrated in FIG. 3D, device 3150 includes application 3160 and an operating system (e.g., system 3110 shown in FIG. 3E). Application 3160 includes application implementation module 3170 and API-calling module 3180. System 3110 includes API 3190 and implementation module 3100. It should be recognized that device 3150, application 3160, and/or system 3110 can include more, fewer, and/or different components than illustrated in FIGS. 3D and 3E.

In some embodiments, application implementation module 3170 includes a set of one or more instructions corresponding to one or more operations performed by application 3160. For example, when application 3160 is a messaging application, application implementation module 3170 can include operations to receive and send messages. In some embodiments, application implementation module 3170 communicates with API-calling module 3180 to communicate with system 3110 via API 3190 (shown in FIG. 3E).

In some embodiments, API 3190 is a software module (e.g., a collection of computer-readable instructions) that provides an interface that allows a different module (e.g., API-calling module 3180) to access and/or use one or more functions, methods, procedures, data structures, classes, and/or other services provided by implementation module 3100 of system 3110. For example, API-calling module 3180 can access a feature of implementation module 3100 through one or more API calls or invocations (e.g., embodied by a function or a method call) exposed by API 3190 (e.g., a software and/or hardware module that can receive API calls, respond to API calls, and/or send API calls) and can pass data and/or control information using one or more parameters via the API calls or invocations. In some embodiments, API 3190 allows application 3160 to use a service provided by a Software Development Kit (SDK) library. In some embodiments, application 3160 incorporates a call to a function or method provided by the SDK library and provided by API 3190 or uses data types or objects defined in the SDK library and provided by API 3190. In some embodiments, API-calling module 3180 makes an API call via API 3190 to access and use a feature of implementation module 3100 that is specified by API 3190. In such embodiments, implementation module 3100 can return a value via API 3190 to API-calling module 3180 in response to the API call. The value can report to application 3160 the capabilities or state of a hardware component of device 3150, including those related to aspects such as input capabilities and state, output capabilities and state, processing capability, power state, storage capacity and state, and/or communications capability. In some embodiments, API 3190 is implemented in part by firmware, microcode, or other low level logic that executes in part on the hardware component.

In some embodiments, API 3190 allows a developer of API-calling module 3180 (which can be a third-party developer) to leverage a feature provided by implementation module 3100. In such embodiments, there can be one or more API-calling modules (e.g., including API-calling module 3180) that communicate with implementation module 3100. In some embodiments, API 3190 allows multiple API-calling modules written in different programming languages to communicate with implementation module 3100 (e.g., API 3190 can include features for translating calls and returns between implementation module 3100 and API-calling module 3180) while API 3190 is implemented in terms of a specific programming language. In some embodiments, API-calling module 3180 calls APIs from different providers such as a set of APIs from an OS provider, another set of APIs from a plug-in provider, and/or another set of APIs from another provider (e.g., the provider of a software library) or creator of the another set of APIs.

Examples of API 3190 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, photos API, camera API, and/or image processing API. In some embodiments, the sensor API is an API for accessing data associated with a sensor of device 3150. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor, and/or biometric sensor.

In some embodiments, implementation module 3100 is a system (e.g., operating system and/or server system) software module (e.g., a collection of computer-readable instructions) that is constructed to perform an operation in response to receiving an API call via API 3190. In some embodiments, implementation module 3100 is constructed to provide an API response (via API 3190) as a result of processing an API call. By way of example, implementation module 3100 and API-calling module 3180 can each be any one of an operating system, a library, a device driver, an API, an application program, or other module. It should be understood that implementation module 3100 and API-calling module 3180 can be the same or different type of module from each other. In some embodiments, implementation module 3100 is embodied at least in part in firmware, microcode, or hardware logic.

In some embodiments, implementation module 3100 returns a value through API 3190 in response to an API call from API-calling module 3180. While API 3190 defines the syntax and result of an API call (e.g., how to invoke the API call and what the API call does), API 3190 might not reveal how implementation module 3100 accomplishes the function specified by the API call. Various API calls are transferred via the one or more application programming interfaces between API-calling module 3180 and implementation module 3100. Transferring the API calls can include issuing, initiating, invoking, calling, receiving, returning, and/or responding to the function calls or messages. In other words, transferring can describe actions by either of API-calling module 3180 or implementation module 3100. In some embodiments, a function call or other invocation of API 3190 sends and/or receives one or more parameters through a parameter list or other structure.

In some embodiments, implementation module 3100 provides more than one API, each providing a different view of or with different aspects of functionality implemented by implementation module 3100. For example, one API of implementation module 3100 can provide a first set of functions and can be exposed to third-party developers, and another API of implementation module 3100 can be hidden (e.g., not exposed) and provide a subset of the first set of functions and also provide another set of functions, such as testing or debugging functions which are not in the first set of functions. In some embodiments, implementation module 3100 calls one or more other components via an underlying API and thus is both an API-calling module and an implementation module. It should be recognized that implementation module 3100 can include additional functions, methods, classes, data structures, and/or other features that are not specified through API 3190 and are not available to API-calling module 3180. It should also be recognized that API-calling module 3180 can be on the same system as implementation module 3100 or can be located remotely and access implementation module 3100 using API 3190 over a network. In some embodiments, implementation module 3100, API 3190, and/or API-calling module 3180 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

An application programming interface (API) is an interface between a first software process and a second software process that specifies a format for communication between the first software process and the second software process. Limited APIs (e.g., private APIs or partner APIs) are APIs that are accessible to a limited set of software processes (e.g., only software processes within an operating system or only software processes that are approved to access the limited APIs). Public APIs that are accessible to a wider set of software processes. Some APIs enable software processes to communicate about or set a state of one or more input devices (e.g., one or more touch sensors, proximity sensors, visual sensors, motion/orientation sensors, pressure sensors, intensity sensors, sound sensors, wireless proximity sensors, biometric sensors, buttons, switches, rotatable elements, and/or external controllers). Some APIs enable software processes to communicate about and/or set a state of one or more output generation components (e.g., one or more audio output generation components, one or more display generation components, and/or one or more tactile output generation components). Some APIs enable particular capabilities (e.g., scrolling, handwriting, text entry, image editing, and/or image creation) to be accessed, performed, and/or used by a software process (e.g., generating outputs for use by a software process based on input from the software process). Some APIs enable content from a software process to be inserted into a template and displayed in a user interface that has a layout and/or behaviors that are specified by the template.

Many software platforms include a set of frameworks that provides the core objects and core behaviors that a software developer needs to build software applications that can be used on the software platform. Software developers use these objects to display content onscreen, to interact with that content, and to manage interactions with the software platform. Software applications rely on the set of frameworks for their basic behavior, and the set of frameworks provides many ways for the software developer to customize the behavior of the application to match the specific needs of the software application. Many of these core objects and core behaviors are accessed via an API. An API will typically specify a format for communication between software processes, including specifying and grouping available variables, functions, and protocols. An API call (sometimes referred to as an API request) will typically be sent from a sending software process to a receiving software process as a way to accomplish one or more of the following: the sending software process requesting information from the receiving software process (e.g., for the sending software process to take action on), the sending software process providing information to the receiving software process (e.g., for the receiving software process to take action on), the sending software process requesting action by the receiving software process, or the sending software process providing information to the receiving software process about action taken by the sending software process. Interaction with a device (e.g., using a user interface) will in some circumstances include the transfer and/or receipt of one or more API calls (e.g., multiple API calls) between multiple different software processes (e.g., different portions of an operating system, an application and an operating system, or different applications) via one or more APIs (e.g., via multiple different APIs). For example, when an input is detected the direct sensor data is frequently processed into one or more input events that are provided (e.g., via an API) to a receiving software process that makes some determination based on the input events, and then sends (e.g., via an API) information to a software process to perform an operation (e.g., change a device state and/or user interface) based on the determination. While a determination and an operation performed in response could be made by the same software process, alternatively the determination could be made in a first software process and relayed (e.g., via an API) to a second software process, that is different from the first software process, that causes the operation to be performed by the second software process. Alternatively, the second software process could relay instructions (e.g., via an API) to a third software process that is different from the first software process and/or the second software process to perform the operation. It should be understood that some or all user interactions with a computer system could involve one or more API calls within a step of interacting with the computer system (e.g., between different software components of the computer system or between a software component of the computer system and a software component of one or more remote computer systems). It should be understood that some or all user interactions with a computer system could involve one or more API calls between steps of interacting with the computer system (e.g., between different software components of the computer system or between a software component of the computer system and a software component of one or more remote computer systems).

In some embodiments, the application can be any suitable type of application, including, for example, one or more of: a browser application, an application that functions as an execution environment for plug-ins, widgets or other applications, a fitness application, a health application, a digital payments application, a media application, a social network application, a messaging application, and/or a maps application.

In some embodiments, the application is an application that is pre-installed on the first computer system at purchase (e.g., a first-party application). In some embodiments, the application is an application that is provided to the first computer system via an operating system update file (e.g., a first-party application). In some embodiments, the application is an application that is provided via an application store. In some embodiments, the application store is pre-installed on the first computer system at purchase (e.g., a first-party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform methods 700, 900, 1100, 1300, and/or 1400 (FIGS. 7, 9, 11, 13, and/or 14) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a WiFi API, a Bluetooth API, an NFC API, a UWB API, a fitness API, a smart home API, contact transfer API, a photos API, a camera API, and/or an image processing API.

In some embodiments, at least one API is a software module (e.g., a collection of computer-readable instructions) that provides an interface that allows a different module (e.g., API-calling module 3180) to access and use one or more functions, methods, procedures, data structures, classes, and/or other services provided by an implementation module of the system process. The API can define one or more parameters that are passed between the API-calling module and the implementation module. In some embodiments, API 3190 defines a first API call that can be provided by API-calling module 3180. The implementation module is a system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 3150) that runs the application. In some embodiments, the implementation module is included in an electronic device that is separate from the device that runs the application.

Attention is now directed towards embodiments of user interfaces that are, optionally, implemented on, for example, portable multifunction device 100.

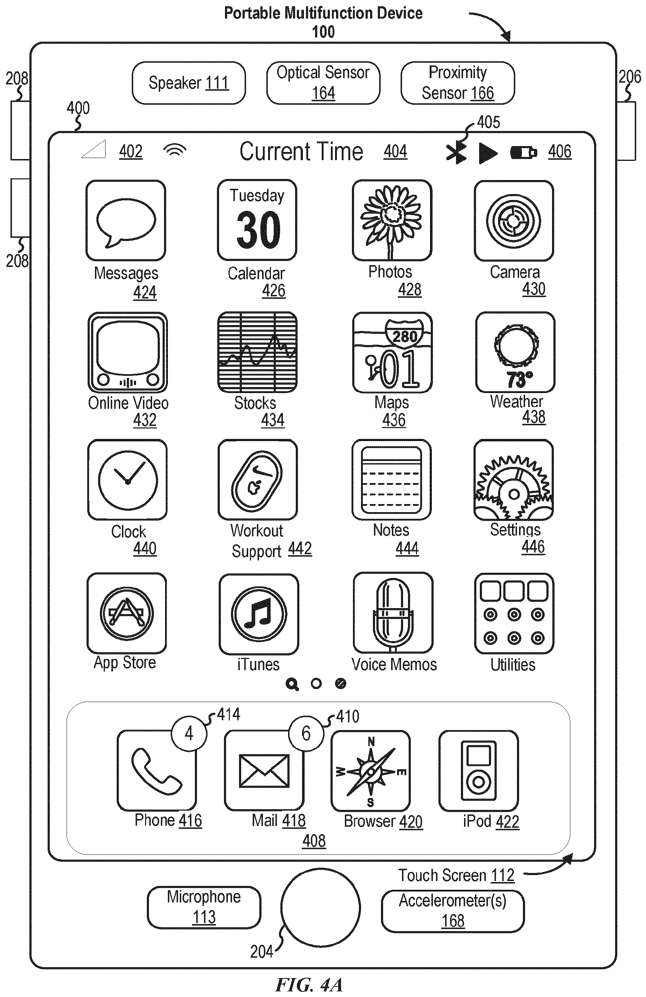

FIG. 4A illustrates an exemplary user interface for a menu of applications on portable multifunction device 100 in accordance with some embodiments. Similar user interfaces are, optionally, implemented on device 300. In some embodiments, user interface 400 includes the following elements, or a subset or superset thereof:
- Signal strength indicator(s) 402 for wireless communication(s), such as cellular and Wi-Fi signals;
- Time 404;
- Bluetooth indicator 405;
- Battery status indicator 406;
- Tray 408 with icons for frequently used applications, such as:
   ° Icon 416 for telephone module 138, labeled "Phone," which optionally includes an indicator 414 of the number of missed calls or voicemail messages;
   ° Icon 418 for e-mail client module 140, labeled "Mail," which optionally includes an indicator 410 of the number of unread e-mails;
   ° Icon 420 for browser module 147, labeled "Browser;" and
   ° Icon 422 for video and music player module 152, also referred to as iPod (trademark of Apple Inc.) module 152, labeled "iPod;" and
- Icons for other applications, such as:
   ° Icon 424 for IM module 141, labeled "Messages;"
   ° con 426 for calendar module 148, labeled "Calendar;"
   ° con 428 for image management module 144, labeled "Photos;"
   ° Icon 430 for camera module 143, labeled "Camera;"
   ° Icon 432 for online video module 155, labeled "Online Video;"
   ° Icon 434 for stocks widget 149-2, labeled "Stocks;"
   ° Icon 436 for map module 154, labeled "Maps;"
   ° Icon 438 for weather widget 149-1, labeled "Weather;"
   ° Icon 440 for alarm clock widget 149-4, labeled "Clock;"
   ° Icon 442 for workout support module 142, labeled "Workout Support;"
   ° Icon 444 for notes module 153, labeled "Notes;" and
   ° Icon 446 for a settings application or module, labeled "Settings," which provides access to settings for device 100 and its various applications 136.

It should be noted that the icon labels illustrated in FIG. 4A are merely exemplary. For example, icon 422 for video and music player module 152 is labeled "Music" or "Music Player." Other labels are, optionally, used for various application icons. In some embodiments, a label for a respective application icon includes a name of an application corresponding to the respective application icon. In some embodiments, a label for a particular application icon is distinct from a name of an application corresponding to the particular application icon.

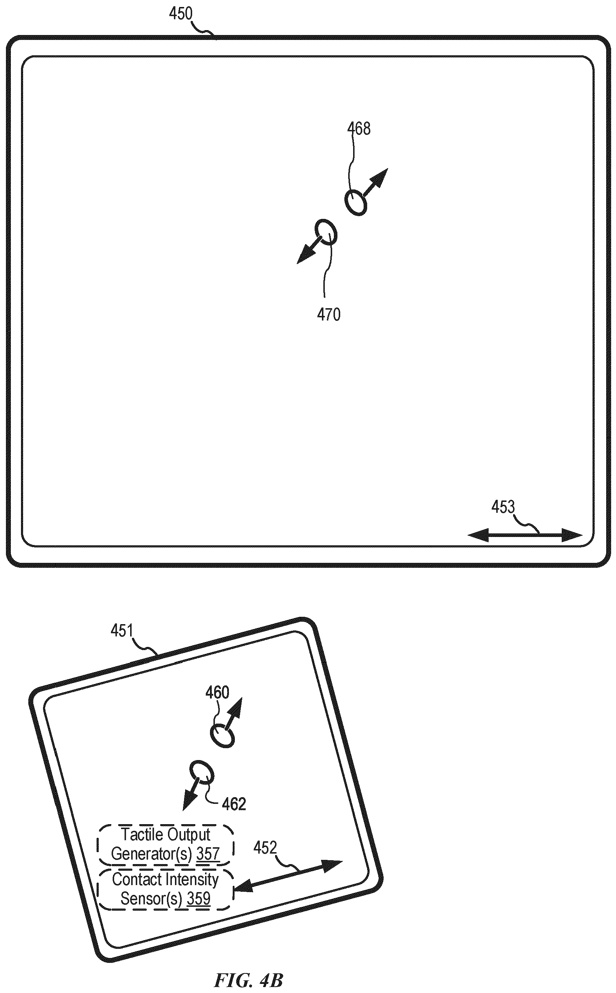

FIG. 4B illustrates an exemplary user interface on a device (e.g., device 300, FIG. 3A) with a touch-sensitive surface 451 (e.g., a tablet or touchpad 355, FIG. 3A) that is separate from the display 450 (e.g., touch screen display 112). Device 300 also, optionally, includes one or more contact intensity sensors (e.g., one or more of sensors 359) for detecting intensity of contacts on touch-sensitive surface 451 and/or one or more tactile output generators 357 for generating tactile outputs for a user of device 300.

Although some of the examples that follow will be given with reference to inputs on touch screen display 112 (where the touch-sensitive surface and the display are combined), in some embodiments, the device detects inputs on a touch-sensitive surface that is separate from the display, as shown in FIG. 4B. In some embodiments, the touch-sensitive surface (e.g., 451 in FIG. 4B) has a primary axis (e.g., 452 in FIG. 4B) that corresponds to a primary axis (e.g., 453 in FIG. 4B) on the display (e.g., 450). In accordance with these embodiments, the device detects contacts (e.g., 460 and 462 in FIG. 4B) with the touch-sensitive surface 451 at locations that correspond to respective locations on the display (e.g., in FIG. 4B, 460 corresponds to 468 and 462 corresponds to 470). In this way, user inputs (e.g., contacts 460 and 462, and movements thereof) detected by the device on the touch-sensitive surface (e.g., 451 in FIG. 4B) are used by the device to manipulate the user interface on the display (e.g., 450 in FIG. 4B) of the multifunction device when the touch-sensitive surface is separate from the display. It should be understood that similar methods are, optionally, used for other user interfaces described herein.

Additionally, while the following examples are given primarily with reference to finger inputs (e.g., finger contacts, finger tap gestures, finger swipe gestures), it should be understood that, in some embodiments, one or more of the finger inputs are replaced with input from another input device (e.g., a mouse-based input or stylus input). For example, a swipe gesture is, optionally, replaced with a mouse click (e.g., instead of a contact) followed by movement of the cursor along the path of the swipe (e.g., instead of movement of the contact). As another example, a tap gesture is, optionally, replaced with a mouse click while the cursor is located over the location of the tap gesture (e.g., instead of detection of the contact followed by ceasing to detect the contact). Similarly, when multiple user inputs are simultaneously detected, it should be understood that multiple computer mice are, optionally, used simultaneously, or a mouse and finger contacts are, optionally, used simultaneously.

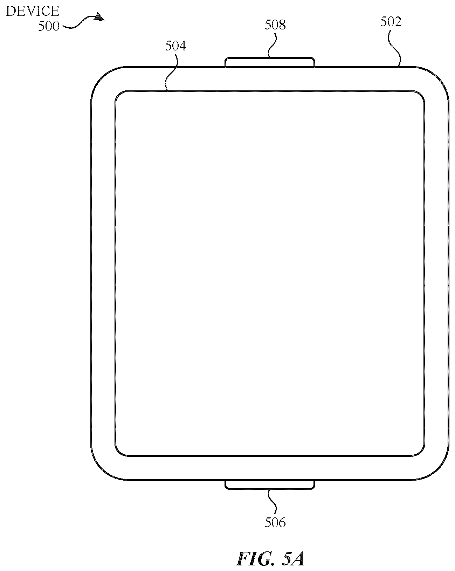

FIG. 5A illustrates exemplary personal electronic device 500. Device 500 includes body 502. In some embodiments, device 500 can include some or all of the features described with respect to devices 100 and 300 (e.g., FIGS. 1A-4B). In some embodiments, device 500 has touch-sensitive display screen 504, hereafter touch screen 504. Alternatively, or in addition to touch screen 504, device 500 has a display and a touch-sensitive surface. As with devices 100 and 300, in some embodiments, touch screen 504 (or the touch-sensitive surface) optionally includes one or more intensity sensors for detecting intensity of contacts (e.g., touches) being applied. The one or more intensity sensors of touch screen 504 (or the touch-sensitive surface) can provide output data that represents the intensity of touches. The user interface of device 500 can respond to touches based on their intensity, meaning that touches of different intensities can invoke different user interface operations on device 500.

Exemplary techniques for detecting and processing touch intensity are found, for example, in related applications: International Patent Application Serial No. PCT/US2013/040061, titled "Device, Method, and Graphical User Interface for Displaying User Interface Objects Corresponding to an Application," filed May 8, 2013, published as WIPO Publication No. WO/2013/169849, and International Patent Application Serial No. PCT/US2013/069483, titled "Device, Method, and Graphical User Interface for Transitioning Between Touch Input to Display Output Relationships," filed November 11, 2013, published as WIPO Publication No. WO/2014/105276.

In some embodiments, device 500 has one or more input mechanisms 506 and 508. Input mechanisms 506 and 508, if included, can be physical. Examples of physical input mechanisms include push buttons and rotatable mechanisms. In some embodiments, device 500 has one or more attachment mechanisms. Such attachment mechanisms, if included, can permit attachment of device 500 with, for example, hats, eyewear, earrings, necklaces, shirts, jackets, bracelets, watch straps, chains, trousers, belts, shoes, purses, backpacks, and so forth. These attachment mechanisms permit device 500 to be worn by a user.

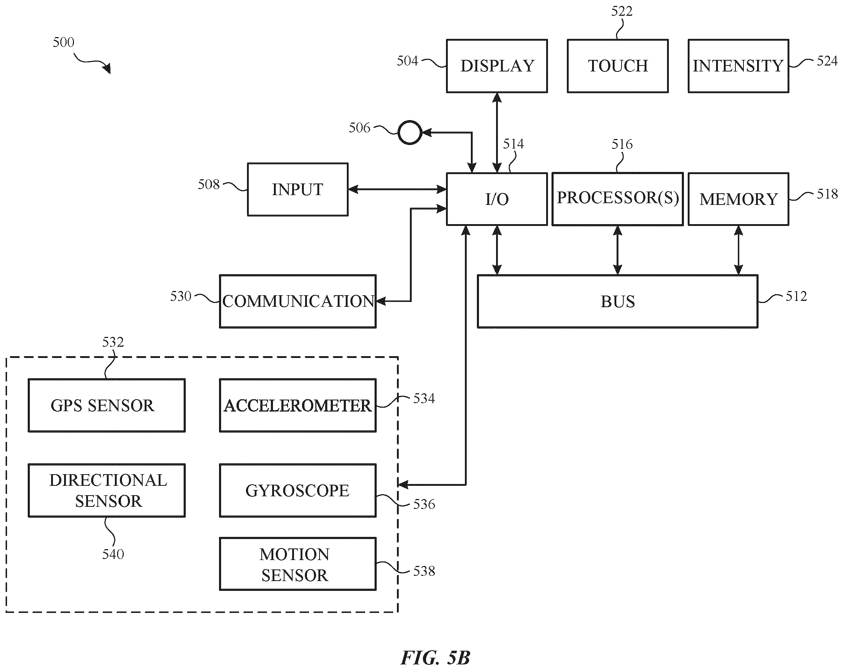

FIG. 5B depicts exemplary personal electronic device 500. In some embodiments, device 500 can include some or all of the components described with respect to FIGS. 1A, 1B, and 3A. Device 500 has bus 512 that operatively couples I/O section 514 with one or more computer processors 516 and memory 518. I/O section 514 can be connected to display screen 504, which can have touch-sensitive component 522 and, optionally, intensity sensor 524 (e.g., contact intensity sensor). In addition, I/O section 514 can be connected with communication unit 530 for receiving application and operating system data, using Wi-Fi, Bluetooth, near field communication (NFC), cellular, and/or other wireless communication techniques. Device 500 can include input mechanisms 506 and/or 508. Input mechanism 506 is, optionally, a rotatable input device or a depressible and rotatable input device, for example. Input mechanism 508 is, optionally, a button, in some examples.

Input mechanism 508 is, optionally, a microphone, in some examples. Personal electronic device 500 optionally includes various sensors, such as GPS sensor 532, accelerometer 534, directional sensor 540 (e.g., compass), gyroscope 536, motion sensor 538, and/or a combination thereof, all of which can be operatively connected to I/O section 514.

Memory 518 of personal electronic device 500 can include one or more non-transitory computer-readable storage mediums, for storing computer-executable instructions, which, when executed by one or more computer processors 516, for example, can cause the computer processors to perform the techniques described below, including processes 700, 900, 1100, 1300, and/or 1400 (FIGS. 7, 9, 11, 13, and/or 14). A computer-readable storage medium can be any medium that can tangibly contain or store computer-executable instructions for use by or in connection with the instruction execution system, apparatus, or device. In some examples, the storage medium is a transitory computer-readable storage medium. In some examples, the storage medium is a non-transitory computer-readable storage medium. The non-transitory computer-readable storage medium can include, but is not limited to, magnetic, optical, and/or semiconductor storages. Examples of such storage include magnetic disks, optical discs based on CD, DVD, or Blu-ray technologies, as well as persistent solid-state memory such as flash, solid-state drives, and the like. Personal electronic device 500 is not limited to the components and configuration of FIG. 5B, but can include other or additional components in multiple configurations.

As used here, the term "affordance" refers to a user-interactive graphical user interface object that is, optionally, displayed on the display screen of devices 100, 300, and/or 500 (FIGS. 1A, 3A, and 5A-5B). For example, an image (e.g., icon), a button, and text (e.g., hyperlink) each optionally constitute an affordance.

As used herein, the term "focus selector" refers to an input element that indicates a current part of a user interface with which a user is interacting. In some implementations that include a cursor or other location marker, the cursor acts as a "focus selector" so that when an input (e.g., a press input) is detected on a touch-sensitive surface (e.g., touchpad 355 in FIG. 3A or touch-sensitive surface 451 in FIG. 4B) while the cursor is over a particular user interface element (e.g., a button, window, slider, or other user interface element), the particular user interface element is adjusted in accordance with the detected input. In some implementations that include a touch screen display (e.g., touch-sensitive display system 112 in FIG. 1A or touch screen 112 in FIG. 4A) that enables direct interaction with user interface elements on the touch screen display, a detected contact on the touch screen acts as a "focus selector" so that when an input (e.g., a press input by the contact) is detected on the touch screen display at a location of a particular user interface element (e.g., a button, window, slider, or other user interface element), the particular user interface element is adjusted in accordance with the detected input. In some implementations, focus is moved from one region of a user interface to another region of the user interface without corresponding movement of a cursor or movement of a contact on a touch screen display (e.g., by using a tab key or arrow keys to move focus from one button to another button); in these implementations, the focus selector moves in accordance with movement of focus between different regions of the user interface. Without regard to the specific form taken by the focus selector, the focus selector is generally the user interface element (or contact on a touch screen display) that is controlled by the user so as to communicate the user's intended interaction with the user interface (e.g., by indicating, to the device, the element of the user interface with which the user is intending to interact). For example, the location of a focus selector (e.g., a cursor, a contact, or a selection box) over a respective button while a press input is detected on the touch-sensitive surface (e.g., a touchpad or touch screen) will indicate that the user is intending to activate the respective button (as opposed to other user interface elements shown on a display of the device).

As used in the specification and claims, the term "characteristic intensity" of a contact refers to a characteristic of the contact based on one or more intensities of the contact. In some embodiments, the characteristic intensity is based on multiple intensity samples. The characteristic intensity is, optionally, based on a predefined number of intensity samples, or a set of intensity samples collected during a predetermined time period (e.g., 0.05, 0.1, 0.2, 0.5, 1, 2, 5, 10 seconds) relative to a predefined event (e.g., after detecting the contact, prior to detecting liftoff of the contact, before or after detecting a start of movement of the contact, prior to detecting an end of the contact, before or after detecting an increase in intensity of the contact, and/or before or after detecting a decrease in intensity of the contact). A characteristic intensity of a contact is, optionally, based on one or more of: a maximum value of the intensities of the contact, a mean value of the intensities of the contact, an average value of the intensities of the contact, a top 10 percentile value of the intensities of the contact, a value at the half maximum of the intensities of the contact, a value at the 90 percent maximum of the intensities of the contact, or the like. In some embodiments, the duration of the contact is used in determining the characteristic intensity (e.g., when the characteristic intensity is an average of the intensity of the contact over time). In some embodiments, the characteristic intensity is compared to a set of one or more intensity thresholds to determine whether an operation has been performed by a user. For example, the set of one or more intensity thresholds optionally includes a first intensity threshold and a second intensity threshold. In this example, a contact with a characteristic intensity that does not exceed the first threshold results in a first operation, a contact with a characteristic intensity that exceeds the first intensity threshold and does not exceed the second intensity threshold results in a second operation, and a contact with a characteristic intensity that exceeds the second threshold results in a third operation. In some embodiments, a comparison between the characteristic intensity and one or more thresholds is used to determine whether or not to perform one or more operations (e.g., whether to perform a respective operation or forgo performing the respective operation), rather than being used to determine whether to perform a first operation or a second operation.

Attention is now directed towards embodiments of user interfaces ("UI") and associated processes that are implemented on an electronic device, such as portable multifunction device 100, device 300, or device 500.

FIGS. 6A-6O illustrate exemplary user interfaces for managing user interfaces for hybrid gauges, in accordance with the claimed invention. The user interfaces in these figures are used to illustrate the processes described below, including the processes in FIG. 7.

FIG. 6A illustrates computer system 600 with display 602. Computer system 600 is displaying, via display 602, instrument cluster 604A (also referred to as a dashboard) of a vehicle (e.g., a car, an airplane, and/or a boat). In some embodiments, computer system 600 is integrated into a vehicle and/or is in communication with a vehicle. In some embodiments, computer system 600 includes multiple displays (e.g., each gauge 606, 608, and 610 is displayed on a different display and/or a gauge is split amongst multiple displays). In some embodiments, computer system 600 is part of a user-wearable device, such as a headset. In some embodiments, computer system 600 includes one or more features of electronic devices 100, 300, and 500, as described above.

At FIG. 6A, computer system 600 displays instrument cluster 604A that includes speedometer gauge 606, information gauge 608, and power gauge 610. Speedometer gauge 606 provides an indication of speed, such as a current speed of travel of the vehicle or of computer system 600. Speedometer gauge 606 includes a path in the shape of an arc. In some embodiments, the path of speedometer gauge 606 is not in the shape of an arc and is, for example, a straight line or another shape. First (filled) part 606C along the path indicates a speed (e.g., of the vehicle and/or of computer system 600). Speedometer gauge 606 indicates the speed of the vehicle in two ways: filling first part 606C of the path without filling a second (unfilled) part 606D of the path and numeric speed indicator 606B (e.g., in mph or kph). As the speed changes, first (filled) part 606C moves (e.g., changes in size and/or advances) to fill more or less of the path of speedometer gauge 606 to indicate the speed. The vehicle's range using gas (for one or more combustion engines) is displayed as range 606E. Fuel gauge 606F indicates how full the gas tank is.

Information gauge 608 displays navigation instructions 608A-608B. Instruction 608A is a graphical element, such as a left arrow, that indicates an upcoming navigation instruction. Instruction 608B is a textual element, such as "turn left", that indicates the upcoming navigation instruction.

Power gauge 610 is a hybrid power gauge, as it indicates both an amount of electric power and an amount of combustion power on the same gauge. Power gauge 610 includes path 610A. At FIG. 6A, path 610A is in the shape of an arc. In some embodiments, path 610A is not in the shape of an arc and is, for example, a straight line or another shape. Path 610A is shown for a better understanding of the technique and is optionally not displayed as part of the user interface of power gauge 610. First segment 612A of path 610A corresponds to an amount of electric power (e.g., kW) being generated and/or stored. For example, first segment 612A corresponds to an amount of power that is being generated by one or more electric motors being turned by one or more wheels of the vehicle during regenerative braking. For another example, first segment 612A corresponds to an amount of power that is being stored in one or more batteries of the vehicle. Second segment 612B corresponds to an amount of electric power being used to propel the vehicle. For example, second segment 612B corresponds to an amount of electric power (e.g., kW) being converted to mechanical power via one or more electric motors. In some embodiments, second segment 612B includes delimiters 610C to indicate different regions of second segment 612B. In some embodiments, each delimiter indicates a kW. Third segment 612C corresponds to an amount of power of one or more combustion engines (e.g., a 2-, 4-, 6-, or 8-cylinder gas engine). For example, third segment 612C corresponds to an amount of power being produced by the one or more combustion engines. For another example, third segment 612C indicates the revolutions per minute (RPM) of the engine (e.g., the higher the RPM, the higher the power being output by the engine and the lower the RPM, the lower the power being output by the engine). In some embodiments, power gauge 610 is a single hybrid gauge with a single indicator that indicates (e.g., during vehicle operation) amounts of (and/or transitions among) electric power regeneration, electric power usage, and combustion power usage.

In some embodiments, the path consists of only the first segment, second segment, and third segment, without including other segments. In some embodiments, the path does not include duplication of any segment (e.g., does not include duplication of the second segment). In some embodiments, a first end of path 610A corresponds to a first end of first segment 612A, a second end of first segment 612A corresponds to a first end of second segment 612B, a second end of second segment 612B corresponds to a first end of third segment 612C, and a second end of third segment 612C corresponds to a second end of path 610A. In some embodiments, the path is continuous across first segment 612A, second segment 612B, and third segment 612C. Element 614A delineates the boundary between second segment 612B and third segment 612C.

At FIG. 6A, power gauge 610 includes power indicator 610B. Power indicator 610B indicates a location and or a range along path 610A. Power indicator 610B indicates amounts of power among first segment 612A, second segment 612B, and third segment 612C. At FIG. 6A, power indicator 610B indicates that power is not being generated and/or stored, power is not being used (e.g., to propel the vehicle and/or to rotate the electronic motors), and that the one or more combustion engines are not producing power (e.g., are at 0 RPM). At FIG. 6A, the vehicle's range using electricity (for one or more electric motors) is displayed as range 616A. Battery gauge 616B indicates how full one or more batteries are.

At FIG. 6B, computer system 600 detects a change in speed and power (e.g., in response to the vehicle accelerating when a user presses an accelerator pedal of the vehicle) and, in response, has updated instrument cluster 604A. At FIG. 6B, the vehicle is traveling at 25mph, as indicated by numeric speed indicator 606B and first part 606C filling the path of speedometer gauge 606. At FIG. 6B, information gauge 608 displays instructions 608A and 608B to keep straight. At FIG. 6B, power indicator 610B moves to fill in a portion of path 610A by expanding in a clockwise direction starting at the boundary between first segment 612A and second segment 612B. As shown in FIG. 6B, power indicator 610B indicates that electric power is not being generated by not filling any portion of first segment 612A, indicates how much electric power is being used (e.g., 3.7kW) based on how much of second segment 612B is filled, and indicates that combustion power is not being used by not filling any portion of third segment 612C. In this example, power from one or more batteries of the vehicle are being used to power one or more electric motors of the vehicle to drive the wheels of the vehicle (without using the power of a combustion engine). In some embodiments, the portion of power indicator 610B that is in second segment 612B is colored (e.g., a second color, blue, or gray).

At FIG. 6C, computer system 600 detects a change in speed and power (e.g., in response to the vehicle decelerating when a user reduces how much the accelerator pedal of the vehicle is pressed and/or when the vehicle automatically slows) and, in response, has updated instrument cluster 604A. At FIG. 6C, the vehicle is traveling at 15mph, as indicated by numeric speed indicator 606B and first part 606C filling the path of speedometer gauge 606. At FIG. 6C, information gauge 608 displays instructions 608A and 608B to keep straight. At FIG. 6C, power indicator 610B has changed what portion of path 610A is filled in by contracting in a counterclockwise direction until power indicator 610B reached the boundary between first segment 612A and second segment 612B, and then expanding in the counterclockwise direction starting from the boundary between first segment 612A and second segment 612B to indicate an amount of power in first segment 612A. As shown in FIG. 6C, power indicator 610B indicates the amount of electric power that is being generated by filling in a proportionate amount of first segment 612A, indicates that electric power is not being used by not filling any portion of second segment 612B, and indicates that combustion power is not being used by not filling any portion of third segment 612C. In this example, power is being generated by regenerative braking and is being stored in one or more batteries of the vehicle. In some embodiments, the portion of power indicator 610B that is in first segment 612A is a first color (e.g., green or yellow) that is different from the second color (e.g., blue or gray). Additionally, in accordance with a determination that electric power is being generated (e.g., via regenerative braking) and/or stored, computer system 600 displays an additional indication of electric power being generated and/or stored as part of range 616A (e.g., a lightning bolt is displayed inside an image of a battery to indicate that the battery is charging).

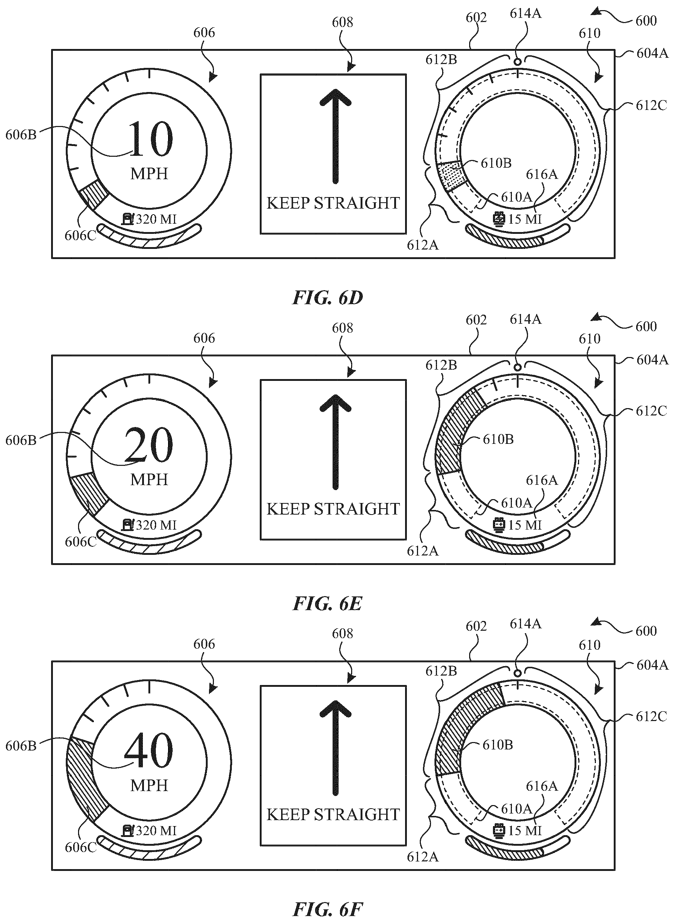

At FIG. 6D, computer system 600 detects a change in speed and power (e.g., in response to the vehicle continuing to decelerate as the user reduces how much the accelerator pedal of the vehicle is pressed) and, in response, has updated instrument cluster 604A. At FIG. 6D, the vehicle is traveling at 10mph, as indicated by numeric speed indicator 606B and first part 606C filling the path of speedometer gauge 606. At FIG. 6D, information gauge 608 displays instructions 608A and 608B to keep straight. At FIG. 6D, power indicator 610B has moved to fill in a portion of path 610A by contracting in a clockwise direction to indicate an amount of power (less power than as shown in FIG. 6C) in first segment 612A. As shown in FIG. 6D, power indicator 610B indicates the amount of electric power that is being generated by filling in a proportionate amount of first segment 612A, indicates that electric power is not being used by not filling any portion of second segment 612B, and indicates that combustion power is not being used by not filling any portion of third segment 612C. In this example, power is being generated by regenerative braking and is being stored in one or more batteries of the vehicle. In some embodiments, the portion of power indicator 610B that is in first segment 612A is the first color (e.g., green or yellow).

At FIG. 6E, computer system 600 detects a change in speed and power (e.g., in response to the vehicle accelerating as the user presses the accelerator pedal of the vehicle) and, in response, has updated instrument cluster 604A. At FIG. 6E, the vehicle is traveling at 20mph, as indicated by numeric speed indicator 606B and first part 606C filling the path of speedometer gauge 606. At FIG. 6E, information gauge 608 displays instructions 608A and 608B to keep straight. At FIG. 6E, power indicator 610B has changed what portion of path 610A is filled in by contracting in a clockwise direction until power indicator 610B reached the boundary between first segment 612A and second segment 612B, and then expanding in the clockwise direction starting from the boundary between first segment 612A and second segment 612B to indicate an amount of power in second segment 612B. As shown in FIG. 6E, power indicator 610B indicates that electric power is not being generated by not filling any portion of first segment 612A, indicates how much electric power is being used (e.g., 3.4kW) based on how much of second segment 612B is filled, and indicates that combustion power is not being used by not filling any portion of third segment 612C. In this example, power from one or more batteries of the vehicle are being used to power one or more electric motors of the vehicle to drive the wheels of the vehicle (without using the power of a combustion engine). In some embodiments, the portion of power indicator 610B that is in second segment 612B is a second color (e.g., blue or gray) that is different from the first color.

At FIG. 6F, computer system 600 detects a change in speed and power (e.g., in response to the vehicle continuing to accelerate as the user presses the accelerator pedal of the vehicle) and, in response, has updated instrument cluster 604A. At FIG. 6F, the vehicle is traveling at 40mph, as indicated by numeric speed indicator 606B and first part 606C filling the path of speedometer gauge 606. At FIG. 6F, information gauge 608 displays instructions 608A and 608B to keep straight. At FIG. 6F, power indicator 610B has changed what portion of path 610A is filled in by expanding in the clockwise direction to fill more of second segment 612B to indicate an amount of power in second segment 612B that is proportionate to the amount of electric power being used (e.g., from the one or more batteries of the vehicle and/or being applied to one or more electric motors of the vehicle). As shown in FIG. 6F, power indicator 610B indicates that electric power is not being generated by not filling any portion of first segment 612A, indicates how much electric power is being used (e.g., 3.4kW) based on how much of second segment 612B is filled, and indicates that combustion power is not being used by not filling any portion of third segment 612C. In this example, power from one or more batteries of the vehicle are being used to power one or more electric motors of the vehicle to drive the wheels of the vehicle (without using the power of a combustion engine). In some embodiments, the portion of power indicator 610B that is in second segment 612B is a second color (e.g., blue or gray) that is different from the first color.

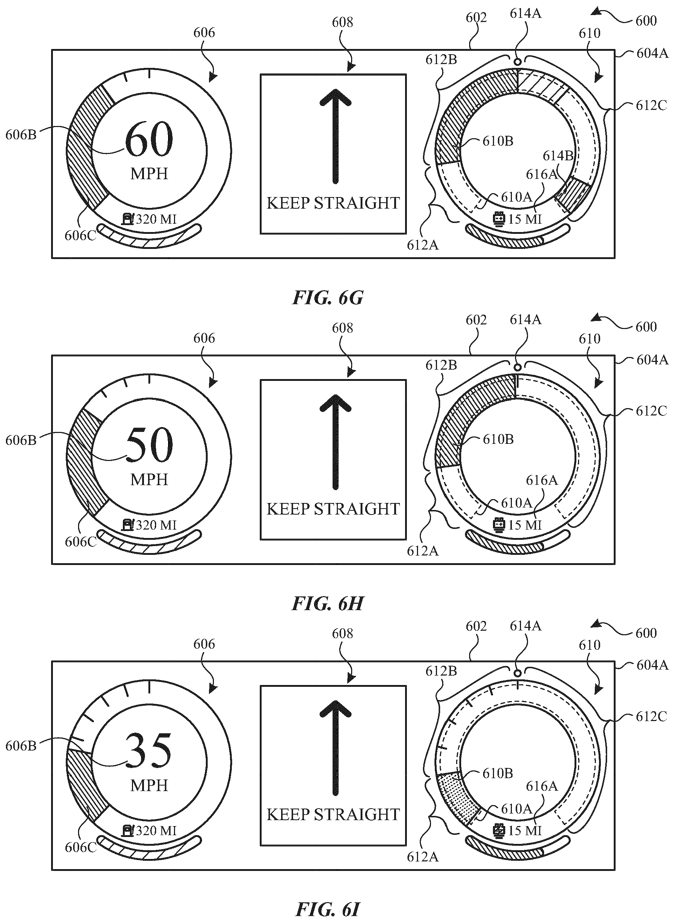

At FIG. 6G, computer system 600 detects a change in speed and power (e.g., in response to the vehicle continuing to accelerate as the user presses the accelerator pedal of the vehicle) and, in response, has updated instrument cluster 604A. At FIG. 6G, the vehicle is traveling at 60mph, as indicated by numeric speed indicator 606B and first part 606C filling the path of speedometer gauge 606. At FIG. 6G, information gauge 608 displays instructions 608A and 608B to keep straight. At FIG. 6G, power indicator 610B has changed what portion of path 610A is filled in by expanding in the clockwise direction to fill all of second segment 612B to indicate an amount of power in second segment 612B that is proportionate to the amount of electric power being used (e.g., from the one or more batteries of the vehicle and/or being applied to one or more electric motors of the vehicle) and to fill a portion of (less than all of) third segment 612C to indicate an amount of power in third segment 612C that is proportionate to the amount of combustion power being used (e.g., RPM of a combustion engine). As shown in FIG. 6G, power indicator 610B indicates that electric power is not being generated by not filling any portion of first segment 612A, indicates how much electric power is being used (e.g., 4kW) based on how much of second segment 612B is filled, and indicates how much combustion power is being used by filling a proportionate amount of third segment 612C. In this example, power from one or more batteries of the vehicle are being used to power one or more electric motors of the vehicle to drive the wheels of the vehicle and the power of one or more combustion engines is being used to drive one or more wheels of the vehicle and/or to produce electricity to drive one or more wheels of the vehicle (e.g., via one or more electric motors). As shown in FIG. 6G, in response to determining that power of the one or more combustion engines is being used (and, accordingly, power indicator 610B indicating some power in third segment 612C), computer system 600 displays redline region 614B to indicate a redline of the one or more combustion engines (whereas redline region 614B is not displayed in the user interfaces of FIGS. 6A-6F). In some embodiments, the portion of power indicator 610B that is in second segment 612B is the second color (e.g., blue or gray) and the portion of power indicator 610B that is in third segment 612C is a third color (e.g., purple or brown) that is different from the first and second colors. In some embodiments, redline region 614B is a fourth color (e.g., red or orange) that is different from the first, second, and third colors.

At FIG. 6H, computer system 600 detects a change in speed and power (e.g., in response to the vehicle decelerating when a user reduces how much the accelerator pedal of the vehicle is pressed) and, in response, has updated instrument cluster 604A. At FIG. 6H, the vehicle is traveling at 50mph, as indicated by numeric speed indicator 606B and first part 606C filling the path of speedometer gauge 606. At FIG. 6H, information gauge 608 displays instructions 608A and 608B to keep straight. At FIG. 6H, power indicator 610B has changed what portion of path 610A is filled in by contracting in the counterclockwise direction to no longer fill any of third segment 612C and to continue filling a portion of second segment 612B to indicate an amount of power in second segment 612B that is proportionate to the amount of electric power being used (e.g., from the one or more batteries of the vehicle and/or being applied to one or more electric motors of the vehicle). As shown in FIG. 6H, power indicator 610B indicates that electric power is not being generated by not filling any portion of first segment 612A, indicates how much electric power is being used (e.g., 3.8kW) based on how much of second segment 612B is filled, and indicates that combustion power is not being used by not filling any of third segment 612C. In this example, power from one or more batteries of the vehicle are being used to power one or more electric motors of the vehicle to drive the wheels of the vehicle (without using the power of a combustion engine). In some embodiments, the portion of power indicator 610B that is in second segment 612B is the second color (e.g., blue or gray). As shown in FIG. 6H, in response to determining that power of the one or more combustion engines is no longer being used (and, accordingly, power indicator 610B no longer indicating power in third segment 612C), computer system 600 ceases to display redline region 614B.

At FIG. 6I, computer system 600 detects a change in speed and power (e.g., in response to the vehicle continuing to decelerate when a user reduces how much the accelerator pedal of the vehicle is pressed) and, in response, has updated instrument cluster 604A. At FIG. 6I, the vehicle is traveling at 35mph, as indicated by numeric speed indicator 606B and first part 606C filling the path of speedometer gauge 606. At FIG. 6I, information gauge 608 displays instructions 608A and 608B to keep straight. At FIG. 6I, power indicator 610B has changed what portion of path 610A is filled in by contracting in a counterclockwise direction until power indicator 610B reached the boundary between first segment 612A and second segment 612B, and then expanding in the counterclockwise direction starting from the boundary between first segment 612A and second segment 612B to indicate an amount of power in first segment 612A. As shown in FIG. 6I, power indicator 610B indicates the amount of electric power that is being generated by filling in a proportionate amount of first segment 612A, indicates that electric power is not being used by not filling any portion of second segment 612B, and indicates that combustion power is not being used by not filling any portion of third segment 612C. In this example, power is being generated by regenerative braking and is being stored in one or more batteries of the vehicle. In some embodiments, the portion of power indicator 610B that is in first segment 612A is a first color (e.g., green or yellow) that is different from the second color and the third color.

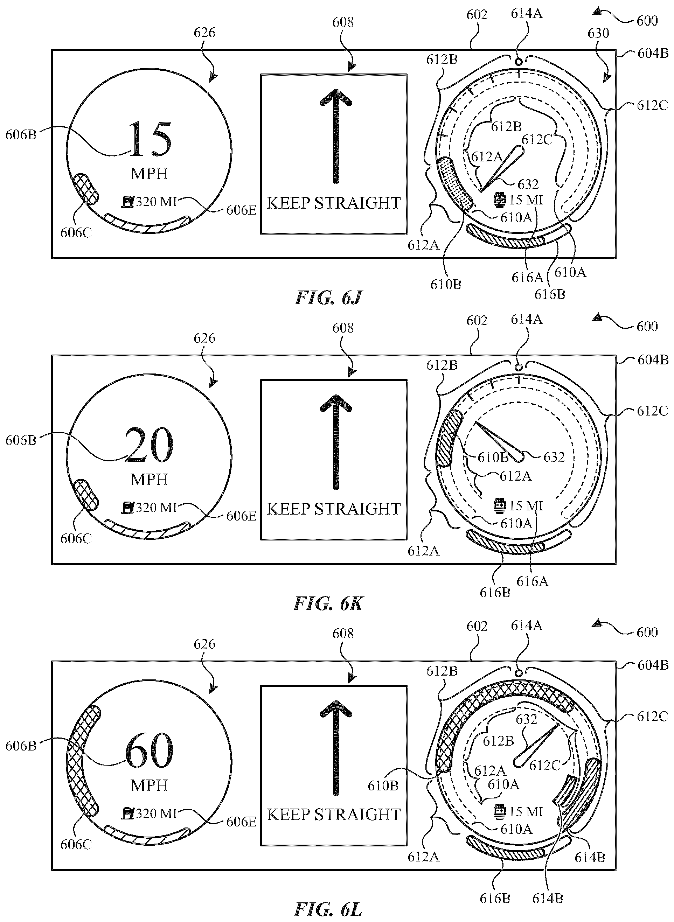

FIGS. 6J-6L illustrate exemplary instrument cluster 604B, which exhibits some or all of the characteristics of instrument cluster 604A. At FIG. 6J, instrument cluster 604B is in the same state as instrument cluster 604A at FIG. 6C. In particular, the vehicle is traveling at 15mph, as indicated by speedometer 626 (e.g., via numeric speed indicator 606B and/or first (filled) part 606C). Power gauge 630 is a hybrid power gauge. At FIGS. 6J-6L, power indicator 610B and power indicator 632 indicate respective amounts of power along paths 610A. For example, power indicator 632 is a simulated needle that rotates around an axis to indicate a position along path 610A. For another example, power indicator 610B changes in color (the whole element, as opposed to just portions of power indicator 610B in FIGS. 6A-6I) as it enters and leaves different segments of path 610A. Element 614A delineates the boundary between second segment 612B and third segment 612C. At FIG. 6J, in accordance with a determination that electric power is being generated (e.g., via regenerative braking) and/or stored, computer system 600 displays additional indication of electric power being generated and/or stored as part of range 616A (e.g., a lightning bolt inside an image of a battery to indicate that the battery is charging). At FIG. 6K, instrument cluster 604B is in the same state as instrument cluster 604A at FIG. 6E. In particular, the vehicle is traveling at 20mph, as indicated by speedometer 626, while power indicator 610B and power indicator 632 indicate that electric power is being used and that combustion power is not being used. At FIG. 6L, instrument cluster 604B is in the same state as instrument cluster 604A at FIG. 6G. In particular, the vehicle is traveling at 60mph, as indicated by speedometer 626, while power indicator 610B and power indicator 632 indicate that electric power is being used concurrently with combustion power. In response to determining that power of the one or more combustion engines is being used (and, accordingly, power indicator 610B and/or power indicator 632 indicating power in third segment 612C), computer system 600 displays redline region 614B to indicate a redline of the one or more combustion engines (whereas redline region 614B is not displayed in the user interfaces of FIGS. 6J-6K).

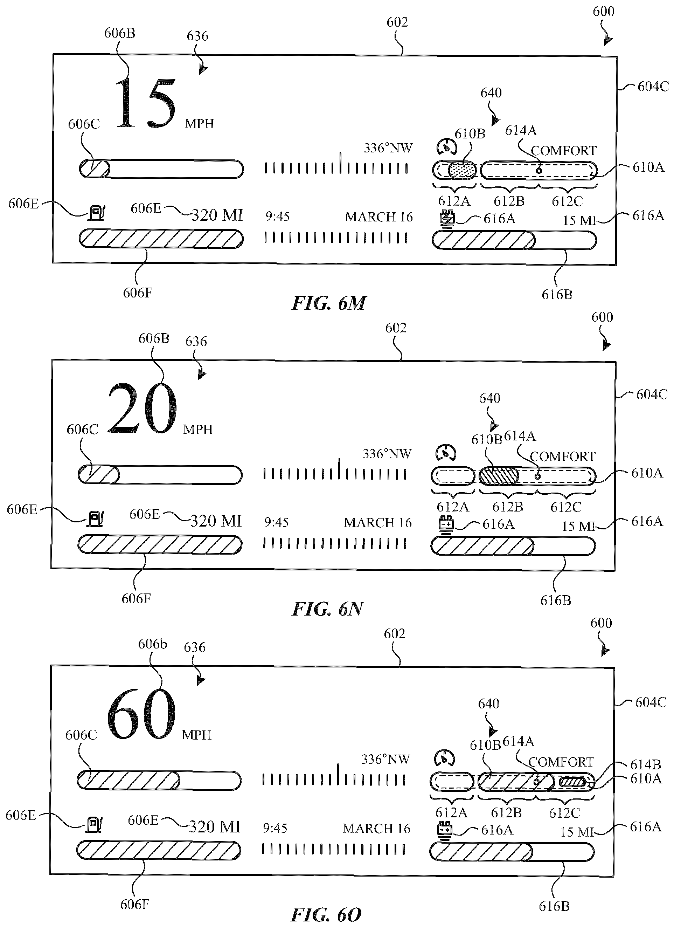

FIGS. 6M-6O illustrate exemplary instrument cluster 604C, which exhibits some or all of the characteristics of instrument cluster 604A. At FIG. 6M, instrument cluster 604C is in the same state as instrument cluster 604A at FIG. 6C. In particular, the vehicle is traveling at 15mph, as indicated by speedometer 636 (e.g., via numeric speed indicator 606B and/or first (filled) part 606C). Power gauge 640 is a hybrid power gauge. At FIGS. 6M-6O, power indicator 610B indicates respective amounts of power along path 610A. For example, power indicator 610B changes in color (the whole element, as opposed to just portions of power indicator 610B in FIGS. 6A-6I) as it enters and leaves different segments of path 610A. Element 614A delineates the boundary between second segment 612B and third segment 612C. At FIG. 6M, in accordance with a determination that electric power is being generated (e.g., via regenerative braking) and/or stored, computer system 600 displays additional indication of electric power being generated and/or stored as part of range 616A (e.g., a lightning bolt inside an image of a battery to indicate that the battery is charging). At FIG. 6N, instrument cluster 604C is in the same state as instrument cluster 604A at FIG. 6E. In particular, the vehicle is traveling at 20mph, as indicated by speedometer 636, while power indicator 610B indicates that electric power is being used and that combustion power is not being used. At FIG. 6O, instrument cluster 604C is in the same state as instrument cluster 604A at FIG. 6G. In particular, the vehicle is traveling at 60mph, as indicated by speedometer 636, while power indicator 610B indicates that electric power is being used concurrently with combustion power. In response to determining that power of the one or more combustion engines is being used (and, accordingly, power indicator 610B indicating power in third segment 612C), computer system 600 displays redline region 614B to indicate a redline of the one or more combustion engines (whereas redline region 614B is not displayed in the user interfaces of FIGS. 6M-6N).

FIG. 7 is a flow diagram illustrating methods of managing user interfaces for hybrid gauges, in accordance with the claimed invention. Method 700 is performed at a computer system (e.g., 100, 300, 500, and/or 600) (e.g., a smartphone, a wearable (e.g., head-mounted and/or wrist-worn) device, and/or of a vehicle (e.g., an automobile, a boat, or an airplane)), wherein the computer system (e.g., 600) is in communication with one or more display generation components (e.g., 602) (e.g., one or more display generation components of the vehicle, one or more displays set within a front console of the vehicle, one or more displays positioned ahead of/in front of a driver's seat of the vehicle, one or more heads-up displays, one or more display drivers, and/or one or more displays of a wearable device). In some embodiments, the computer system is in communication with a vehicle (e.g., an automobile, a boat, or an airplane) (e.g., is integrated into the vehicle, is in wired communication with the vehicle, and/or is in wireless communication with the vehicle). Some operations in method 700 are, optionally, combined, the orders of some operations are, optionally, changed, and some operations are, optionally, omitted.

As described below, method 700 provides an intuitive way for managing user interfaces for hybrid gauges. The method reduces the cognitive burden on a user that views gauges to determine the state of a vehicle and/or computer system of the vehicle, thereby creating a more efficient human-machine interface. For battery-operated computing devices, enabling a user to managing user interfaces for hybrid gauges faster and more efficiently conserves power and increases the time between battery charges.

The computer system (e.g., 600) displays (702), via the one or more display generation components (e.g., 602) and as part of an instrument cluster (e.g., 604A, 604B, and/or 604C) (e.g., of the vehicle and/or for the vehicle), a power gauge (e.g., 610, 630, and/or 640) that includes: a path (704) (e.g., 610A) (e.g., that is linear, curved, a semi-circle, and/or a segment of a circle) that corresponds to amounts of power, including electric power and combustion power, and an indicator (706) (e.g., 610B and/or 632) (e.g., a power indicator).

The path (704) includes: a first segment (e.g., 612A) that corresponds to an amount of electric power being generated (e.g., by an electric motor of the vehicle and/or using regenerative braking of the vehicle's wheels) (e.g., for storage in a battery of the vehicle) and/or stored (e.g., in a battery of the vehicle), a second segment (e.g., 612B) that corresponds to an amount of electric power being used (e.g., output by one or more batteries of the vehicle and/or consumed by (or applied to) one or more electric motors of the vehicle), and a third segment (e.g., 612C) that corresponds to an amount of power of (e.g., being generated by) a combustion engine (e.g., indicating revolutions per minute (RPM) of the engine, such as a tachometer).

The indicator (706) (e.g., 610B and/or 632) (e.g., a power indicator) moves along (e.g., traverses and/or fills) the path (e.g., 610A) (e.g., including the first segment, the second segment, and the third segment) based on (and, optionally, in conjunction with and/or to correspond to) changes in the amounts (e.g., being generated, being applied, being used, and/or being stored) of electric power and combustion power. The indicator (e.g., 610B and/or 632) indicates amounts of electric power and combustion power.

While displaying the power gauge, the computer system (e.g., 600) detects (708) (e.g., as reported by the vehicle and/or as detected by one or more sensors) a change in amount of power (e.g., an increase and/or decrease in electric power being generated, an increase and/or decrease in electric power being used, and/or an increase or decrease in an amount of power of a combustion engine).

In response to detecting the change in amount of power, the computer system (e.g., 600) updates (710), via the one or more display generation components (e.g., 602), the power gauge (e.g., 610, 630, and/or 640) by moving the indicator (e.g., 610B and/or 632) along the path (e.g., 610A) based on (and, optionally, in conjunction with and/or to correspond to) the change in amount of power. In some embodiments, the path is displayed as part of the power gauge. In some embodiments, the path is not displayed. Displaying a power gauge that includes segments for amount of electric power being generated, amount of electric power being used, and amount of power of a combustion engine provides the user with visual feedback about the power state of the computer system and/or vehicle, thereby providing improved visual feedback.

In some embodiments, the amount of electric power being generated and/or stored (e.g., that corresponds to the first segment (e.g., 612A) of the path (e.g., 610A)) is an amount of electric power being generated by one or more electric motors and/or an amount of electric power being stored in one or more batteries of a vehicle. Displaying a power gauge that includes a segment for amount of electric power being generated by one or more electric motors and/or being stored in one or more batteries of a vehicle provides the user with visual feedback about the power state of the computer system and/or vehicle, thereby providing improved visual feedback.

In some embodiments, the amount of electric power being used (e.g., that corresponds to the second segment (e.g., 612B) of the path (e.g., 610A)) is an amount of power being output by one or more batteries of a vehicle (e.g., by one or more electric motors of the vehicle). Displaying a power gauge that includes a segment for amount of electric power being output by one or more batteries of a vehicle provides the user with visual feedback about the power state of the computer system and/or vehicle, thereby providing improved visual feedback.

In some embodiments, the amount of electric power being used (e.g., that corresponds to the second segment (e.g., 612B) of the path (e.g., 610A)) is based on an amount of power usage of one or more electric motors (e.g., of a vehicle). Displaying a power gauge that includes a segment for amount of electric power being used by one or more electric motors of a vehicle provides the user with visual feedback about the power state of the computer system and/or vehicle, thereby providing improved visual feedback.

In some embodiments, the amount of power of the combustion engine (e.g., that corresponds to the third segment (e.g., 612C) of the path (e.g., 610A)) is based on a power output of the combustion engine (e.g., a combustion engine that rotates wheels of a vehicle (e.g., via a gearbox) and/or a combustion engine that generates electricity for use by one or more electric motors of the vehicle). Displaying a power gauge that includes a segment for amount of power being output by a combustion engine provides the user with visual feedback about the power state of the computer system and/or vehicle, thereby providing improved visual feedback.

In some embodiments, the amount of power of the combustion engine (e.g., that corresponds to the third segment (e.g., 612C) of the path (e.g., 610A)) is based on revolutions per minute (RPM) of the combustion engine. Displaying a power gauge that includes a segment for RPM of a combustion engine provides the user with visual feedback about the power state of the computer system and/or vehicle, thereby providing improved visual feedback.

In some embodiments, the indicator (e.g., 610B and/or 632) concurrently indicates an amount of electric power (e.g., being used and/or generated) and an amount of combustion power (e.g., being used and/or generated). Concurrently indicating an amount of electric power and an amount of combustion power provides the user with visual feedback about the power state of the computer system and/or vehicle, thereby providing improved visual feedback.

In some embodiments, the third segment (e.g., 612C) that corresponds to the amount of power of the combustion engine includes a visual indication (e.g., 614B) of a redline portion. In some embodiments, the redline portion corresponds to engine speeds (RPMs) at which operation of the combustion engine may cause damage to internal components of the combustion engine. In some embodiments, the portion of the third segment that is not in the redline portion corresponds to engine speeds at which the combustion engine is designed to operate without causing damage to internal components of the combustion engine. Displaying a visual indication of a redline portion provides the user with visual feedback about the RPM range of the combustion engine that may cause damage to the engine, thereby providing improved visual feedback.

In some embodiments, while displaying the power gauge (e.g., 610 at FIGS. 6A-6F, 630 at FIGS. 6J-6K, and/or 640 at FIGS. 6M-6N) with the indicator indicating zero amount of power of the combustion engine (e.g., the indicator is indicating an amount of power in the first segment (e.g., 612A) and/or the second segment (e.g., 612B) and is not indicating an amount of power in the third segment (e.g., 612C)), the computer system (e.g., 600) forgoes displaying, via the one or more display generation components (e.g., 602), a visual indication (e.g., 614B) of a redline portion. In response to detecting the change in amount of power and in accordance with a determination that the indicator (e.g., 610B and/or 632) is indicating a non-zero amount of power of the combustion engine (e.g., 610 at FIG. 6G, 630 at FIG. 6L, and/or 640 at FIG. 6O), the computer system (e.g., 600) displays, via the one or more display generation components (e.g., 602), the visual indication (e.g., 614B) of the redline portion. In some embodiments, the computer system only visually indicates the redline portion when the indicator indicates a non-zero amount of combustion engine power (e.g., the indicator indicates an amount in the third segment). Visually indicating the redline portion when combustion power is being used provides the user with an additional visual indication that combustion power is being used, thereby providing improved visual feedback.

In some embodiments, in response to detecting a change in amount of power and in accordance with a determination that the change in amount of power corresponds to a change from using electric power to generate and/or store electric power, the computer system (e.g., 600) updates the power gauge (e.g., 610, 630, and/or 640) by moving the indicator (e.g., 610B and/or 632) along the path (e.g., 610A) based on the change in amount of power including moving the indicator (e.g., 610B and/or 632) from indicating an amount of power in the second segment (e.g., 612B) (e.g., without indicating an amount of power in the first segment) to indicating an amount of power in the first segment (e.g., 612A) (e.g., without indicating an amount of power in the second segment) (e.g., as in the transition in FIGS. 6H and 6I). In some embodiments, when the vehicle transitions from applying electric power to the motors from one or more batteries (e.g., to accelerate the vehicle) to generating electric power (e.g., via regenerative braking and/or to store in the one or more batteries), the indicator of the power gauge transitions from indicating an amount of power being used in the second region to indicating an amount of power being generated in the first region. Displaying a power gauge that includes segments for amount of electric power being generated, amount of electric power being used, and amount of power of a combustion engine provides the user with visual feedback about the power state of the computer system and/or vehicle, thereby providing improved visual feedback.

In some embodiments, in response to detecting a change (e.g., a second change) in amount of power and in accordance with a determination that the change in amount of power corresponds to a change from generating and/or storing electric power to using electric power (e.g., by one or more electric motors), the computer system (e.g., 600) updates the power gauge (e.g., 610, 630, and/or 640) by moving the indicator (e.g., 610B and/or 632) along the path (e.g., 610A) based on the change in amount of power including moving the indicator (e.g., 610B and/or 632) from indicating an amount of power in the first segment (e.g., 612A) (e.g., without indicating an amount of power in the second segment) to indicating an amount of power in the second segment (e.g., 612B) (e.g., without indicating an amount of power in the first segment) (e.g., as in the transition in FIGS. 6C to 6D). In some embodiments, when the vehicle transitions from generating electric power (e.g., via regenerative braking and/or to store in the one or more batteries) to applying electric power to the motors from one or more batteries (e.g., to accelerate the vehicle), the indicator of the power gauge transitions from indicating an amount of power being generated in the first region to indicating an amount of power being used in the second region. Displaying a power gauge that includes segments for amount of electric power being generated, amount of electric power being used, and amount of power of a combustion engine provides the user with visual feedback about the power state of the computer system and/or vehicle, thereby providing improved visual feedback.

In some embodiments, in response to detecting a change (e.g., a third change) in amount of power and in accordance with a determination that the change in amount of power corresponds to a change from not using combustion power (e.g., while using electric power (e.g., by one or more electric motors)) to using combustion power (e.g., while optionally continuing to use electric power), the computer system (e.g., 600) updates the power gauge (e.g., 610, 630, and/or 640) by moving the indicator (e.g., 610B and/or 632) along the path (e.g., 610A) based on the change in amount of power including moving the indicator (e.g., 610B and/or 632) from indicating an amount of power in the second segment (e.g., 612B) (e.g., without indicating an amount of power in the first segment) to indicating an amount of power in the third segment (e.g., 612C) (e.g., while optionally continuing to indicate use of electric power). In some embodiments, when the vehicle transitions from applying electric power to the motors (e.g., to accelerate the vehicle) to applying power (e.g., mechanical and/or electric) from one or more combustion engines (e.g., with or without applying electric power to the motors), the indicator of the power gauge transitions from indicating an amount of power in the second region to indicating an amount of power in the third region. Displaying a power gauge that includes segments for amount of electric power being generated, amount of electric power being used, and amount of power of a combustion engine provides the user with visual feedback about the power state of the computer system and/or vehicle, thereby providing improved visual feedback.

In some embodiments, the indicator (e.g., 610B and/or 632) indicates a location along the path (e.g., 610A) by filling in a region corresponding to the path and wherein a filled region indicates a current power (e.g., being used and/or generated, such as of a vehicle). Filling a region corresponding to the path to indicate an amount of power provides the user with visual feedback about the amount of power, thereby providing improved visual feedback.

In some embodiments, the instrument cluster (e.g., 604A, 604B, and/or 604C) includes a speed indicator (e.g., 606A and/or 606B) that indicates a current speed of a vehicle (e.g., the vehicle in which the instrument cluster, one or more batteries, one or more electric motors, and/or one or more combustion engines is located). Displaying a speed indicator that indicates the current speed of the vehicle provides the user with visual feedback about the state of the computer system and/or vehicle, thereby providing improved visual feedback.

In some embodiments, displaying the indicator (e.g., 610B and/or 632) includes: in accordance with a determination that (e.g., the indicator indicates) an amount of electric power is being generated and/or stored (e.g., the indicator indicates in the first segment), displaying the indicator (e.g., 610B and/or 632) in a first color (e.g., as in FIG. 6C) and in accordance with a determination that (e.g., the indicator indicates) an amount of electric power is being used (e.g., the indicator indicates in the second segment), displaying the indicator (e.g., 610B and/or 632) in a second color (e.g., as in FIG. 6B) that is different from the first color. In some embodiments, a visual characteristic (e.g., color, size, and/or shape) of the indicator changes when transitioning from indicating an amount of power in the first region to indicating an amount of power in the second region. Displaying the power indicator in different colors provides visual feedback about the state of the indicator and the power state of the computer system and/or vehicle, thereby providing improved visual feedback.

In some embodiments, in response to detecting a change (e.g., a third change) in amount of power and in accordance with a determination that the change in amount of power corresponds to a change from not using combustion power (e.g., while using electric power (e.g., by one or more electric motors)) to using combustion power (e.g., while optionally continuing to use electric power), the computer system updates the power gauge (e.g., 610, 630, and/or 640) by changing a color of the indicator (e.g., 610B and/or 632) from a second color to a third color that is different from the second color (e.g., as in the transition from FIG. 6K to FIG. 6L). Displaying the power indicator in different colors provides visual feedback about the state of the indicator and the power state of the computer system and/or vehicle, thereby providing improved visual feedback.

In some embodiments, displaying, via the one or more display generation components (e.g., 602) and at a location along the path (e.g., 610A) , a visual indication (e.g., 614A) (e.g., a dot, a dash, a line, and/or a change in color) of a boundary between the second segment (e.g.,. 612B) and the third segment (e.g., 612C). In some embodiments, the visual indication of the boundary separates the second segment and the third segment. Displaying a visual indication of a boundary between segments provides the user with visual feedback about when the power indicator is transitioning from one segment to another segment, thereby providing improved visual feedback.

In some embodiments, updating the power gauge (e.g., 610, 630, and/or 640) by moving the indicator (e.g., 610B and/or 632) along the path (e.g., 610A) based on (and, optionally, in conjunction with and/or to correspond to) the change in amount of power includes: in accordance with a determination that the change in amount of power includes an increase in amount of electric power being generated and/or stored, moving the indicator (e.g., 610B and/or 632) in a first direction (e.g., counterclockwise or left) (along the path) to indicate the increase in amount of electric power being generated and/or stored and in accordance with a determination that the change in amount of power includes an increase in amount of electric power being used, moving the indicator (e.g., 610B and/or 632) in a second direction (e.g., clockwise or right) (along the path), different from the first direction, to indicate the increase in amount of electric power being used. Moving the power indicator in different directions because on the type of power being indicated provides the user with visual feedback about the power state of the computer system and/or vehicle, thereby providing improved visual feedback.

In some embodiments, updating the power gauge (e.g., 610, 630, and/or 640) by moving the indicator (e.g., 610B and/or 632) along the path (e.g., 610A) based on (and, optionally, in conjunction with and/or to correspond to) the change in amount of power includes: in accordance with a determination that the change in amount of power includes an increase in amount of power of (e.g., being generated by) the combustion engine, moving the indicator (e.g., 610B and/or 632) in the second direction (e.g., clockwise or right) (along the path) to indicate the increase in amount of power of the combustion engine. Moving the power indicator in different directions because on the type of power being indicated provides the user with visual feedback about the power state of the computer system and/or vehicle, thereby providing improved visual feedback.

In some embodiments, in accordance with a determination that the indicator (e.g., 610B and/or 632) indicates an amount of electric power being generated and/or stored, the computer system (e.g., 600) displays, via the one or more display generation components (e.g., 602) (and, optionally, as part of the power gauge), a visual indication that electric power is being generated and/or store (e.g., a battery image and/or a lightning bolt on a battery image, such as in FIGS. 6C, 6D, 6I, 6J, and/or 6M) that is separate from the indicator and in accordance with a determination that the indicator (e.g., 610B and/or 632) indicates an amount of electric power being used (e.g., as in FIGS. 6B, 6K, and/or 6N), the computer system (e.g., 600) forgoes display of the visual indication that electric power is being generated and/or store (e.g., a battery image and/or lightning bolt on a battery image). Including a separate indication of battery charging provides visual feedback about whether the battery is being recharged or not, thereby providing improved visual feedback.

In some embodiments, the second segment (e.g., 612B) corresponds to a first unit of measure (e.g., kW) and the third segment (e.g., 612C) corresponds to a second unit of measure (e.g., RPM) that is different from the first unit of measure. In some embodiments, the first segment corresponds to the first unit of measure. In some embodiments, the location of the indicator along a respective segment indicates an amount of corresponding to the unit of measure of the respective segment. Displaying a power gauge that includes segments the user different unites of measure provides the user with visual feedback about the power state of the computer system and/or vehicle, thereby providing improved visual feedback.

Note that details of the processes described above with respect to method 700 (e.g., FIG. 7) are also applicable in an analogous manner to the methods described below. For example, methods 900, 1100, 1300, and/or 1400 optionally include one or more of the characteristics of the various methods described above with reference to method 700. For example, the computer system is the same computer system. For another example, the speedometer is the same speedometer. For brevity, these details are not repeated below.

FIGS. 8A-8J illustrate exemplary user interfaces for managing user interfaces for hybrid gauges, in accordance with some embodiments. The user interfaces in these figures are used to illustrate the processes described below, including the processes in FIG. 9.

FIG. 8A illustrates computer system 600 with display 602. Computer system 600 is displaying, via display 602, instrument cluster 804A (also referred to as a dashboard) of a vehicle (e.g., a car, an airplane, and/or a boat). In some embodiments, computer system 600 is integrated into a vehicle and/or is in communication with a vehicle. In some embodiments, computer system 600 includes multiple displays (e.g., each gauge 606, 608, and 810 is displayed on a different display and/or a gauge is split amongst multiple displays). In some embodiments, computer system 600 is part of a user-wearable device, such as a headset. In some embodiments, computer system 600 includes one or more features of electronic devices 100, 300, and 500, as described above.

At FIG. 8A, computer system 600 displays instrument cluster 804A that includes speedometer gauge 606, information gauge 608, and power gauge 810. Speedometer gauge 606 provides an indication of speed, such as a current speed of travel of the vehicle or of computer system 600. Speedometer gauge 606 includes a path in the shape of an arc. In some embodiments, the path of speedometer gauge 606 is not in the shape of an arc and is, for example, a straight line or another shape. First (filled) part 606C along the path indicates a speed (e.g., of the vehicle and/or of computer system 600). Speedometer gauge 606 indicates the speed of the vehicle in two ways: filling first part 606C of the path without filling a second (unfilled) part 606D of the path and numeric speed indicator 606B (e.g., in mph or kph). As the speed changes, first (filled) part 606C moves (e.g., changes in size and/or advances) to fill more or less of the path of speedometer gauge 606 to indicate the speed. The vehicle's range using gas (for one or more combustion engines) is displayed as range 606E. Fuel gauge 606F indicates how full the gas tank is (e.g., the gas tank that stores gas for use by the one or more combustion engines).

Information gauge 608 displays navigation instructions 608A-608B. Instruction 608A is a graphical element, such as a left arrow, that indicates an upcoming navigation instruction. Instruction 608B is a textual element, such as "turn left", that indicates the upcoming navigation instruction.

Power gauge 810 is a hybrid power gauge, as it indicates both an amount of electric power (e.g., in kW) and an amount of combustion power (e.g., in RPM). In some embodiments, power gauge 810 includes two (e.g., distinct and/or combined) gauges and/or indicators, with electric indicator 810A indicating an amount of electric power and combustion indicator 810B indicating an amount of combustion power (e.g., RPM of the combustion engine). At FIG. 8A, electric indicator 810A and combustion indicator 810B are each in the shape of an arc. In some embodiments, electric indicator 810A and combustion indicator 810B are not in the shape of an arc and are, for example, a straight line or another shape. First segment 812A of electric indicator 810A corresponds to an amount of electric power (e.g., kW) being generated and/or stored. For example, first segment 812A corresponds to an amount of power that is being generated by one or more electric motors being turned by one or more wheels of the vehicle during regenerative braking. For another example, first segment 812A corresponds to an amount of power that is being stored in one or more batteries of the vehicle. Second segment 812B corresponds to an amount of electric power being used to propel the vehicle. For example, second segment 812B corresponds to an amount of electric power (e.g., kW) being converted to mechanical power via one or more electric motors. In some embodiments, second segment 812B includes delimiters to indicate different regions of second segment 812B. In some embodiments, each delimiter indicates a kW. Combustion indicator 810B corresponds to an amount of power of one or more combustion engines (e.g., a 2-, 4-, 6-, or 8-cylinder gas engine). For example, combustion indicator 810B corresponds to an amount of power being produced by the one or more combustion engines. For another example, combustion indicator 810B indicates the revolutions per minute (RPM) of the engine (e.g., the higher the RPM, the higher the power being output by the engine and the lower the RPM, the lower the power being output by the engine). In some embodiments, power gauge 810 is a hybrid gauge that indicates (e.g., during vehicle operation) amounts of (and/or transitions among) electric power regeneration, electric power usage, and combustion power usage.

At FIG. 8A, electric indicator 810A indicates that power is not being generated and/or stored and/or that power is not being used (e.g., to propel the vehicle and/or to rotate the electronic motors), and combustion indicator 810B indicates that the one or more combustion engines are not producing power (e.g., are at 0 RPM). At FIG. 8A, the vehicle's range using electricity (for one or more electric motors) is displayed as range 616A. Battery gauge 616B indicates how full one or more batteries are.

At FIG. 8B, computer system 600 detects a change in speed and power (e.g., in response to the vehicle accelerating when a user presses an accelerator pedal of the vehicle) and, in response, has updated instrument cluster 804A. At FIG. 8B, the vehicle is traveling at 25mph, as indicated by numeric speed indicator 606B and first part 606C filling the path of speedometer gauge 606. At FIG. 8B, information gauge 608 displays instructions 608A and 608B to keep straight. At FIG. 8B, fill 820A moves to fill in a portion of electric indicator 810A by expanding in a clockwise direction starting at the boundary between first segment 812A and second segment 812B. As shown in FIG. 8B, electric indicator 810A indicates that electric power is not being generated by not filling any portion of first segment 812A and indicates how much electric power is being used based on how much of second segment 812B is filled by fill 820A. As shown in FIG. 8B, combustion indicator 810B indicates that combustion power is not being used by not filling any portion of combustion indicator 810B. In this example, power from one or more batteries of the vehicle are being used to power one or more electric motors of the vehicle to drive the wheels of the vehicle (without using the power of a combustion engine). As battery charge is used, range 616A and battery gauge 616B are updated to indicate reduced values, as shown in FIG. 8B. Because the combustion engine is not producing power, range 606E and fuel gauge 606F remain unchanged in FIG. 8B, as compared to FIG. 8A.

At FIG. 8C, computer system 600 detects a change in speed and power (e.g., in response to the vehicle decelerating when a user reduces how much the accelerator pedal of the vehicle is pressed and/or when the vehicle automatically slows) and, in response, has updated instrument cluster 804A. At FIG. 8C, the vehicle is traveling at 15mph, as indicated by numeric speed indicator 606B and first part 606C filling the path of speedometer gauge 606. At FIG. 8C, information gauge 608 displays instructions 608A and 608B to keep straight. At FIG. 8C, electric indicator 810A has changed such that fill 820A has contracted in a counterclockwise direction until reaching the boundary between first segment 812A and second segment 812B, and then expanding in the counterclockwise direction starting from the boundary between first segment 812A and second segment 812B to indicate an amount of power in first segment 812A. As shown in FIG. 8C, electric indicator 810A indicates the amount of electric power that is being generated by filling in a proportionate amount of first segment 812A and indicates that electric power is not being used by not filling any portion of second segment 812B. Combustion indicator 810B indicates that combustion power is not being used by not filling any portion of combustion indicator 810B. In this example, power is being generated by regenerative braking and is being stored in one or more batteries of the vehicle. In some embodiments, in accordance with a determination that electric power is being generated (e.g., via regenerative braking) and/or stored, computer system 600 displays an additional indication of electric power being generated and/or stored as part of range 616A (e.g., a lightning bolt is displayed inside an image of a battery to indicate that the battery is charging). As the battery is charged, range 616A and battery gauge 616B are updated to indicate increased values, as shown in FIG. 8C. Because the combustion engine is not producing power, range 606E and fuel gauge 606F remains unchanged in FIG. 8C as compared to FIG. 8B.

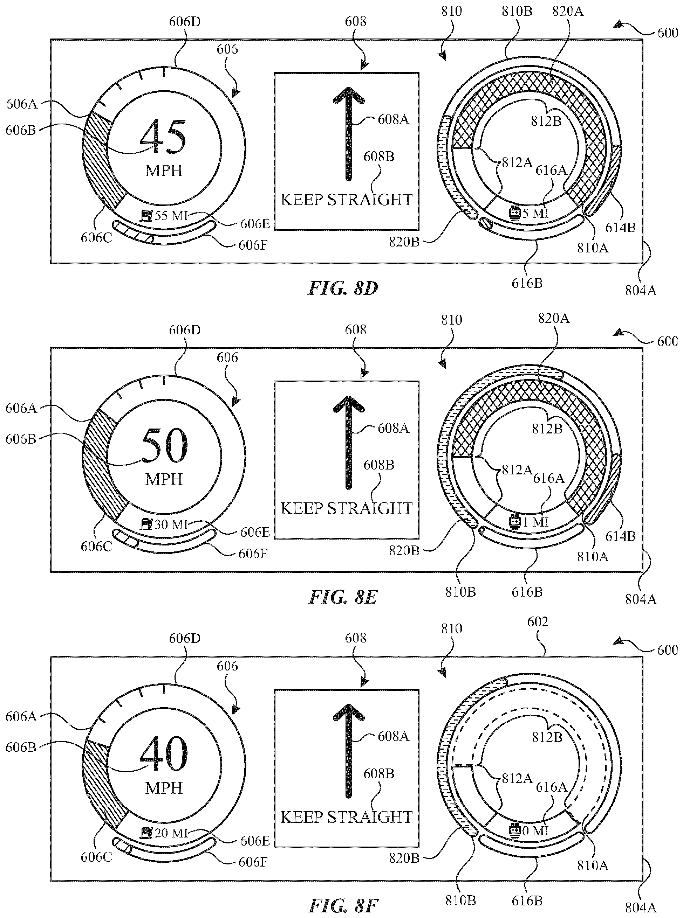

At FIG. 8D, computer system 600 detects a change in speed and power (e.g., in response to the vehicle continuing to accelerate as the user presses the accelerator pedal of the vehicle) and, in response, has updated instrument cluster 804A. At FIG. 8D, the vehicle is traveling at 45mph, as indicated by numeric speed indicator 606B and first part 606C filling the path of speedometer gauge 606. At FIG. 8D, information gauge 608 displays instructions 608A and 608B to keep straight. At FIG. 8D, electric indicator 810A has changed what portion is filled in by expanding fill 820A in the clockwise direction to fill all of second segment 812B to indicate an amount of power in second segment 812B that is proportionate to the amount of electric power being used (e.g., from the one or more batteries of the vehicle and/or being applied to one or more electric motors of the vehicle). Fill 820B fills a portion of (e.g., less than all of) combustion indicator 810B to indicate an amount of power in combustion indicator 810B that is proportionate to the amount of combustion power being used (e.g., RPM of a combustion engine). As shown in FIG. 8D, electric indicator 810A indicates that electric power is not being generated by not filling any portion of first segment 812A and indicates how much electric power is being used (e.g., 4kW) based on how much of second segment 812B is filled. Combustion indicator 810B indicates how much combustion power is being used by filling a proportionate amount of combustion indicator 810B. In this example, power from one or more batteries of the vehicle are being used to power one or more electric motors of the vehicle to drive the wheels of the vehicle and the power of one or more combustion engines is being used to drive one or more wheels of the vehicle and/or to produce electricity to drive one or more wheels of the vehicle (e.g., via one or more electric motors). As shown in FIG. 8D, in response to determining that power of the one or more combustion engines is being used (and, accordingly, fill 820B in combustion indicator 810B indicating some power in combustion indicator 810B), computer system 600 displays redline region 614B to indicate a redline of the one or more combustion engines (whereas redline region 614B is not displayed in the user interfaces of FIGS. 8A-8C). As battery charge is used, range 616A and battery gauge 616B are updated to indicate reduced values, as shown in FIG. 8D. As the fuel is used (e.g., because the one or more combustion engines are producing power), range 606E and fuel gauge 606F are updated to show reduced values in FIG. 8D, as compared to FIG. 8C.

At FIG. 8E, computer system 600 detects a change in speed and power (e.g., in response to the vehicle continuing to accelerate as the user presses the accelerator pedal of the vehicle) and, in response, has updated instrument cluster 804A. As battery charge is used, range 616A and battery gauge 616B are updated to indicate reduced values, as shown in FIG. 8E. As the fuel is used (e.g., because the one or more combustion engines are producing power), range 606E and fuel gauge 606F are updated to show reduced values in FIG. 8E.

At FIG. 8F, computer system 600 detects a change in speed and power (e.g., in response to the vehicle decelerating when a user reduces how much the accelerator pedal of the vehicle is pressed and/or when the vehicle automatically slows) and, in response, has updated instrument cluster 804A. Computer system 600 also detects that the battery level has fallen to below a threshold battery level (e.g., has fallen to zero range, 0%, and/or 0kWh) and, in response, de-emphasizes at least a portion of electric indicator 810A to indicate that electric power cannot be used to accelerate the vehicle. In some embodiments, as shown in FIG. 8F, computer system 600 de-emphasizes the portion of electric indicator 810A by graying out second segment 812B (e.g., without graying out first segment 812A). As the fuel is used (e.g., because the one or more combustion engines are producing power), range 606E and fuel gauge 606F are updated to show reduced values, as in FIG. 8F. In some embodiments, first segment 812A is not grayed out because the vehicle can still produce electric power to store in the battery (e.g., via regenerative braking).

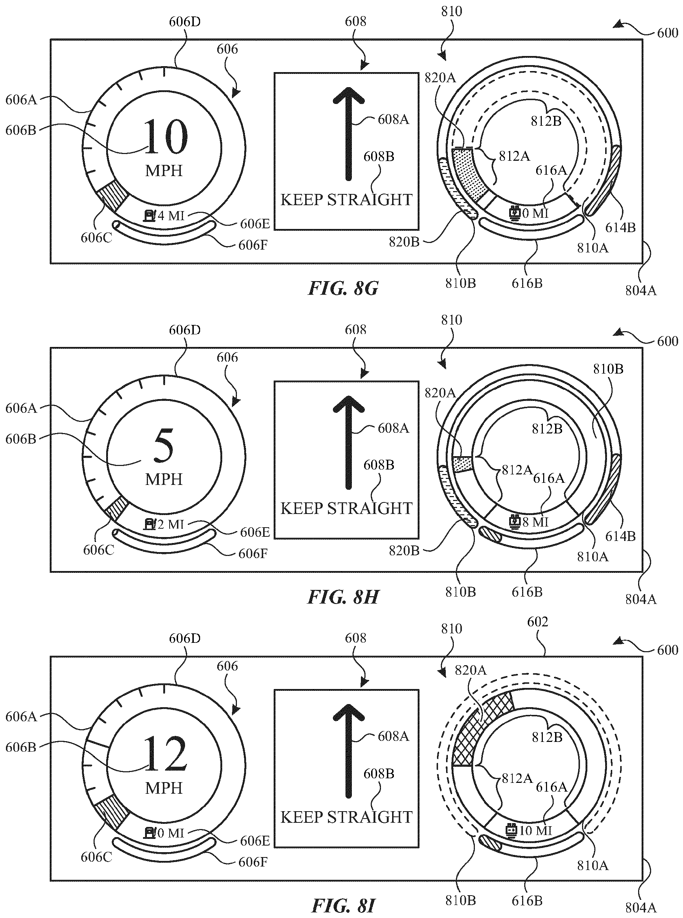

At FIG. 8G, computer system 600 detects a change in speed and power (e.g., in response to the vehicle decelerating when a user reduces how much the accelerator pedal of the vehicle is pressed and/or when the vehicle automatically slows) and, in response, has updated instrument cluster 804A. Computer system 600 continues to display first segment 812B grayed out because the battery level is below the threshold battery level. As shown in FIG. 8G, electric indicator 810A indicates the amount of electric power that is being generated (and/or stored in the battery) by filling in (e.g., via fill 820A) a proportionate amount of first segment 812A and indicates that electric power is not being used by not filling any portion of second segment 812B. As the fuel is used (e.g., because the one or more combustion engines are producing power), range 606E and fuel gauge 606F are updated to show reduced values, as in FIG. 8G.

At FIG. 8H, computer system 600 detects a change in speed and power (e.g., in response to the vehicle decelerating when a user reduces how much the accelerator pedal of the vehicle is pressed and/or when the vehicle automatically slows) and, in response, has updated instrument cluster 804A. Computer system 600 updates display of first segment 812B to not be grayed out because the battery level is no longer below the threshold battery level (e.g., is more than 0kWh), thereby indicating that battery power is available to accelerate the vehicle. As shown in FIG. 8H, electric indicator 810A indicates the amount of electric power that is being generated (and/or stored in the battery) by filling in (e.g., via fill 820A) a proportionate amount of first segment 812A and indicates that electric power is not being used by not filling any portion of second segment 812B. As the battery is recharged, range 616A and battery gauge 616B are updated to indicate increased values, as shown in FIG. 8H. As the fuel is used (e.g., because the one or more combustion engines are producing power), range 606E and fuel gauge 606F are updated to show reduced values, as in FIG. 8H.

At FIG. 8I, computer system 600 detects a change in speed and power (e.g., in response to the vehicle accelerating as the user presses the accelerator pedal of the vehicle) and, in response, has updated instrument cluster 804A. Computer system 600 updates display of combustion indicator 810B to be grayed out because the fuel level has fallen to below a threshold fuel level (e.g., is at 0%, 0 gallons, or 0.2 gallons), thereby indicating that combustion power is not available to accelerate the vehicle. As shown in FIG. 8I, electric indicator 810A indicates the amount of electric power that is being using to accelerate the vehicle. As the battery is recharged, range 616A and battery gauge 616B are updated to indicate increased values, as shown in FIG. 8I.

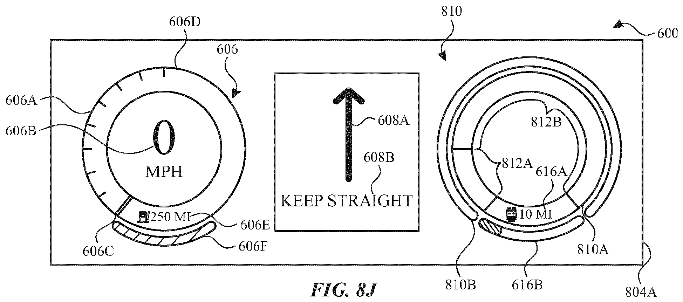

At FIG. 8J, computer system 600 detects a change in speed and power and, in response, has updated instrument cluster 804A. As shown in FIG. 8J, the gas tank of the vehicle has been refilled (e.g., at a gas station) and, in response, range 606E and fuel gauge 606F are updated to show increased values in FIG. 8J based on the amount of gas in the gas tank. Because the fuel level (gas level) is no longer below the threshold fuel level, computer system 600 no longer grays out combustion indicator 810B, thereby indicating that combustion power is available to accelerate the vehicle.

FIG. 9 is a flow diagram illustrating methods of managing user interfaces for hybrid gauges, in accordance with some embodiments. Method 900 is performed at a computer system (e.g., 100, 300, 500, and/or 600) (e.g., a smartphone, a wearable (e.g., head-mounted and/or wrist-worn) device, and/or of a vehicle (e.g., an automobile, a boat, or an airplane)), wherein the computer system (e.g., 600) is in communication with one or more display generation components (e.g., 602) (e.g., one or more display generation components of the vehicle, one or more displays set within a front console of the vehicle, one or more displays positioned ahead of/in front of a driver's seat of the vehicle, one or more heads-up displays, one or more display drivers, and/or one or more displays of a wearable device). In some embodiments, the computer system is in communication with a vehicle (e.g., an automobile, a boat, or an airplane) (e.g., is integrated into the vehicle, is in wired communication with the vehicle, and/or is in wireless communication with the vehicle). Some operations in method 900 are, optionally, combined, the orders of some operations are, optionally, changed, and some operations are, optionally, omitted.

As described below, method 900 provides an intuitive way for managing user interfaces for hybrid gauges. The method reduces the cognitive burden on a user that views gauges to determine the state of a vehicle and/or computer system of the vehicle, thereby creating a more efficient human-machine interface. For battery-operated computing devices, enabling a user to managing user interfaces for hybrid gauges faster and more efficiently conserves power and increases the time between battery charges.

The computer system (e.g., 600) displays (902) (e.g., in response to detecting an event), via the one or more display generation components (e.g., 602) and as part of an instrument cluster (e.g., 804A) (e.g., of the vehicle and/or for the vehicle), a power gauge (e.g., 810A) (e.g., an electric power meter (e.g., corresponding to and/or indicating watts being output and/or stored by a battery or watts being used and/or generated by an electric motor)) that corresponds to an electric motor (and/or a battery) (e.g., of the vehicle), including: in accordance with a determination that a charge level of a battery (e.g., that powers the electric motor) is above a threshold charge level (e.g., is above 0 kWh, 3 kWh, and/or 10kWh, and/or is above 0%, 3%, and/or 10%) (e.g., as in FIGS. 8A-8E and 8H-8J), the computer system (e.g., 600) displays (904) the power gauge (e.g., 810A) with a first visual appearance (e.g., a first color scheme, a first size, a first thickness, a first color, and/or a first shape); and in accordance with a determination that the charge level of the battery (e.g., that powers the electric motor) is not above the threshold charge level (e.g., is at 0 kWh, is at or below 3kWh, is at or below 10kWh, is at 0%, is at or below 3%, and/or is at or below 10%) (e.g., as in FIGS. 8F-8G), the computer system (e.g., 600) displays (906) the power gauge (e.g., 810A) with a second visual appearance (e.g., a second color scheme, a second size, a second thickness, a second color, and/or a second shape) that is different from the first visual appearance.

In some embodiments, the computer system (e.g., 600) concurrently displays (e.g., in response to detecting an event) with the power gauge (e.g., 810A), via the one or more display generation components and as part of the instrument cluster, a tachometer (e.g., 810B) (e.g., corresponding to and/or indicating revolutions per minute (RPM) of the combustion engine) that corresponds to a combustion engine (e.g., of the vehicle), including: in accordance with a determination that a fuel level (e.g., of a fuel tank that powers the combustion engine) is above a threshold fuel level (e.g., is above 0 gallons, .3 gallons, 2 gallons, and/or is above 0%, 5%, and/or 8% of the gas tank) (e.g., as in FIGS. 8A-8H and 8J), the computer system (e.g., 600) displays the tachometer (e.g., 810B) with a third visual appearance (e.g., a third color scheme, a third size, a third thickness, a third color, and/or a third shape); and in accordance with a determination that the fuel level is not above the threshold fuel level (e.g., is empty, is at or below .3 gallons, is at or below 2 gallons, and/or is at 0%, is at or below 3%, and/or is at or below 10% of the gas tank) (e.g., as in FIG. 8I), the computer system (e.g., 600) displays the tachometer (e.g., 810B) with a fourth visual appearance (e.g., a fourth color scheme, a fourth size, a fourth thickness, a fourth color, and/or a fourth shape) that is different from the third visual appearance.

Note that details of the processes described above with respect to method 900 (e.g., FIG. 9) are also applicable in an analogous manner to the methods described above and below. For example, methods 700, 1100, 1300, and/or 1400 optionally include one or more of the characteristics of the various methods described above with reference to method 900. For example, the computer system is the same computer system. For another example, the speedometer is the same speedometer.

FIGS. 10A-10P illustrate example user interfaces for managing the visual emphasis of gauges, in accordance with some embodiments. The user interfaces in FIGS. 10A-10P are used to illustrate the processes described below, including the processes in FIG. 11.

FIG. 10A illustrates computer system 600 with display 602. Computer system 600 is displaying, via display 602, instrument cluster 1004A (also referred to as a dashboard) of a vehicle (e.g., a car, an airplane, and/or a boat). In some embodiments, instrument cluster 1004A includes some or all the features of instrument clusters 604A, 604B, 604C, and/or 804A. In some embodiments, computer system 600 is integrated into a vehicle and/or is in communication with a vehicle. In some embodiments, computer system 600 includes multiple displays (e.g., each gauge 606, 608, and 810 is displayed on a different display and/or a gauge is split amongst multiple displays). In some embodiments, computer system 600 is part of a user-wearable device, such as a headset. In some embodiments, computer system 600 includes one or more features of electronic devices 100, 300, and 500, as described above.

At FIG. 10A, computer system 600 displays instrument cluster 1004A that includes speedometer gauge 606, information gauge 608, and power gauges 810. Speedometer gauge 606 provides an indication of speed, such as a current speed of travel of the vehicle or of computer system 600. Speedometer gauge 606 includes a path in the shape of an arc. In some embodiments, the path of speedometer gauge 606 is not in the shape of an arc and is, for example, a straight line or another shape. First (filled) part 606C along the path of speedometer gauge 606 indicates a speed (e.g., of the vehicle and/or of computer system 600). Speedometer gauge 606 indicates the speed of the vehicle in two ways: filling first part 606C of the path without filling a second (unfilled) part 606D of the path and numeric speed indicator 606B (e.g., in mph or kph). As the speed changes, first (filled) part 606C moves (e.g., changes in size and/or advances) to fill more or less of the path of speedometer gauge 606 to indicate the speed. The vehicle's range using gas (for one or more combustion engines) is displayed as range 606E. Fuel gauge 606F indicates how full the gas tank is (e.g., the gas tank that stores gas for use by the one or more combustion engines).

Information gauge 608 displays navigation instructions 608A-608B. Instruction 608A is a graphical element, such as a left arrow, that indicates an upcoming navigation instruction. Instruction 608B is a textual element, such as "turn left", that indicates the upcoming navigation instruction.

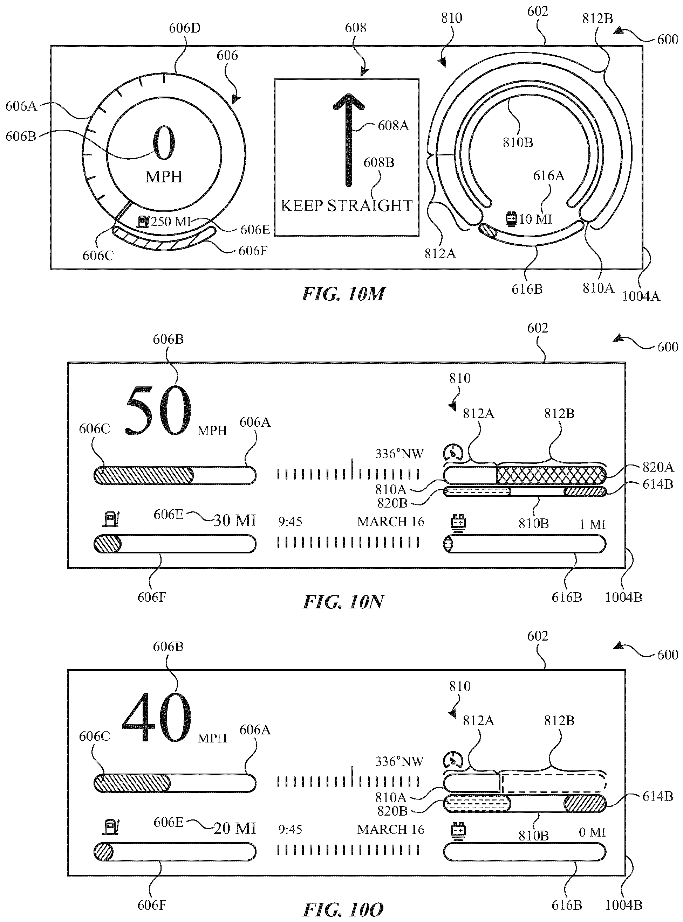

Power gauge 810 is a hybrid power gauge, as it indicates both an amount of electric power (e.g., in kW) and an amount of combustion power (e.g., in RPM). In some embodiments, power gauge 810 includes two (e.g., distinct and/or combined) gauges and/or indicators, with electric indicator 810A indicating an amount of electric power and combustion indicator 810B indicating an amount of combustion power (e.g., RPM of the combustion engine). At FIG. 10A, electric indicator 810A and combustion indicator 810B are each in the shape of an arc. In some embodiments, electric indicator 810A and combustion indicator 810B are not in the shape of an arc and are, for example, a straight line or another shape, such as in FIGS. 10N-10P. At FIG. 10A, first segment 812A of electric indicator 810A corresponds to an amount of electric power (e.g., kW) being generated and/or stored. For example, first segment 812A corresponds to an amount of power that is being generated by one or more electric motors being turned by one or more wheels of the vehicle during regenerative braking. For another example, first segment 812A corresponds to an amount of power that is being stored in one or more batteries of the vehicle. Second segment 812B corresponds to an amount of electric power being used to propel the vehicle. For example, second segment 812B corresponds to an amount of electric power (e.g., kW) being converted to mechanical power via one or more electric motors. In some embodiments, second segment 812B includes delimiters to indicate different regions of second segment 812B. In some embodiments, each delimiter indicates a kW. Combustion indicator 810B corresponds to an amount of power of one or more combustion engines (e.g., a 2-, 4-, 6-, or 8-cylinder gas engine). For example, combustion indicator 810B corresponds to an amount of power being produced by the one or more combustion engines. For another example, combustion indicator 810B indicates the revolutions per minute (RPM) of the engine (e.g., the higher the RPM, the higher the power being output by the engine and the lower the RPM, the lower the power being output by the engine). In some embodiments, power gauge 810 is a hybrid gauge that indicates (e.g., during vehicle operation) amounts of (and/or transitions among) electric power regeneration, electric power usage, and combustion power usage.

At FIG. 10A, electric indicator 810A indicates that power is not being generated and/or stored and/or that power is not being used (e.g., to propel the vehicle and/or to rotate the electronic motors), and combustion indicator 810B indicates that the one or more combustion engines are not producing power (e.g., are at 0 RPM). At FIG. 10A, the vehicle's range using electricity (for one or more electric motors) is displayed as range 616A. Battery gauge 616B indicates how full one or more batteries are.

At FIG. 10A, based on the one or more batteries of the one or more electric motors being charged above a threshold battery level (e.g., as indicated by 616A-616B) and the fuel level being above a threshold fuel level (e.g., as indicated by 606E-606F), computer system 600 displays electric indicator 810A emphasized as compared to combustion indicator 810B. Thus, when computer system 600 determines that both drive types (e.g., one or more electric motors and one or more combustion engines) are available (e.g. have sufficient battery and fuel and/or have more than the threshold battery level and more than the threshold fuel level), computer system 600 visually emphasizes electric indicator 810A as compared to combustion indicator 810B. In some embodiments, as shown in FIG. 10A, computer system 600 visually emphasizes electric indicator 810A as compared to combustion indicator 810B by displaying electric indicator 810A with a wider path (e.g., along 812A-812B) as compared to combustion indicator 810B.

At FIG. 10B, computer system 600 detects a change in speed and power (e.g., in response to the vehicle accelerating when a user presses an accelerator pedal of the vehicle) and, in response, has updated instrument cluster 1004A. At FIG. 10B, the vehicle is traveling at 25mph, as indicated by numeric speed indicator 606B and first part 606C filling the path of speedometer gauge 606. At FIG. 10B, information gauge 608 displays instructions 608A and 608B to keep straight. At FIG. 10B, fill 820A moves to fill in a portion of electric indicator 810A by expanding in a clockwise direction starting at the boundary between first segment 812A and second segment 812B. As shown in FIG. 10B, electric indicator 810A indicates that electric power is not being generated by not filling any portion of first segment 812A and indicates how much electric power is being used based on how much of second segment 812B is filled by fill 820A. As shown in FIG. 10B, combustion indicator 810B indicates that combustion power is not being used by not filling any portion of combustion indicator 810B. In this example, power from one or more batteries of the vehicle are being used to power one or more electric motors of the vehicle to drive the wheels of the vehicle (without using the power of a combustion engine). As battery charge is used, range 616A and battery gauge 616B are updated to indicate reduced values, as shown in FIG. 10B. Because the combustion engine is not producing power, range 606E and fuel gauge 606F remain unchanged in FIG. 10B, as compared to FIG. 10A. At FIG. 10B, because both drive types (e.g., one or more electric motors and one or more combustion engines) are available (e.g. have sufficient battery and fuel and/or have more than the threshold battery level and more than the threshold fuel level), computer system 600 continues to visually emphasize electric indicator 810A as compared to combustion indicator 810B (e.g., width of electric indicator 810A is greater than the width of combustion indicator 810B).

At FIG. 10C, computer system 600 detects a change in speed and power (e.g., in response to the vehicle decelerating when a user reduces how much the accelerator pedal of the vehicle is pressed and/or when the vehicle automatically slows) and, in response, has updated instrument cluster 1004A. At FIG. 10C, the vehicle is traveling at 15mph, as indicated by numeric speed indicator 606B and first part 606C filling the path of speedometer gauge 606. At FIG. 10C, information gauge 608 displays instructions 608A and 608B to keep straight. At FIG. 10C, electric indicator 810A has changed such that fill 820A has contracted in a counterclockwise direction until reaching the boundary between first segment 812A and second segment 812B, and then expanding in the counterclockwise direction starting from the boundary between first segment 812A and second segment 812B to indicate an amount of power in first segment 812A. As shown in FIG. 10C, electric indicator 810A indicates the amount of electric power that is being generated by filling in a proportionate amount of first segment 812A and indicates that electric power is not being used by not filling any portion of second segment 812B. Combustion indicator 810B indicates that combustion power is not being used by not filling any portion of combustion indicator 810B. In this example, power is being generated by regenerative braking and is being stored in one or more batteries of the vehicle. In some embodiments, in accordance with a determination that electric power is being generated (e.g., via regenerative braking) and/or stored, computer system 600 displays an additional indication of electric power being generated and/or stored as part of range 616A (e.g., a lightning bolt is displayed inside an image of a battery to indicate that the battery is charging). As the battery is charged, range 616A and battery gauge 616B are updated to indicate increased values, as shown in FIG. 10C. Because the combustion engine is not producing power, range 606E and fuel gauge 606F remains unchanged in FIG. 10C as compared to FIG. 10B. At FIG. 10C, because both drive types (e.g., one or more electric motors and one or more combustion engines) are available (e.g. have sufficient battery and fuel and/or have more than the threshold battery level and more than the threshold fuel level), computer system 600 continues to visually emphasize electric indicator 810A as compared to combustion indicator 810B (e.g., width of electric indicator 810A is greater than the width of combustion indicator 810B).

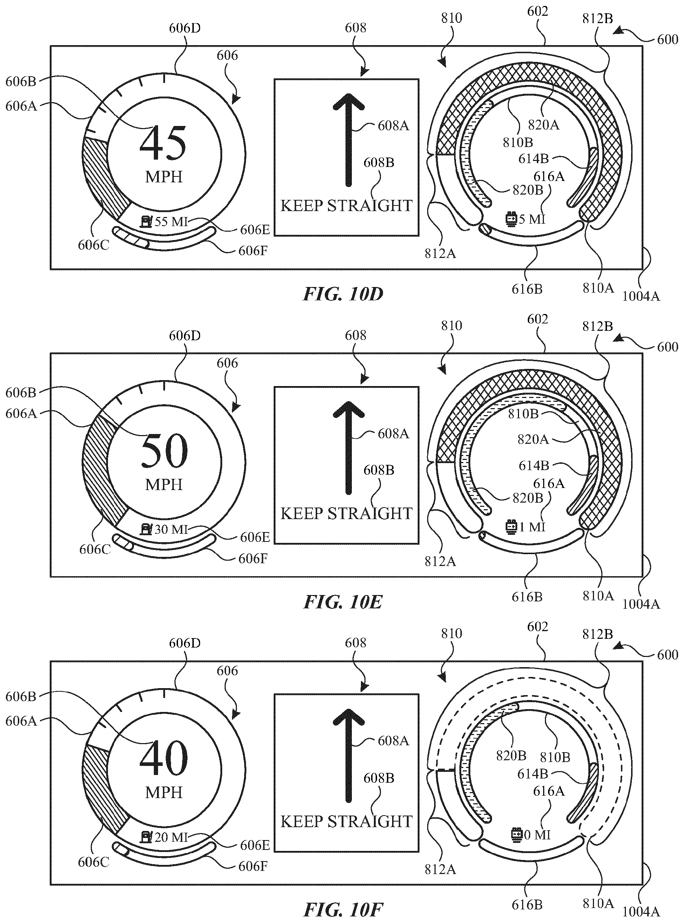

At FIG. 10D, computer system 600 detects a change in speed and power (e.g., in response to the vehicle continuing to accelerate as the user presses the accelerator pedal of the vehicle) and, in response, has updated instrument cluster 1004A. At FIG. 10D, the vehicle is traveling at 45mph, as indicated by numeric speed indicator 606B and first part 606C filling the path of speedometer gauge 606. Information gauge 608 displays instructions 608A and 608B to keep straight. Electric indicator 810A has changed what portion is filled in by expanding fill 820A in the clockwise direction to fill all of second segment 812B to indicate an amount of power in second segment 812B that is proportionate to the amount of electric power being used (e.g., from the one or more batteries of the vehicle and/or being applied to one or more electric motors of the vehicle). Fill 820B fills a portion of (e.g., less than all of) combustion indicator 810B to indicate an amount of power in combustion indicator 810B that is proportionate to the amount of combustion power being used (e.g., RPM of a combustion engine). As shown in FIG. 10D, electric indicator 810A indicates that electric power is not being generated by not filling any portion of first segment 812A and indicates how much electric power is being used (e.g., 4kW) based on how much of second segment 812B is filled. Combustion indicator 810B indicates how much combustion power is being used by filling a proportionate amount of combustion indicator 810B. In this example, power from one or more batteries of the vehicle are being used to power one or more electric motors of the vehicle to drive the wheels of the vehicle and the power of one or more combustion engines is being used to drive one or more wheels of the vehicle and/or to produce electricity to drive one or more wheels of the vehicle (e.g., via one or more electric motors). As shown in FIG. 10D, in response to determining that power of the one or more combustion engines is being used (and, accordingly, fill 820B in combustion indicator 810B indicating some power in combustion indicator 810B), computer system 600 displays redline region 614B to indicate a redline of the one or more combustion engines (whereas redline region 614B is not displayed in the user interfaces of FIGS. 10A-10C). As battery charge is used, range 616A and battery gauge 616B are updated to indicate reduced values, as shown in FIG. 10D, as compared to FIG. 10C. As the fuel is used (e.g., because the one or more combustion engines are producing power), range 606E and fuel gauge 606F are updated to show reduced values in FIG. 10D, as compared to FIG. 10C. At FIG. 10D, because both drive types (e.g., one or more electric motors and one or more combustion engines) are available (e.g. have sufficient battery and fuel and/or have more than the threshold battery level and more than the threshold fuel level), computer system 600 continues to visually emphasize electric indicator 810A as compared to combustion indicator 810B (e.g., width of electric indicator 810A is greater than the width of combustion indicator 810B).

At FIG. 10E, computer system 600 detects a change in speed and power (e.g., in response to the vehicle continuing to accelerate as the user presses the accelerator pedal of the vehicle) and, in response, has updated instrument cluster 1004A. As battery charge is used, range 616A and battery gauge 616B are updated to indicate reduced values, as shown in FIG. 10E. As the fuel is used (e.g., because the one or more combustion engines are producing power), range 606E and fuel gauge 606F are updated to show reduced values in FIG. 10E. At FIG. 10E, because both drive types (e.g., one or more electric motors and one or more combustion engines) are available (e.g. have sufficient battery and fuel and/or have more than the threshold battery level and more than the threshold fuel level), computer system 600 continues to visually emphasize electric indicator 810A as compared to combustion indicator 810B (e.g., width of electric indicator 810A is greater than the width of combustion indicator 810B).

At FIG. 10F, computer system 600 detects that the battery level has fallen to below a threshold battery level (e.g., has fallen to zero range, 0%, and/or 0kWh) and, in response, visually de-emphasizes (e.g., via an animation) at least a portion of electric indicator 810A relative to combustion indicator 810B to indicate that electric power cannot be used to accelerate the vehicle and that combustion power can be used. In some embodiments, as shown in FIGS. 10F-10H, computer system 600 visually de-emphasizes the portion of electric indicator 810A by graying out (e.g., as indicated by dashed lines) second segment 812B (e.g., without graying out first segment 812A) and/or changing the width(s) of electric indicator 810A and/or combustion indicator 810B. As the fuel is used (e.g., because the one or more combustion engines are producing power), range 606E and fuel gauge 606F are updated to show reduced values, as in FIG. 10F. In some embodiments, first segment 812A is not grayed out because the vehicle can still produce electric power to store in the battery (e.g., via regenerative braking).

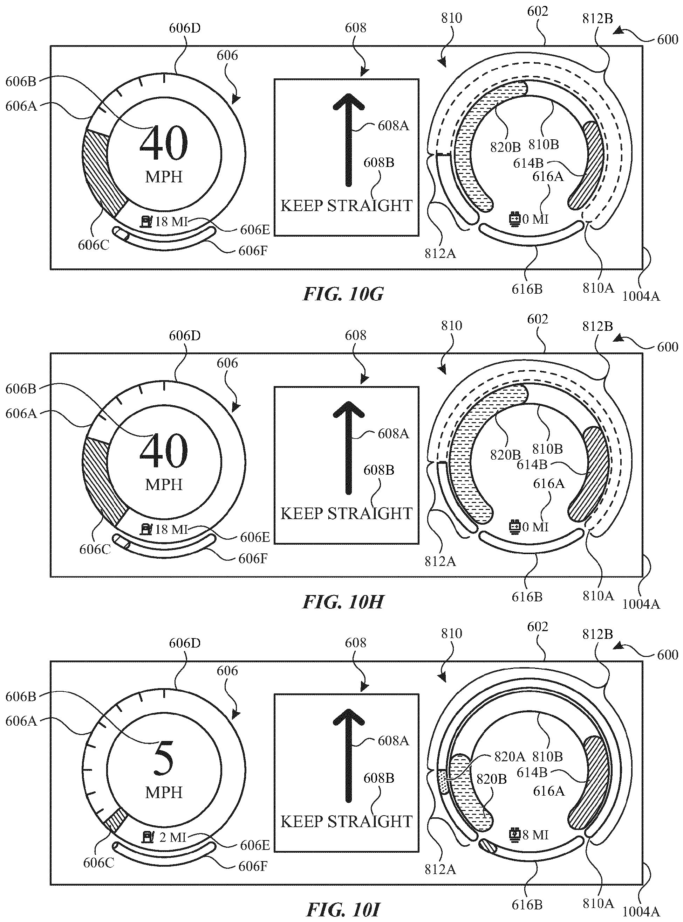

FIG. 10G continues the illustration of the animation of visually de-emphasizing at least a portion of electric indicator 810A relative to combustion indicator 810B. At FIG. 10G, computer system 600 has reduced the width of electric indictor 810A and increased the width of combustion indicator 810B, while continuing to gray out second segment 812B.

At FIG. 10H, computer system 600 has finished the animation of visually de-emphasizing at least a portion of electric indicator 810A relative to combustion indicator 810B. At FIG. 10H, computer system 600 has further reduced the width of electric indictor 810A and further increased the width of combustion indicator 810B, thereby making the width of combustion indicator 810B greater than the width of electric indicator 810A, while continuing to gray out second segment 812B. This provides visual feedback to the user of computer system 600 that the one or more electric motors are not available to produce power (e.g., because the one or more batteries have a battery level that is below the threshold battery level).

At FIG. 10I, computer system 600 detects a change in speed and power (e.g., in response to the vehicle decelerating when a user reduces how much the accelerator pedal of the vehicle is pressed and/or when the vehicle automatically slows) and, in response, has updated instrument cluster 1004A. As indicated by range 616A and battery gauge 616B, the one or more batteries of the vehicle have charged (and, therefore, have some charge). Computer system 600 determines that the charge level of the one or more batteries exceeds the threshold charge level (e.g., is more than 0kWh). Accordingly, computer system 600 initiates a process to visually emphasize electric indicator 810A relative to combustion indicator 810B (e.g., because electric power is the preferred power usage). To visually emphasize electric indicator 810A relative to combustion indicator 810B, computer system 600 updates display of first segment 812B to not be grayed out, thereby indicating that battery power is available to accelerate the vehicle, and changes relative widths of electric indicator 810A and combustion indicator 810B, as shown in FIGS. 10I-10K. At FIG. 10I, electric indicator 810A indicates the amount of electric power that is being generated (and/or stored in the battery) by filling in (e.g., via fill 820A) a proportionate amount of first segment 812A and indicates that electric power is not being used by not filling any portion of second segment 812B. As the battery is recharged, range 616A and battery gauge 616B are updated to indicate increased values, as shown in FIG. 10I. As the fuel is used (e.g., because the one or more combustion engines are producing power), range 606E and fuel gauge 606F are updated to show reduced values, as in FIG. 10I.

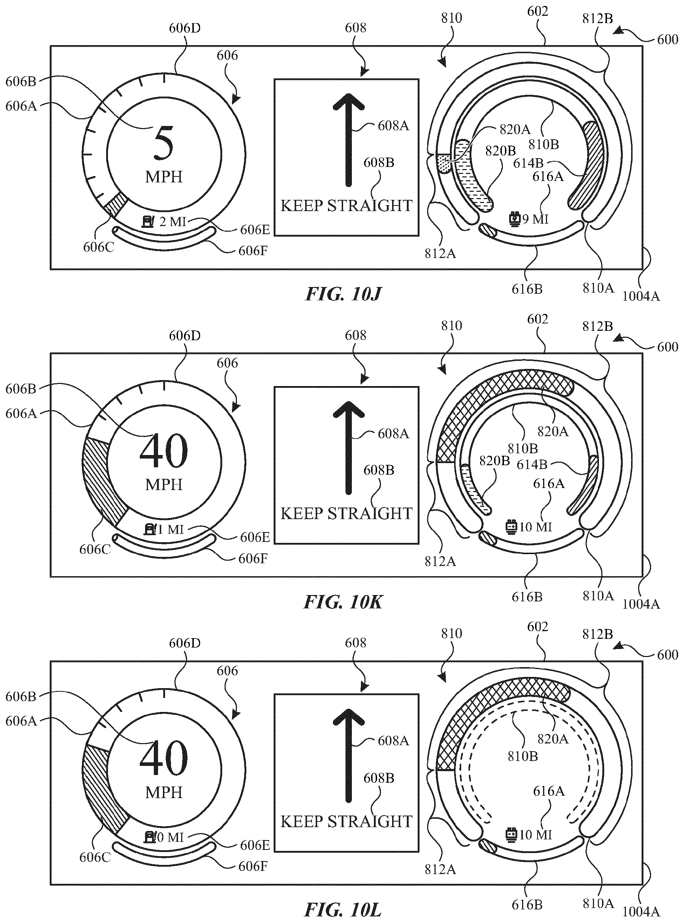

FIG. 10J continues the illustration of the animation of visually emphasizing electric indicator 810A relative to combustion indicator 810B. At FIG. 10J, computer system 600 has increased the width of electric indictor 810A and decreased the width of combustion indicator 810B.

At FIG. 10K, computer system 600 has finished the animation of visually emphasizing electric indicator 810A relative to combustion indicator 810B. At FIG. 10K, computer system 600 has further increased the width of electric indictor 810A and further decreased the width of combustion indicator 810B, thereby making the width of electric indicator 810A greater than the width of combustion indicator 810B. This provides visual feedback to the user of computer system 600 that the one or more electric motors are available to produce power (e.g., because the one or more batteries have a battery level that is above the threshold battery level).

At FIG. 10K, computer system 600 detects a change in speed and power (e.g., in response to the vehicle accelerating when a user presses an accelerator pedal of the vehicle) and, in response, has updated instrument cluster 1004A. At FIG. 10K, the vehicle is traveling at 40mph, as indicated by numeric speed indicator 606B and first part 606C filling the path of speedometer gauge 606. At FIG. 10K, information gauge 608 displays instructions 608A and 608B to keep straight. Fill 820A moves to fill in a portion of electric indicator 810A by contracting in a clockwise direction before expanding in a clockwise direction starting at the boundary between first segment 812A and second segment 812B. As shown in FIG. 10K, electric indicator 810A indicates that electric power is not being generated by not filling any portion of first segment 812A and indicates how much electric power is being used based on how much of second segment 812B is filled by fill 820A. As shown in FIG. 10K, combustion indicator 810B indicates that combustion power is being used. In this example, power from one or more batteries of the vehicle are being used to power one or more electric motors of the vehicle to drive the wheels of the vehicle while also using the power of a combustion engine. As battery charge is used, range 616A and battery gauge 616B are updated to indicate reduced values, as shown in FIG. 10K. As the fuel is used (e.g., because the one or more combustion engines are producing power), range 606E and fuel gauge 606F are updated to show reduced values in FIG. 10K. At FIG. 10K, because both drive types (e.g., one or more electric motors and one or more combustion engines) are available (e.g. have sufficient battery and fuel and/or have more than the threshold battery level and more than the threshold fuel level), computer system 600 continues to visually emphasize electric indicator 810A as compared to combustion indicator 810B (e.g., width of electric indicator 810A is greater than the width of combustion indicator 810B).

At FIG. 10L, computer system 600 detects a change in power and, in response, has updated instrument cluster 1004A. As shown in FIG. 10L, the gas tank of the vehicle has become empty. Computer system 600 detects that the fuel level has fallen to below the threshold fuel level (e.g., fuel level is at 0%, 0 gallons, or 0.2 gallons), thereby indicating that combustion power is not available to accelerate the vehicle, and in response visually de-emphasizes combustion indicator 810B relative to electric indicator 810A, such as by graying out combustion indicator 810B, as indicated by the dashed lines of combustion indicator 810B. De-emphasizing combustion indicator 810B provides the user of computer system 600 with visual feedback that the one or more combustion engines may not be available for use to accelerate the vehicle.

At FIG. 10M, computer system 600 detects a change in power, speed, and/or fuel level and, in response, has updated instrument cluster 1004A. As shown in FIG. 10M, the gas tank of the vehicle has been refilled (e.g., at a gas station) and, in response, range 606E and fuel gauge 606F are updated to show increased values in FIG. 10M based on the amount of gas in the gas tank. Because the fuel level (gas level) is no longer below the threshold fuel level, computer system 600 ceases graying out combustion indicator 810B, thereby indicating that combustion power is available to accelerate the vehicle.

FIGS. 10N-10P illustrate example user interfaces for managing the visual emphasis of gauges, in accordance with some embodiments. For example, computer system 600 is displaying, via display 602, instrument cluster 1004B (also referred to as a dashboard) of a vehicle (e.g., a car, an airplane, and/or a boat). In some embodiments, instrument cluster 1004B includes some or all the features of instrument clusters 604A, 604B, 604C, 804A, and/or 1004A. In some embodiments, computer system 600 is integrated into a vehicle and/or is in communication with a vehicle. In some embodiments, computer system 600 includes multiple displays (e.g., each gauge 606, 608, and 810 is displayed on a different display and/or a gauge is split amongst multiple displays). In some embodiments, computer system 600 is part of a user-wearable device, such as a headset. In some embodiments, computer system 600 includes one or more features of electronic devices 100, 300, and 500, as described above. In some embodiments, FIGS. 10N-10P illustrate the same/similar scenario as FIGS. 10E-10G. Similar to instrument cluster 1004A, computer system 600 manages the visual emphasis of electric indicator 810A and combustion indicator 810B, which are optionally part of power gauge 810, as part of instrument cluster 1004B. At FIGS. 10N-10P, electric indicator 810A and combustion indicator 810B include straight paths and are parallel to each other.

At FIG. 10N, based on the one or more batteries of the one or more electric motors being charged above a threshold battery level (e.g., as indicated by 616A-616B) and the fuel level being above a threshold fuel level (e.g., as indicated by 606E-606F), computer system 600 displays electric indicator 810A emphasized as compared to combustion indicator 810B. Thus, when computer system 600 determines that both drive types (e.g., one or more electric motors and one or more combustion engines) are available (e.g. have sufficient battery and fuel and/or have more than the threshold battery level and more than the threshold fuel level), computer system 600 visually emphasizes electric indicator 810A as compared to combustion indicator 810B. In some embodiments, as shown in FIG. 10N, computer system 600 visually emphasizes electric indicator 810A as compared to combustion indicator 810B by displaying electric indicator 810A with a wider path (e.g., along 812A-812B) as compared to combustion indicator 810B.

At FIG. 10O, computer system 600 detects that the battery level has fallen to below a threshold battery level (e.g., has fallen to zero range, 0%, and/or 0kWh) and, in response, visually de-emphasizes (e.g., via an animation) at least a portion of electric indicator 810A relative to combustion indicator 810B to indicate that electric power cannot be used to accelerate the vehicle and that combustion power can be used. In some embodiments, as shown in FIGS. 10O-10P, computer system 600 visually de-emphasizes the portion of electric indicator 810A by graying out (e.g., as indicated by dashed lines) second segment 812B (e.g., without graying out first segment 812A) and/or changing the width(s) of electric indicator 810A and/or combustion indicator 810B. At FIG. 10O, as part of the animation to visually de-emphasize electric indicator 810A, computer system 600 has reduced the width of electric indicator 810A and increased the width of combustion indicator 810B. In some embodiments, first segment 812A is not grayed out because the vehicle can still produce electric power to store in the battery (e.g., via regenerative braking).

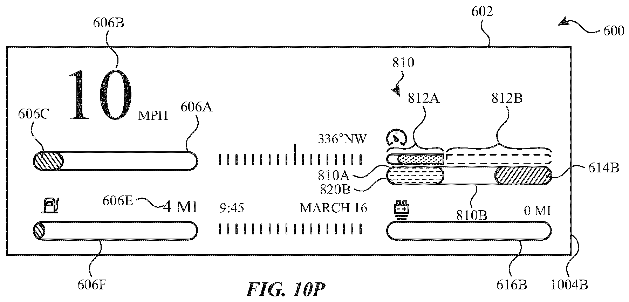

FIG. 10P continues the illustration of the animation of visually de-emphasizing at least a portion of electric indicator 810A relative to combustion indicator 810B. At FIG. 10P, computer system 600 has further reduced the width of electric indictor 810A and further increased the width of combustion indicator 810B, thereby making the width of combustion indicator 810B greater than the width of electric indicator 810A, while continuing to gray out second segment 812B. This provides visual feedback to the user of computer system 600 that the one or more electric motors are not available to produce power (e.g., because the one or more batteries have a battery level that is below the threshold battery level).

In some embodiments, when the charge level of the battery exceeds the threshold charge level, computer system 600 displays an animation for electric indicator 810A and combustion indicator 810B that is the reverse of the animation shown in FIGS. 10N-10P, thereby indicating that battery power is available to accelerate the vehicle.

FIG. 11 is a flow diagram illustrating methods of managing the visual emphasis of gauges, in accordance with some embodiments. Method 1100 is performed at a computer system (e.g., 100, 300, 500, and/or 600) (e.g., a smartphone, a wearable (e.g., head-mounted and/or wrist-worn) device, and/or of a vehicle (e.g., an automobile, a boat, or an airplane)), wherein the computer system (e.g., 600) is in communication with one or more display generation components (e.g., 602) (e.g., one or more display generation components of the vehicle, one or more displays set within a front console of the vehicle, one or more displays positioned ahead of/in front of a driver's seat of the vehicle, one or more heads-up displays, one or more display drivers, and/or one or more displays of a wearable device). In some embodiments, the computer system is in communication with a vehicle (e.g., an automobile, a boat, or an airplane) (e.g., is integrated into the vehicle, is in wired communication with the vehicle, and/or is in wireless communication with the vehicle). Some operations in method 1100 are, optionally, combined, the orders of some operations are, optionally, changed, and some operations are, optionally, omitted.

As described below, method 1100 provides an intuitive way for managing the visual emphasis of gauges. The method reduces the cognitive burden on a user that views gauges to determine the state of a vehicle and/or computer system of the vehicle, thereby creating a more efficient human-machine interface. For battery-operated computing devices, enabling a user to manage the visual emphasis of gauges faster and more efficiently conserves power and increases the time between battery charges.

The computer system (e.g., 600) concurrently displays (1102), via the one or more display generation components (e.g., 602) and as part of an instrument cluster (e.g., 1004A and/or 1004B) (e.g., of the vehicle and/or for the vehicle), a first power gauge (e.g., 810A) (e.g., that corresponds to an amount of electric power, such as of a battery and/or an electric motor configured to accelerate the vehicle and/or that corresponds to an amount of combustion power, such as a tachometer) and a second power gauge (e.g., 810B) (e.g., that corresponds to an amount of electric power, such as of a battery and/or an electric motor configured to accelerate the vehicle and/or that corresponds to an amount of combustion power, such as a tachometer) that is different from the first power gauge, wherein the first power gauge is visually emphasized relative to the second power gauge (e.g., as in FIGS. 10A-10E and 10N) (e.g., the first power gauge is more emphasized than the second power gauge, the first power gauge is emphasized and the second power gauge is not emphasized, and/or the second power gauge is de-emphasized and the first power gauge is not de-emphasized).

While displaying (e.g., as in FIGS. 10E and/or 10N) the first power gauge (e.g., 810A) visually emphasized relative to the second power gauge (e.g., 810B), the computer system (e.g., 600) detects (1104) that a set of one or more conditions is met.

In response to detecting that the set of one or more conditions is met, the computer system (e.g., 600) increases (1106) (e.g., as in FIGS. 10F-10H and 10O-10P) a visual emphasis of the second power gauge (e.g., 810B) relative to the first power gauge (e.g., 810A) (e.g., increasing a visual emphasis of the second power gauge and/or decreasing a visual emphasis of the first power gauge (e.g., so that the second power gauge is visually emphasized as compared to the first power gauge)). In some embodiments, the first power gauge and the second power gauge are displayed adjacent to each other. In some embodiments, there are no intervening objects displayed between the first power gauge and the second power gauge (e.g., the first power gauge and the second power gauge are displayed directly next to each other).

In some embodiments, the first power gauge corresponds to a first engine/motor and includes a path (e.g., that is linear, curved, a semi-circle, and/or a segment of a circle) that corresponds to amounts of power of the first engine/motor. The first power gauge optionally includes an indicator (e.g., a power indicator) that moves along (e.g., traverses and/or fills) the path of the first power gauge based on (and, optionally, in conjunction with and/or to correspond to) changes in the amount (e.g., being generated, being applied, being used, and/or being stored) of power (e.g., electric power and/or combustion power) to indicate the amount of power (e.g., electric power and/or combustion power) of the first engine/motor. In some embodiments, the second power gauge corresponds to a second engine/motor and includes a path (e.g., that is linear, curved, a semi-circle, and/or a segment of a circle) that corresponds to amounts of power of the second engine/motor. The second power gauge optionally includes an indicator (e.g., a power indicator) that moves along (e.g., traverses and/or fills) the path of the second power gauge based on (and, optionally, in conjunction with and/or to correspond to) changes in the amount (e.g., being generated, being applied, being used, and/or being stored) of power (e.g., electric power and/or combustion power) to indicate the amount of power (e.g., electric power and/or combustion power) of the second engine/motor.

In some embodiments, while displaying the first power gauge and/or the second power gauge, the computer system detects (e.g., as reported by the vehicle and/or as detected by one or more sensors) a change in amount of power (e.g., an increase and/or decrease in electric power being generated, an increase and/or decrease in electric power being used, and/or an increase or decrease in an amount of power of a combustion engine) of a respective engine/motor. In response to detecting the change in amount of power, the computer system updates, via the one or more display generation components, a respective power gauge by moving the indicator along the path of the respective power gauge based on (and, optionally, in conjunction with and/or to correspond to) the change in amount of power of the respective engine/motor. In some embodiments, the path is displayed as part of the respective power gauge. In some embodiments, the path is not displayed. Visually emphasizing the second power gauge relative to the first power gauge when the set of one or more conditions are met provides visual feedback that the set of one or more conditions have been met, thereby providing improved visual feedback. Visually emphasizing the second power gauge relative to the first power gauge when the set of one or more conditions are met optionally also provides the user with feedback about the availability of systems of the vehicle and which type of power (e.g., electric vs combustion) is (or will be) used to propel the vehicle, thereby providing improved feedback.

In some embodiments, the set of one or more conditions includes a battery charge level condition that is met when a charge level of a battery (e.g., of the vehicle) is below a threshold charge level (e.g., below 5%, 3%, 1% charge and/or below 5kWh, 3 kWh, 1 kWh charge) (e.g., for a first threshold duration of time (e.g., for 10 minutes, for 5 minutes, for 1 minute, or for 30 seconds)). In some embodiments, the battery charge level condition is met when the charge level of the battery that is used to power one or more electric motors of the vehicle falls below the threshold charge level and stays below the threshold charge level for the first threshold duration of time. In some embodiments (e.g., when the first power gauge is an electric power gauge that indicates an amount of electric power being used (e.g., output by one or more batteries of the vehicle and/or consumed by (or applied to) one or more electric motors of the vehicle) and/or that indicates an amount of electric power being generated/stored (e.g., by an electric motor of the vehicle and/or using regenerative braking of the vehicle's wheels) (e.g., for storage in a battery of the vehicle)), when the set of one or more conditions is met, the computer system visually emphasizes the second power gauge (e.g., a combustion power gauge, such as a tachometer that measure revolutions per minute, for a gas engine of the vehicle). In some embodiments, the set of one or more conditions includes a fuel condition that is met when the fuel level (e.g., of the vehicle) is above a threshold level (e.g., the vehicle's battery is running low, but the vehicle has sufficient fuel). Visually emphasizing the second power gauge relative to the first power gauge when the set of one or more conditions are met (including a charge level of a battery being below a threshold charge level) provides visual feedback that the set of one or more conditions have been met, thereby providing improved visual feedback. Visually emphasizing the second power gauge relative to the first power gauge when the set of one or more conditions are met (including a charge level of a battery being below a threshold charge level) optionally also provides the user with feedback about the availability of systems of the vehicle and which type of power (e.g., electric vs combustion) is (or will be) used to propel the vehicle, thereby providing improved feedback.

In some embodiments, the set of one or more conditions includes a fuel level condition that is met when a fuel level (e.g., of the vehicle) is below a threshold fuel level (e.g., below 5%, 3%, 1% of a full tank and/or below 1 gallon, .5 gallons, .1 gallons of fuel (e.g., gasoline)) (e.g., for a second threshold duration of time (e.g., for 10 minutes, for 5 minutes, for 1 minute, or for 30 seconds)). In some embodiments, the fuel level condition is met when the fuel level of a fuel tank that is used to power one or more combustion engines of the vehicle falls below the threshold fuel level and stays below the threshold fuel level for the second threshold duration of time. In some embodiments (e.g., when the first power gauge is a combustion power gauge (e.g., a tachometer) that indicates a power output (e.g., in RPM) of one or more combustion engines of the vehicle), when the set of one or more conditions is met, the computer system visually emphasizes the second power gauge (e.g., an electric power gauge, such as a gauge that measures electric power output (e.g., in kW)). In some embodiments, the set of one or more conditions includes a battery condition that is met when the battery level (e.g., of the vehicle) is above a threshold level (e.g., the vehicle's fuel is running low, but the vehicle has sufficient battery charge). Visually emphasizing the second power gauge relative to the first power gauge when the set of one or more conditions are met (including a fuel level being below a threshold fuel level) provides visual feedback that the set of one or more conditions have been met, thereby providing improved visual feedback. Visually emphasizing the second power gauge relative to the first power gauge when the set of one or more conditions are met (including a fuel level being below a threshold fuel level) optionally also provides the user with feedback about the availability of systems of the vehicle and which type of power (e.g., electric vs combustion) is (or will be) used to propel the vehicle, thereby providing improved feedback.

In some embodiments, displaying the first power gauge (e.g., 810A) visually emphasized relative to the second power gauge (e.g., 810B) includes concurrently displaying the first power gauge with a first width (e.g., a width of a path that corresponds to amounts of power) and the second power gauge with a second width (e.g., a width of a path that corresponds to amounts of power) that is less than the first width (e.g., as in FIGS. 10A-10E and/or 10N). In some embodiments, while the first power gauge visually emphasized relative to the second power gauge, the first power gauge and the second power gauge are displayed at first relative locations to each other. Changing a width of power gauges provides the user with visual feedback about the state of the power meters and, accordingly, the state of the vehicle, thereby providing improved visual feedback.

In some embodiments, increasing the visual emphasis of the second power gauge relative to the first power gauge includes increasing (e.g., via a displayed animation) a width of the second power gauge relative to a width of the first power gauge (e.g., increasing the width of the second power gauge and/or decreasing the width of the first power gauge) (e.g., as in FIGS. 10F-10H and/or 10O-10P). In some embodiments, the computer system maintains the relative locations of the first power gauge and the second power gauge when visually emphasizing the second power gauge as compared to the first power gauge. Increasing a width of the second power gauge relative to a width of the first power gauge provides visual feedback that the set of one or more conditions have been met, thereby providing improved visual feedback.

In some embodiments, increasing the visual emphasis of the second power gauge (e.g., 810B) relative to the first power gauge (e.g., 810A) includes changing (e.g., via a displayed animation) relative locations of the first power gauge and the second power gauge (e.g., changing the location of the second power gauge relative to the first power gauge and/or moving the second power gauge higher in the display (e.g., towards the top of the display) relative to the first power gauge). Changing relative locations of the first power gauge and the second power gauge provides visual feedback that the set of one or more conditions have been met, thereby providing improved visual feedback.

In some embodiments, changing relative locations of the first power gauge (e.g., 810A) and the second power gauge (e.g., 810B) includes swapping locations of the first power gauge and the second power gauge (e.g., moving the first power gauge from a first location to a second location and (e.g., concurrently or sequentially) moving the second power gauge from the second location to the first location). In some embodiments, the computer system displays an animation that swaps the locations of the two power gauges. Swapping the locations of the first power gauge and the second power gauge provides visual feedback that the set of one or more conditions have been met, thereby providing improved visual feedback.

In some embodiments, increasing the visual emphasis of the second power gauge (e.g., 810B) relative to the first power gauge (e.g., 810A) includes changing one or more colors of the first power gauge and/or the second power gauge (e.g., as in FIGS. 10F and/or 10O). Changing one or more colors of the first power gauge and/or the second power gauge provides visual feedback that the set of one or more conditions have been met, thereby providing improved visual feedback.

In some embodiments, changing one or more colors of the first power gauge (e.g., 810A) and/or the second power gauge (e.g., 810B) includes graying out at least a portion of the first power gauge without graying out the second power gauge (e.g., as in FIGS. 10F and/or 10O). Graying out at least a portion of the first power gauge without graying out the second power gauge provides visual feedback that the set of one or more conditions have been met, thereby providing improved visual feedback.

In some embodiments, increasing the visual emphasis of the second power gauge relative to the first power gauge includes decreasing a visual emphasis of a first portion (e.g., 812B) of the first power gauge (e.g., 810A) (e.g., graying out a first portion of the first power gauge) while maintaining a visual emphasis of a second portion (e.g., 812A) of the first power gauge (e.g., 810A) (e.g., without graying out a second portion of the first power gauge). Decreasing a visual emphasis of a first portion of the first power gauge provides visual feedback that the set of one or more conditions have been met, thereby providing improved visual feedback.

In some embodiments, the first power gauge (e.g., 810A) indicates an amount of electric power (e.g., 810A as in FIGS. 10A-10P) and/or the second power gauge indicates an amount of electric power. In some embodiments, indicating an amount of electric power includes indicating an amount of power corresponding to an amount of electric power being generated (e.g., by an electric motor of the vehicle and/or using regenerative braking of the vehicle's wheels) (e.g., for storage in a battery of the vehicle), stored (e.g., in a battery of the vehicle), and/or being used (e.g., output by one or more batteries of the vehicle and/or consumed by (or applied to) one or more electric motors of the vehicle). Indicating an amount of electric power provides the user with visual feedback about the amount of electric power being used, generated, and/or applied, thereby providing improved visual feedback.

In some embodiments, the first power gauge indicates an amount of power of (e.g., being generated by) a combustion engine (e.g., indicating revolutions per minute (RPM) of the engine, such as a tachometer) (e.g., of the vehicle) and/or the second power gauge indicates an amount of power of (e.g., being generated by) a combustion engine (e.g., indicating revolutions per minute (RPM) of the engine, such as a tachometer) (e.g., of the vehicle) (e.g., 810B as in FIGS. 10A-10P). Indicating an amount of power of a combustion engine provides the user with visual feedback about the amount of combustion power being used, generated, and/or applied, thereby providing improved visual feedback.

In some embodiments, while displaying the second power gauge (e.g., 810B) visually emphasized relative to the first power gauge (e.g., 810A), the computer system (e.g., 600) detects that a second set of one or more conditions, different from the set of one or more conditions, is met. In response to detecting that the second set of one or more conditions is met, the computer system (e.g., 600) increases a visual emphasis (e.g., via an animation over time) of the first power gauge (e.g., 810A) relative to the second power gauge (e.g., 810A) (e.g., increasing a visual emphasis of the first power gauge and/or decreasing a visual emphasis of the second power gauge (e.g., so that the first power gauge is visually emphasized as compared to the second power gauge)) (e.g., reversing the animation of increasing the visual emphasis of the second power gauge relative to the first power gauge that was performed in response to the set of one or more conditions being met) (e.g., as in FIGS. 10I-10K). In some embodiments, the first power gauge and the second power gauge continue to be displayed adjacent to each other. In some embodiments, there are no intervening objects displayed between the first power gauge and the second power gauge (e.g., the first power gauge and the second power gauge are displayed directly next to each other). In some embodiments, the second set of conditions includes a condition that is met when a charge level of a battery (e.g., of the vehicle) exceeds a second threshold charge level (e.g., the same as or different from the threshold charge level) (e.g., for more than a threshold duration of time). In some embodiments, when the set of one or more conditions and the second set of one or more conditions are both met (and/or are both not met), the computer system displays the first power gauge and the second power gauge accordingly to a default visual emphasis (e.g., with the first power gauge visually emphasized relative to the second power gauge). Increasing a visual emphasis of the first power gauge relative to the second power gauge when the second set of one or more conditions is met provides the user with visual feedback that the second set of one or more conditions has been met, thereby providing improved visual feedback.

In some embodiments, while displaying the first power gauge (e.g., 810A) visually emphasized relative to the second power gauge (e.g., 810B), a vehicle (e.g., the vehicle into which the computer system is integrated) uses one or more electric motors to propel (e.g., accelerate) the vehicle without using one or more combustion engines to propel (e.g., accelerate) the vehicle (e.g., as in FIG. 10B). In some embodiments, while displaying the second power gauge (e.g., 810B) visually emphasized relative to the first power gauge (e.g., 810A), the vehicle uses the one or more combustion engines to propel (e.g., accelerate) the vehicle without using the one or more electric motors to propel (e.g., accelerate) the vehicle (e.g., as in FIG. 10H). Emphasizing a respective power gauge when a respective technique for propelling the vehicle is available (or is the only technique for propelling the vehicle) provides the user with visual feedback about the technique being used to propel the vehicle, thereby providing improved visual feedback.

In some embodiments, increasing the visual emphasis of the second power gauge (e.g., 810B) relative to the first power gauge (e.g., 810A) (and/or the first power gauge relative to the second power gauge) includes an animation that is displayed over a period of time (e.g., an animation of the widths of the gauges changing, an animation of the colors of the gauges changing, and/or an animation of the location of the gauges changing) (e.g., as in FIGS. 10E-10H and/or 10N-10P). Displaying an animation as part of increasing the visual emphasis provides the user with more time to see the change and enables the user to better understand the visual change that occurred, thereby providing improved visual feedback and improving the man-machine interface.

Note that details of the processes described above with respect to method 1100 (e.g., FIG. 11) are also applicable in an analogous manner to the methods described above. For example, methods 700, 900, 1300, and/or 1400 optionally include one or more of the characteristics of the various methods described above with reference to method 1100. For example, the computer system is the same computer system. For another example, the speedometer is the same speedometer.

FIGS. 12A-12T illustrate example user interfaces for displaying and/or configuring content on a vehicle display, in accordance with some embodiments.

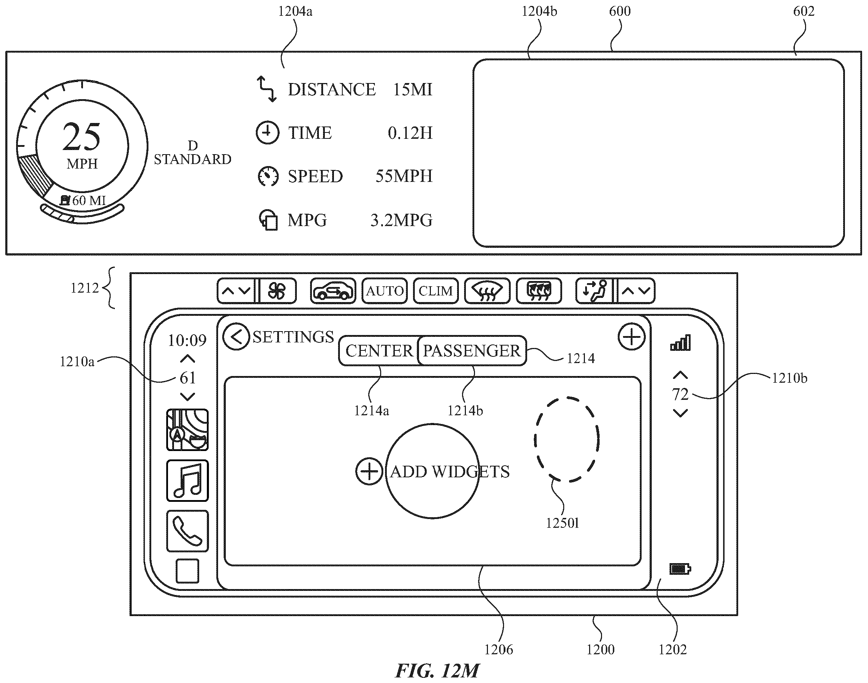

FIG. 12A illustrates computer system 600 with display 602 and computer system 1200 with display 1202. Computer system 600 can display, via display 602, an instrument cluster (e.g., also referred to as a dashboard) of a vehicle (e.g., a car, an airplane, and/or a boat). In some embodiments, an instrument cluster includes some or all the features of instrument clusters 604A, 604B, 604C, 804A, and/or 1004A. In some embodiments, computer system 600 is integrated into a vehicle and/or is in communication with a vehicle. In some embodiments, computer system 600 includes multiple displays. In some embodiments, computer system 600 is part of a user-wearable device, such as a headset. In some embodiments, computer system 600 includes one or more features of electronic devices 100, 300, and 500, as described above. In FIG. 12A, display 602 includes first region 1204a and second region 1204b (e.g., indicated in FIG. 12M). In some embodiments, display 602 includes more than two regions (e.g., three regions or four regions).

Computer system 1200 includes display 1202. In some embodiments, computer system 1200 is integrated into a vehicle and/or is in communication with a vehicle (e.g., a same vehicle that includes and/or is in communication with computer system 600). In some embodiments, computer system 1200 includes a smartphone, a smartwatch, a tablet computer, and/or a laptop computer. In some embodiments, computer system 1200 and/or display 1202 is in communication with a smartphone, a smartwatch, a tablet computer, and/or a laptop computer. In some embodiments, computer system 1200 is part of a user-wearable device, such as a headset. In some embodiments, computer system 600 includes one or more features of electronic devices 100, 300, and 500, as described above.

In FIGS. 12A-12C, computer system 1200 navigates to a user interface for configuring content of region 1204a and/or region 1204b of display 602. In some embodiments, the content includes one or more graphical elements. In some embodiments, the one or more graphical elements include dynamic content. In some embodiments, the one or more graphical elements include a widget. In some embodiments, a widget includes (e.g., displays) information obtained from an application (e.g., a weather application, a music application, a clock application, a calendar application, an email application, a messaging application, a camera application, a phone application, a multimedia (e.g., video, podcast, and/or streaming application, a vehicle control and/or status application, a maps application, and/or a navigation application) that is updated over time as new information is obtained from the application. In some embodiments, a user can interact with a widget (e.g., to open a corresponding application). In some embodiments, the one or more graphical elements include a gauge (e.g., gauge 606, 608, and/or) 810.

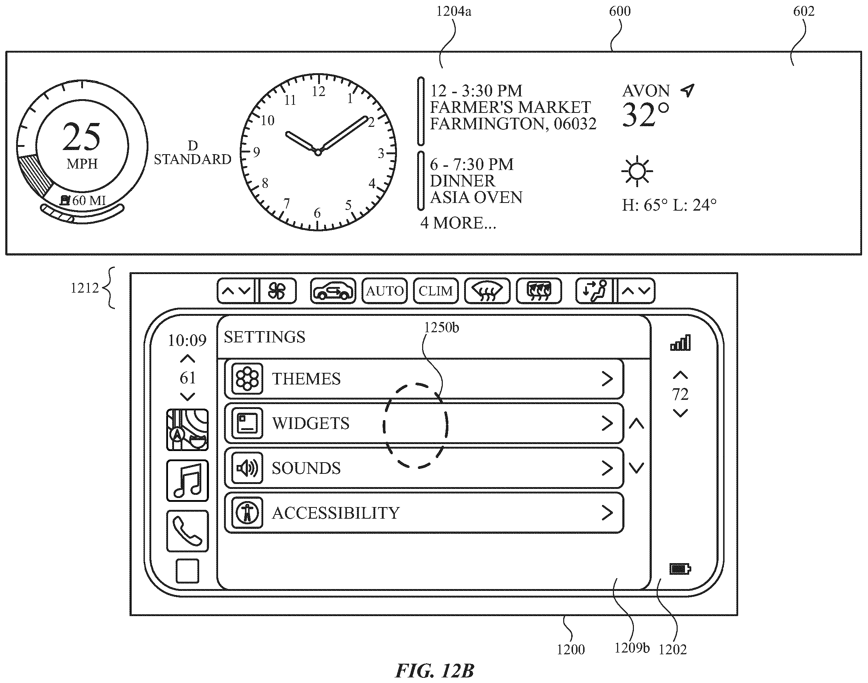

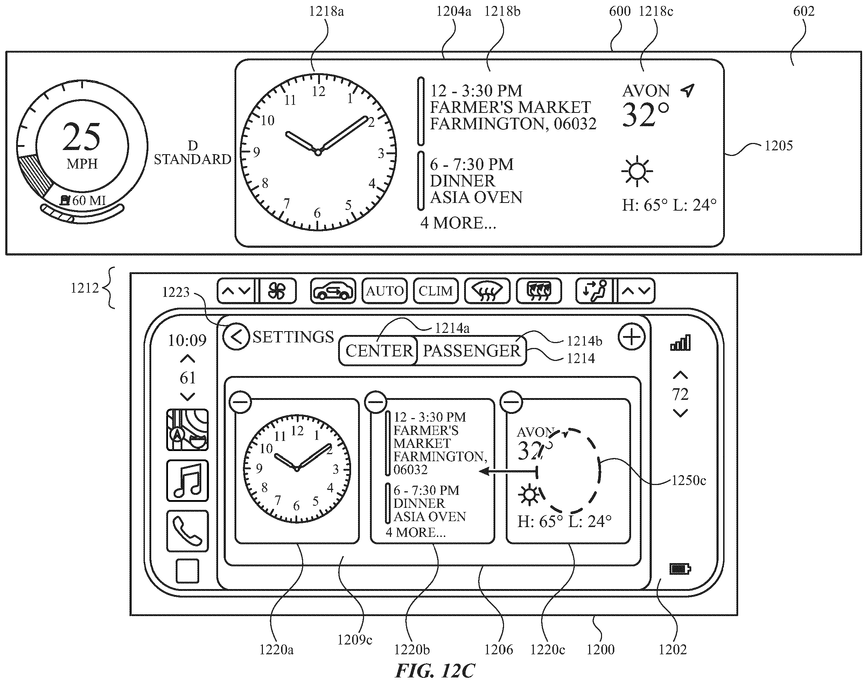

In FIG. 12A, computer system 1200 displays user interface 1209a, which includes applications icons corresponding to respective applications that can be opened and/or launched by selecting the corresponding application icon. In FIG. 12A, a settings icon is selected via input 1250a. In response to detection of input 1250a, computer system 1200 displays settings user interface 1209b as shown in FIG. 12B. In FIG. 12B, a widgets option is selected via input 1250b. In response to detection of input 1250b, computer system 1200 displays content configuration user interface 1209c shown in FIG. 12C.

Content configuration user interface 1209c enables a user to manage the appearance and/or content of display 602 (e.g., the content that is displayed on display 602 and/or the configuration of the content that is displayed on display 602). In FIG. 12C, representation 1206 corresponds to a portion of display 602. The portion of display 602 corresponding to representation 1206 is based on the portion of display 602 indicated by region indicator 1214. In FIG. 12C, region indicator 1214 indicates that center region 1204a of display 602 is currently selected, as indicated by center option 1214a being designated in region indicator 1214. Accordingly, in FIG. 12C, representation 1206 on display 1202 corresponds to center region 1204a of display 602, which is designated by visual indicator 1205. Representation 1206 displays a representation of the content and/or the configuration of the content that is displayed (or is to be displayed) in center region 1204a of display 602. For example, representation 1206 includes widget representation 1220a corresponding to clock widget 1218a, widget representation 1220b corresponding to calendar widget 1218b, and widget representation 1220c corresponding to weather widget 1218c.

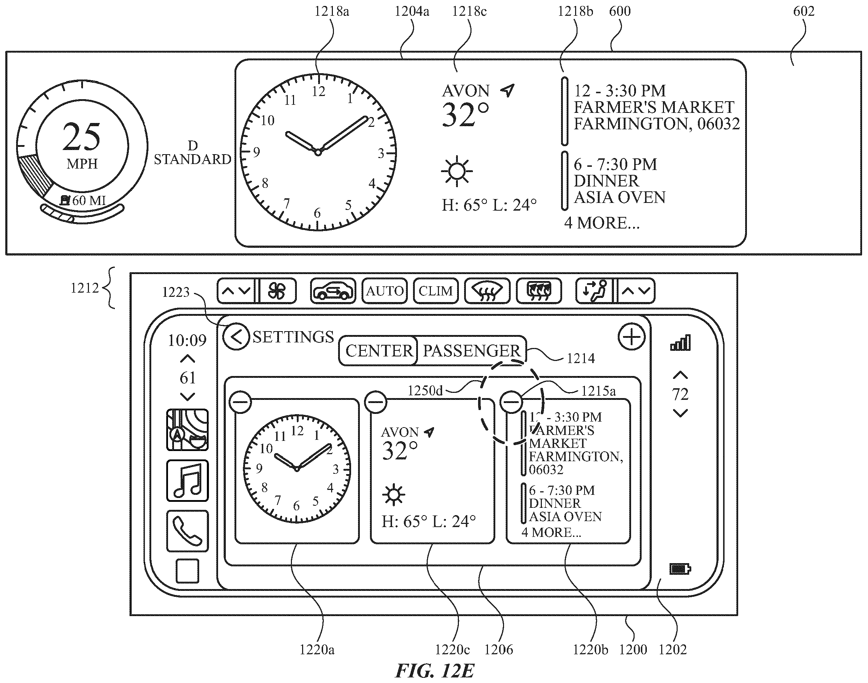

A user can provide inputs via computer system 1200 and/or display 1202 to configure one or more graphical elements (e.g., 1218a-1218c) that are displayed in the region of display 602 that is represented by representation 1206. In some embodiments, a user can configure different regions of display 602 via inputs at display 1202. For example, computer system 1200 can be used to configure the selected region of display 602. In FIGs. 12C-12D, widget representation 1220c is selected and moved, via input 1250c, from the right side of representation 1206 to a center of representation 1206. In some embodiments, input 1250c includes a tap and/or drag gesture on widget representation 1220c and/or other request to move widget representation 1220c. In response to detecting input 1250c, widget representation 1220c is displayed at (e.g., moved to) the center of representation 1206 and widget representation 1220b is displayed at (e.g., moved to) the right side of representation 1206 as shown in in FIG. 12E. In response to detecting input 1250c, the appearance (e.g., configuration) of center region 1204a is updated to correspond with representation 1206. For example, in response to detecting input 1250c, weather widget 1218c is displayed at (e.g., moved to) the center of center region 1204a and calendar widget 1218b is displayed at (e.g., moved to) the right side of center region 1204a. In some embodiments, the appearance of center region 1204a is not updated directly in response to detection of input 1250c. For example, in some embodiments, the appearance of center region 1204a is maintained until the configuration shown in representation 1206 is confirmed (e.g., via selection of back option 1221 and/or other confirmation input).

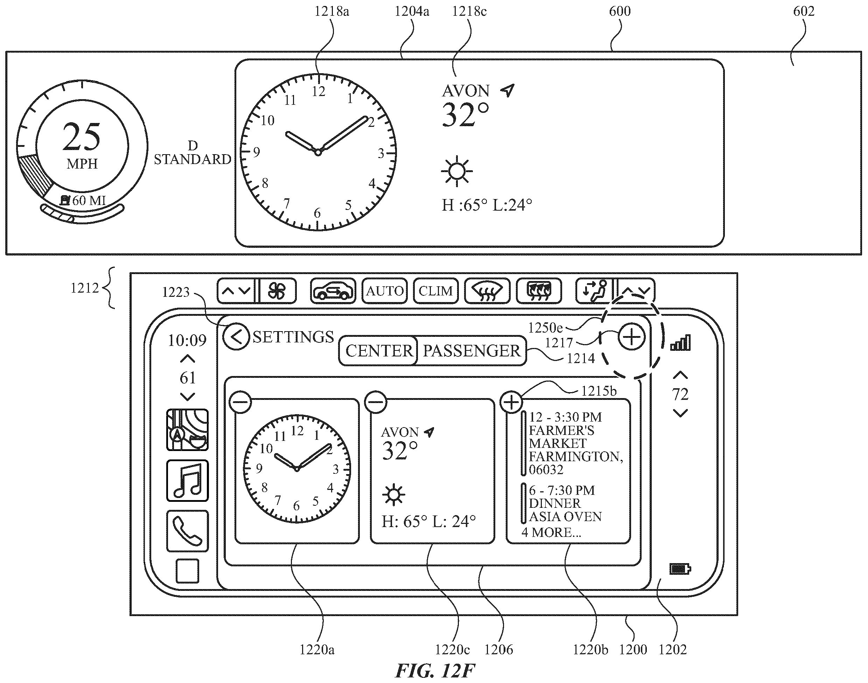

In some embodiments, content (e.g., graphical elements, widgets, icons, and/or gauges) can be added and/or removed from a region of display 602 using computer system 1200 and/or display 1202. For example, in FIG. 12E, widget representation 1220b is selected for removal (e.g., deselected and/or deleted) via input 1250d at computer system 1200 (e.g., via selection of widget representation 1220b and/or remove icon 1215a). In response to detecting input 1250d, calendar widget 1218b is removed from center region 1204a and/or widget representation 1220b is deselected, as indicated by remove icon 1215a being replaced with add icon 1215b, as shown in FIG. 12F.

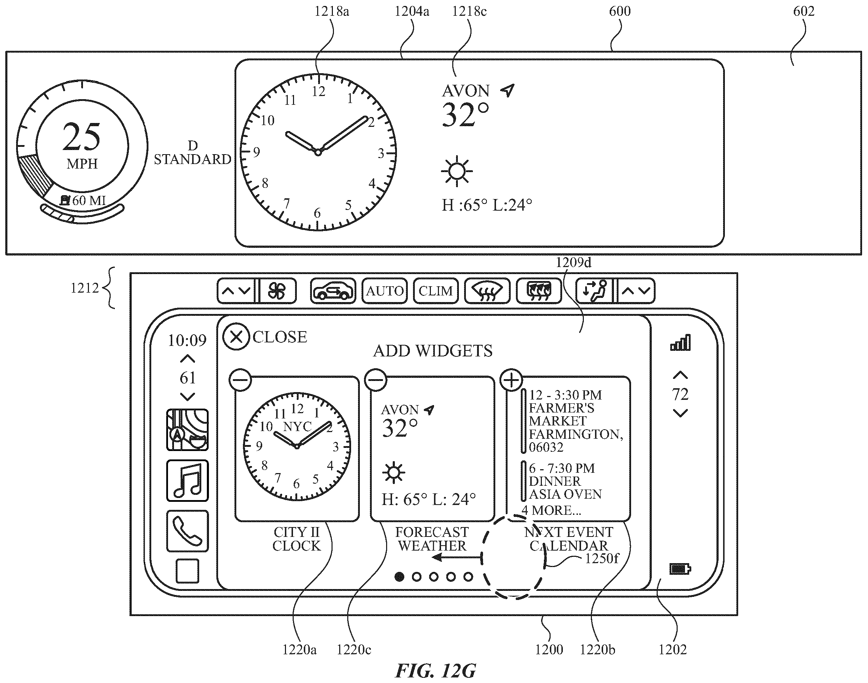

In some embodiments, content can be added to a region of display 602 and/or a layout of content for a region of display 602 can be edited (e.g., selected and/or changed) using computer system 1200 and/or display 1202. For example, in FIG. 12F, option 1217 is selected via input 1250e. In response to detection of input 1250e, computer system 1200 displays content selection user interface 1209d shown in FIG. 12G. In FIG. 12G, content selection user interface 1209d represents the currently selected widgets for center region 1204a of display 602. In response to detecting input 1250f corresponding to a request to select different content and/or a different layout, computer system 1200 displays representation 1206 having a second set of widgets and/or layout (e.g., labeled as "NAVIGATION AND NOW PLAYING SUGGESTIONS") that includes widget representation 1220d (e.g., corresponding to a navigation widget) and widget representation 1220e (e.g., corresponding to a media widget). In some embodiments, the set of widgets and/or layout currently displayed in representation 1206 is selected and/or applied to center region 1204a of display 602 in response to detecting a selection and/or confirmation input, such as, e.g., selection of icon 1219.

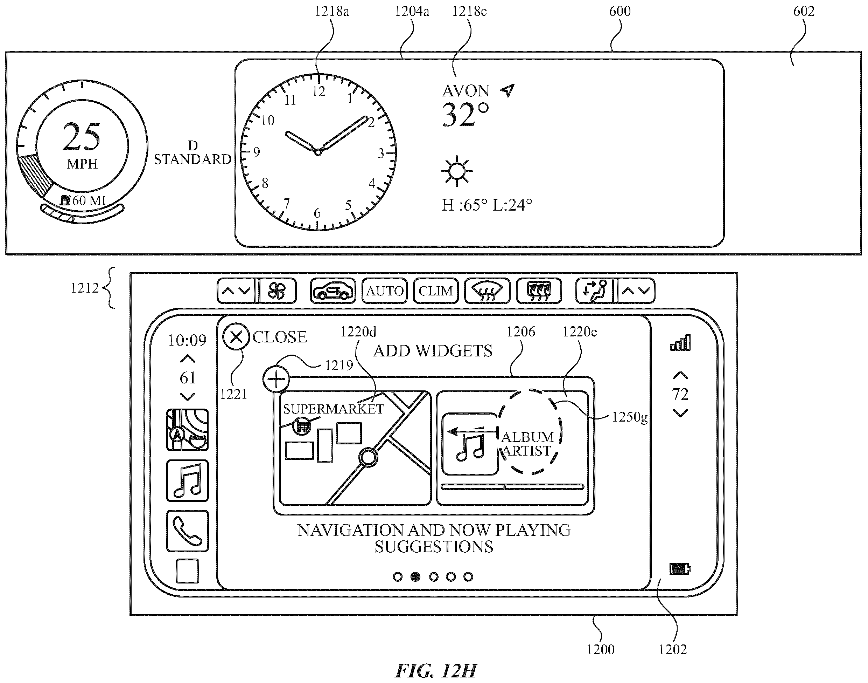

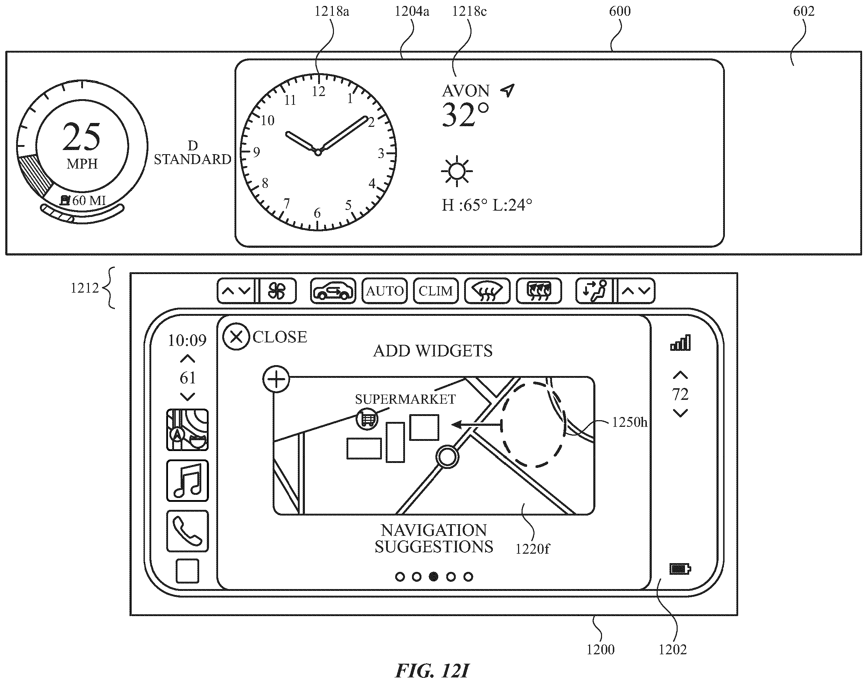

In FIG. 12H, input 1250g corresponding to a request to select (e.g., change to) a different set of widgets and/or layout is detected. In response to detecting input 1250g, computer system 1200 displays representation 1206 having a third set of widgets and/or layout (e.g., labeled as "NAVIGATION SUGGESTIONS") that includes widget representation 1220f (e.g., a single widget corresponding to a navigation widget), as shown in FIG. 12I. In some embodiments, the set of widgets and/or layout displayed in representation 1206 in FIG. 12I is selected and/or applied to center region 1204a of display 602 in response to detecting a selection and/or confirmation input, such as, e.g., selection of icon 1219.

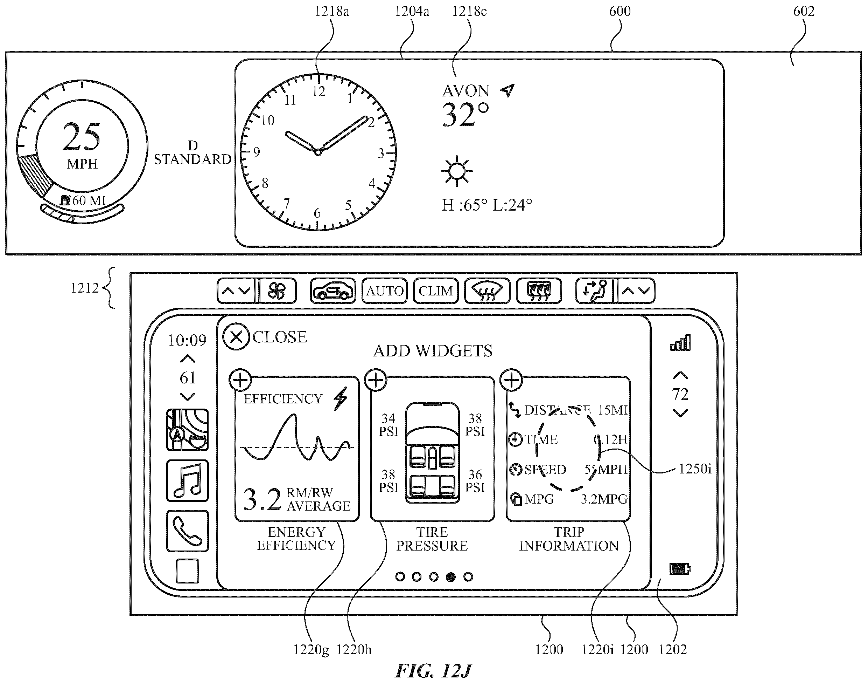

In FIG. 12I, input 1250h corresponding to a request to select (e.g., change to) a different set of widgets and/or layout is detected. In response to detecting input 1250h, computer system 1200 displays representation 1206 having a fourth set of widgets and/or layout that includes widget representation 1220g (e.g., corresponding to an energy efficiency widget), widget representation 1220h (e.g., corresponding to a tire pressure widget), and widget representation 1220i (e.g., corresponding to a trip information widget), as shown in FIG. 12J.

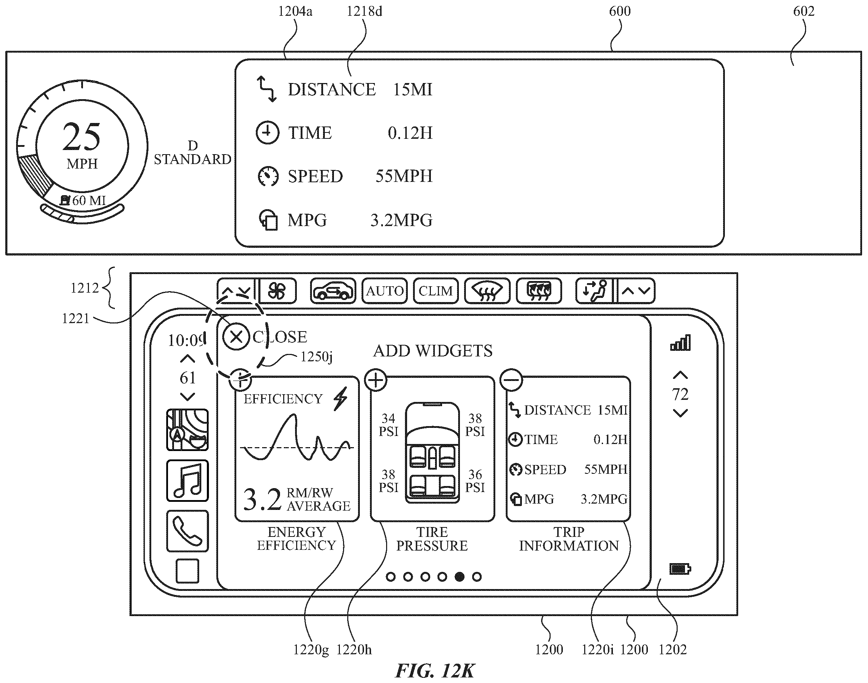

In response to detecting input 1250i corresponding to selection of widget representation 1220i, trip information widget 1218d corresponding to widget representation 1220i is added to center region 1204a of display 602 as shown in FIG. 12K. In some embodiments, as shown in FIG. 12K, trip information widget 1218d replaces content that was previously selected for center region 1204a (e.g., replaces clock widget 1218a, calendar widget 1218b, and/or weather widget 1218c). For example, trip information widget 1218d replaces clock widget 1218a and weather widget 1218c because trip information widget 1218d is part of a different set of widgets than the previously selected layout. In some embodiment, trip information widget 1218d is added to center region 1204a (e.g., the right side of center region 1204a) without removing clock widget 1218a and/or weather widget 1218c.

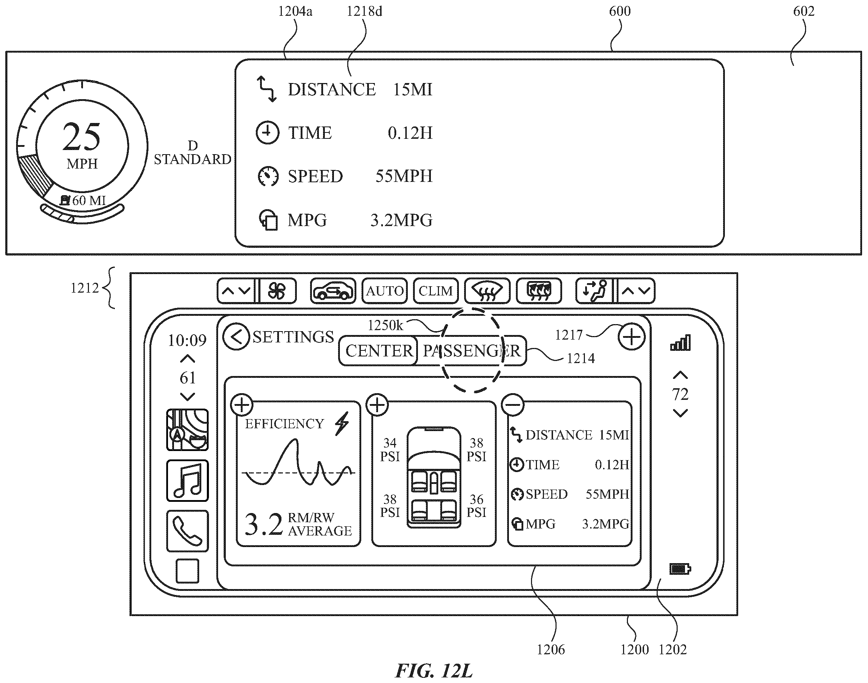

In FIG. 12K, close option 1221 is selected via input 1250j. In response to detection of input 1250j, user interface 1209c, including region indicator 1214, is displayed (e.g., re-displayed) on display 1202 as shown in FIG. 12L. In FIG. 12L, region indicator 1214 includes passenger option 1214b. In some embodiments, region indicator 1214 includes passenger option 1214b in accordance with a determination that (e.g., if or only if) a passenger is present (e.g., a passenger is detected and/or determined to be present in a passenger seat of a vehicle that includes display 602). Conversely, in some embodiments, region indicator 1214 does not include passenger option 1214b in accordance with a determination that (e.g., if or only if) a passenger is not present (e.g., a passenger is not detected and/or determined to not be present in a passenger seat of a vehicle that includes display 602). In some embodiments, passenger option 1214b is selectable (e.g., enabled for selection and/or can be selected) in accordance with a determination that (e.g., if or only if) a passenger is present (e.g., a passenger is detected and/or determined to be present in a passenger seat of a vehicle that includes display 602). Conversely, in some embodiments, passenger option 1214b is not selectable (e.g., displayed but not selectable, not enabled for selection, and/or cannot be selected) in accordance with a determination that (e.g., if or only if) a passenger is not present (e.g., a passenger is not detected and/or determined to not be present in a passenger seat of a vehicle that includes display 602).

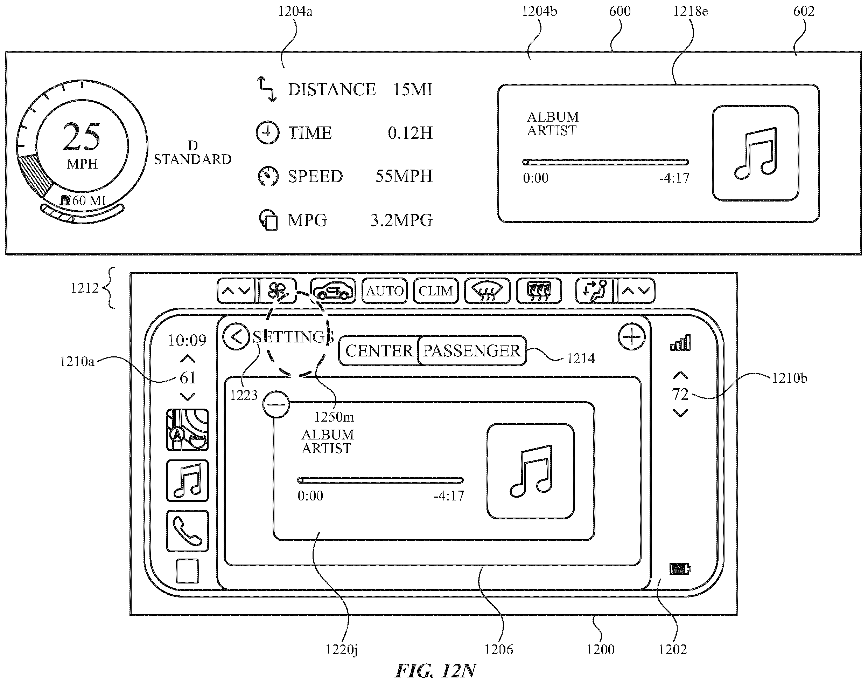

In response to detecting input 1250k in FIG. 12L corresponding to selection of passenger option 1214b of region indicator 1214, representation 1206 on display 1202 is set to correspond to passenger region 1204b of display 602 as shown in FIG. 12M. In some embodiments, when passenger option 1214b is designated on display 1202, passenger region 1204b is visually identified (e.g., outlined, highlighted, and/or otherwise visually distinguished) on display 602. In FIG. 12M, passenger region 1204b does not include any content (e.g., no widgets). Accordingly, representation 1206 does not include a representation of any content. Instead, representation 1206 includes an option to add content, such as widgets, to passenger region 1204b. In FIG. 12M, input 1250l corresponds to a request to initiate a process that includes selecting and/or configuring content for passenger region 1204b. In response to detection of input 1250l, an option for content to include in passenger region 1204b is displayed in representation 1206, as shown in FIG. 12N. For example, in FIG. 12N, representation 1206 includes widget representation 1220j, which corresponds to media playback widget 1218e. In some embodiments, media playback widget 1218e is displayed in passenger region 1204b on display 602 in response to detection of input 1250l. In some embodiments, passenger region 1204b remains empty and/or blank until selection of media playback widget 1218e is confirmed (e.g., via selection of widget representation 1220j and/or selection of back option 1223).

In some embodiments, content can be selected and/or configured for passenger region 1204b according to techniques and/or user interfaces analogous to those described in FIGs. 12C-12L with reference to center region 1204a. In some embodiments, the content and/or configurations of content that are available for passenger region 1204b are different from the content and/or configurations of content that are available for center region 1204a (e.g., widgets and/or gauges for vehicle information such as energy efficiency, tire pressure, and/or trip information are not available for display in passenger region 1204b). In some embodiments, some or all of the content and/or configurations of content that are available for passenger region 1204b are available for center region 1204a (e.g., widgets for media playback are available for display in passenger region 1204b and center region 1204a). In some embodiments, region 1204b (e.g., and/or elements within region 1204b) is displayed in accordance with a determination that (e.g., if or only if) a passenger seat is occupied. In some embodiments, content (e.g., selected content) is displayed in passenger region 1204b in accordance with a determination that (e.g., if or only if) a passenger is present (e.g., a passenger is detected and/or determined to be present in a passenger seat of a vehicle that includes display 602). Conversely, in some embodiments, content (e.g., selected content) is not displayed in passenger region 1204b in accordance with a determination that (e.g., if or only if) a passenger is not present (e.g., a passenger is not detected and/or determined to not be present in a passenger seat of a vehicle that includes display 602).

In FIG. 12N, back option 1223 is selected via input 1250m. In response to detection of input 1250m, user interface 1209c is displayed (e.g., re-displayed) on display 1202, as shown in FIG. 120.

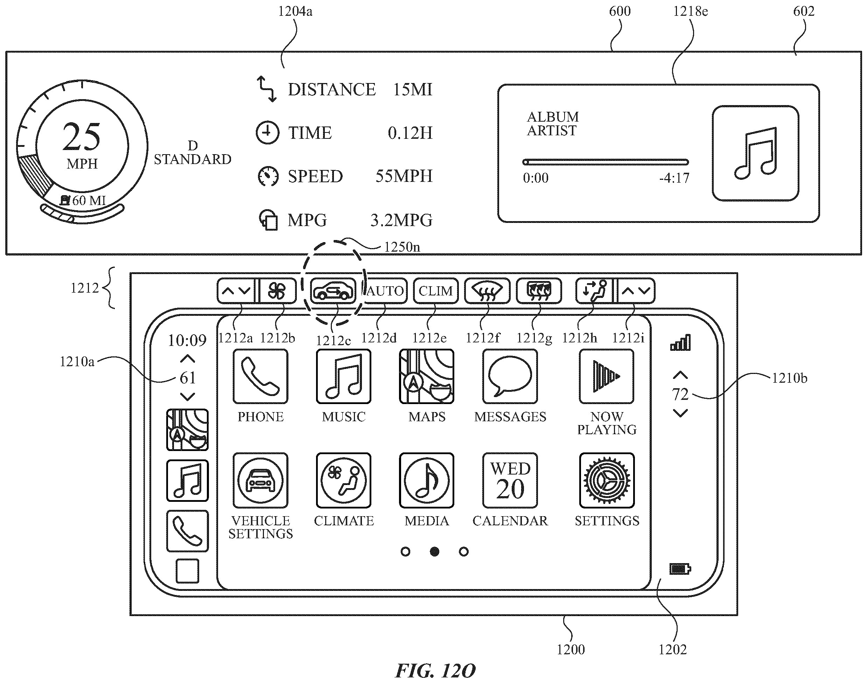

FIGS. 12O-12T illustrate techniques for displaying control and/or status information, such as climate control information, according to some embodiments. Computer system 1200 includes control region 1212, which includes controls 1212a-1212i. In some embodiments, control region 1212 includes hardware buttons and/or software buttons (e.g., on a center console of a vehicle). Controls 1212a-1212i correspond to respective climate controls for a vehicle, including fan speed control 1212a, fan mode control 1212b, recirculation control 1212c, automatic temperature control 1212d, climate options control 1212e, front defroster control 1212f, rear defroster control 1212g, circulation control 1212h, and magnitude control 1212i. In some embodiments, control region 1212 includes other types of controls and/or some of controls 1212a-1212i are omitted.

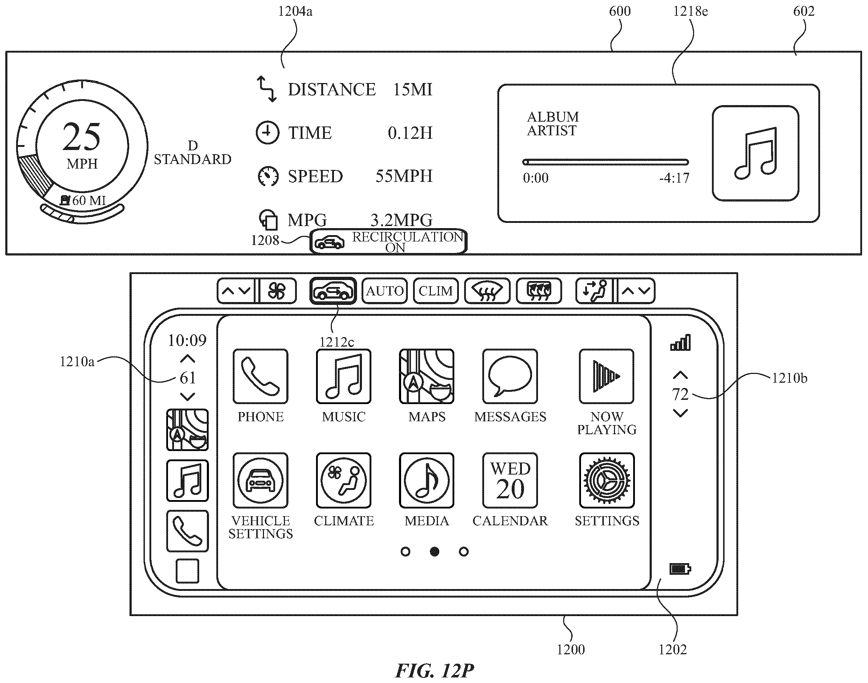

In FIG. 120, computer system 600 and/or display 602 is operating in a first mode (e.g., a first display mode and/or a temporary display mode) in which display of user interface elements corresponding to controls 1212a-1212i are displayed temporarily (e.g., in response to selection of one or more of controls 1212a-1212i). For example, in response to detection of input 1250n corresponding to selection of control 1212c and in accordance with a determination that display 602 is operating in the first mode, display of control indicator 1208a is initiated on display 602 as shown in FIG. 12P. Control indicator 1208a corresponds to control 1212c, as indicated by the image on 1208a (e.g., the same image that is on control 1212c) and text on 1208a (e.g., "Recirculation"). In some embodiments, control indicator 1208a includes an indication (e.g., text, an image, and/or a color) of a state of a parameter corresponding to control 1212c. For example, control indicator 1208a includes the status indicator "ON" in accordance with a determination that input 1250n corresponds to a request to turn on a recirculation mode and/or that a recirculation state is set to "ON" in response to detection of input 1250n.

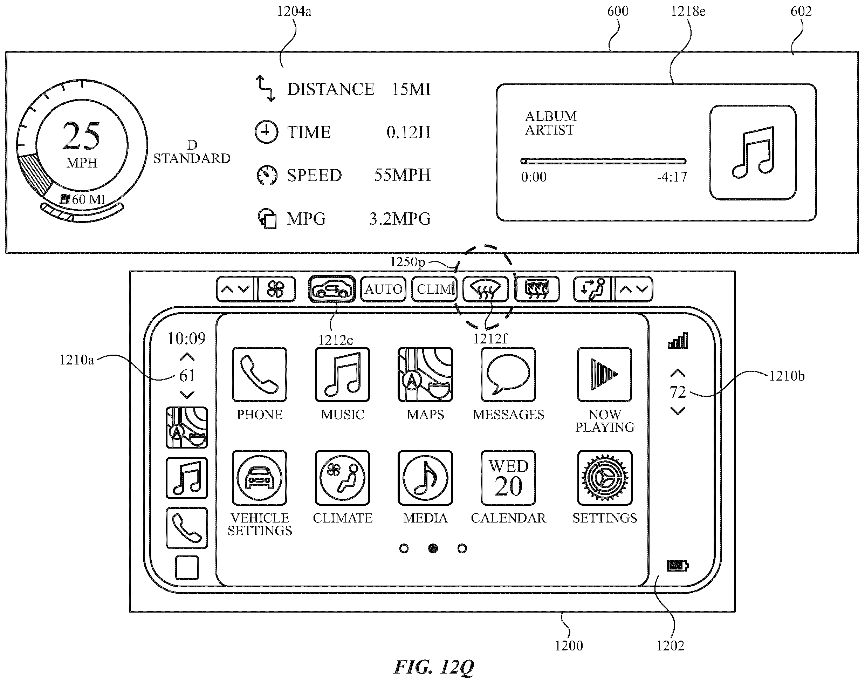

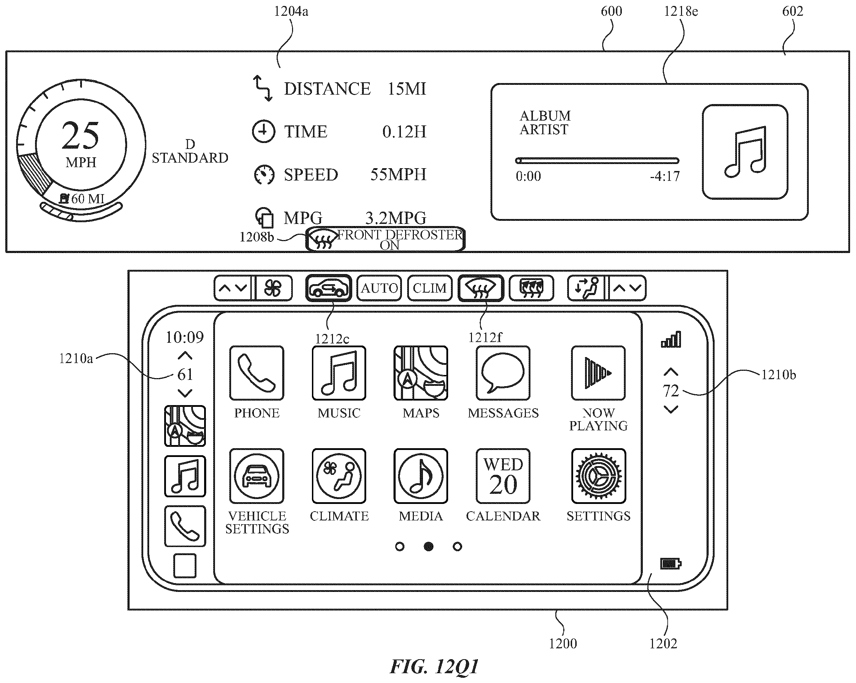

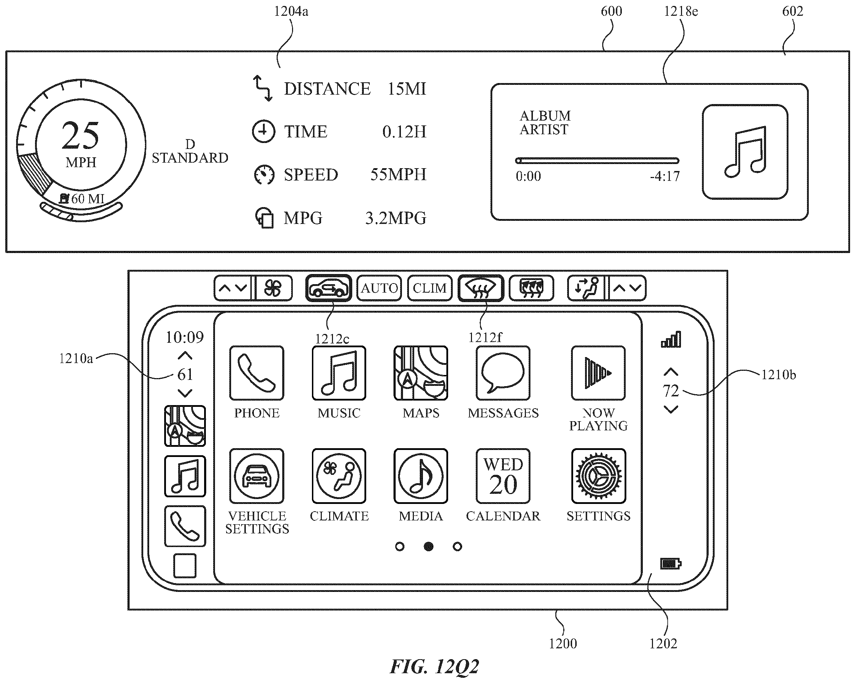

After display of control indicator 1208a is initiated on display 602, display of control indicator 1208a is removed in response to a determination that a threshold amount of time has elapsed since display of control indicator 1208a was initiated. For example, FIG. 12Q illustrates display 602 at a time that is at least the threshold amount of time after display of control indicator 1208a was initiated. As shown in FIG. 12Q, control indicator 1208a is no longer displayed on display 602. In some embodiments, control 1212c is lit up, turned on, highlighted, and/or otherwise visually emphasized in response to detection of input 1250n and remains visually emphasized after display of control indicator 1208a is removed (e.g., after the threshold amount of time has elapsed since display of control indicator 1208a was initiated), as shown in FIG. 12Q. For example, the visual emphasis of control 1212c is persistent and maintained until the state of the parameter corresponding to control 1212c is changed.

In some embodiments, some climate-related elements are persistently displayed on display 1202 in the first display mode. For example, in the first display mode, climate settings (e.g., driver-side temperature element 1210a and/or passenger-side temperature element 1210b) are displayed (e.g., persistently displayed) on display 1202.

In some embodiments, different control indicators are displayed in response to selection of different controls. For example, in response to detection of input 1250p corresponding to selection of control 1212f (e.g., a front defroster control), display of control indicator 1208b is initiated on display 602, as shown in FIG. 12Q1. Control indicator 1208b has an appearance. For example, control indicator 1208b indicates a state of the parameter (e.g., front defroster state) associated with control 1212f. In some embodiments, a control indicator has a position that is based on the position of the corresponding control. For example, in some embodiments, control indicator 1208b is displayed above and/or aligned with control 1212f.

After display of control indicator 1208b is initiated on display 602, display of control indicator 1208b is removed in response to a determination that a threshold amount of time has elapsed since display of control indicator 1208b was initiated. For example, FIG. 12Q2 illustrates display 602 at a time that is at least the threshold amount of time after display of control indicator 1208b was initiated. As shown in FIG. 12Q2, control indicator 1208b is no longer displayed on display 602. In some embodiments, control 1212f is lit up, turned on, highlighted, and/or otherwise visually emphasized in response to detection of input 1250p and remains visually emphasized after display of control indicator 1208b is removed (e.g., after the threshold amount of time has elapsed since display of control indicator 1208b was initiated), as shown in FIG. 12Q2. For example, the visual emphasis of control 1212f is persistent and maintained until the state of the parameter corresponding to control 1212f is changed.

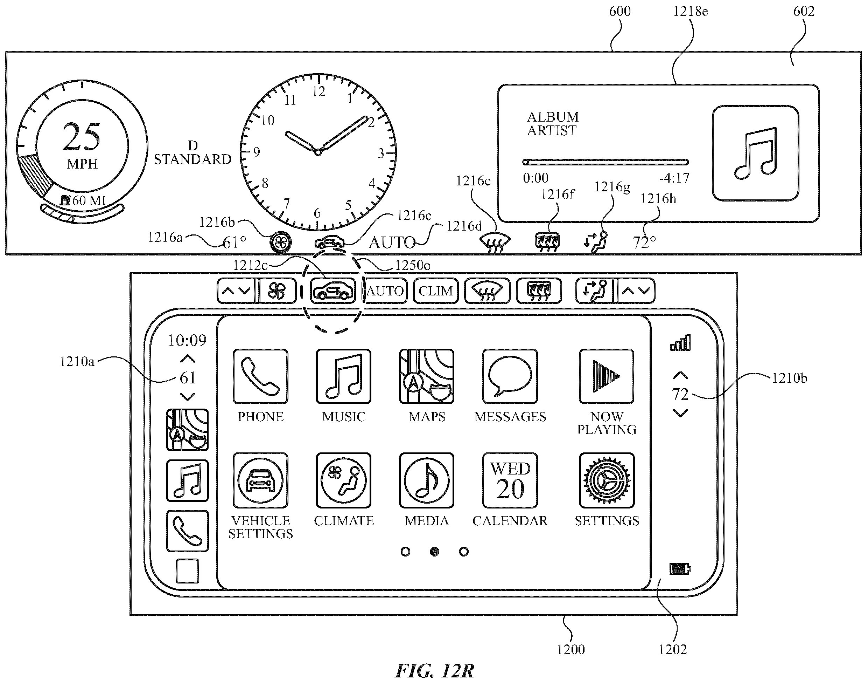

In FIGS. 12R-12T, computer system 600 and/or display 602 is operating in a second mode (e.g., a second display mode, a persistent display mode, and/or a permanent display mode) in which display of user interface elements corresponding to controls 1212a-1212i are displayed persistently on display 602. For example, in FIG. 12R, control indicators 1216a-1216h are displayed persistently on display 602. Control indicators 1216b-1216g display various indications related to parameters set by controls 1212a-1212i. Control indicator 1216a and control indicator 1216h correspond to temperature element 1210a and temperature element 1210b, respectively. Because computer system 600 and/or display 602 is operating in the second mode, control indicators 1216a-1216h are displayed regardless of whether a corresponding control (e.g., temperature element 1210a, temperature element 1210b, and/or controls 1212a-1212i) has been selected and/or activated.

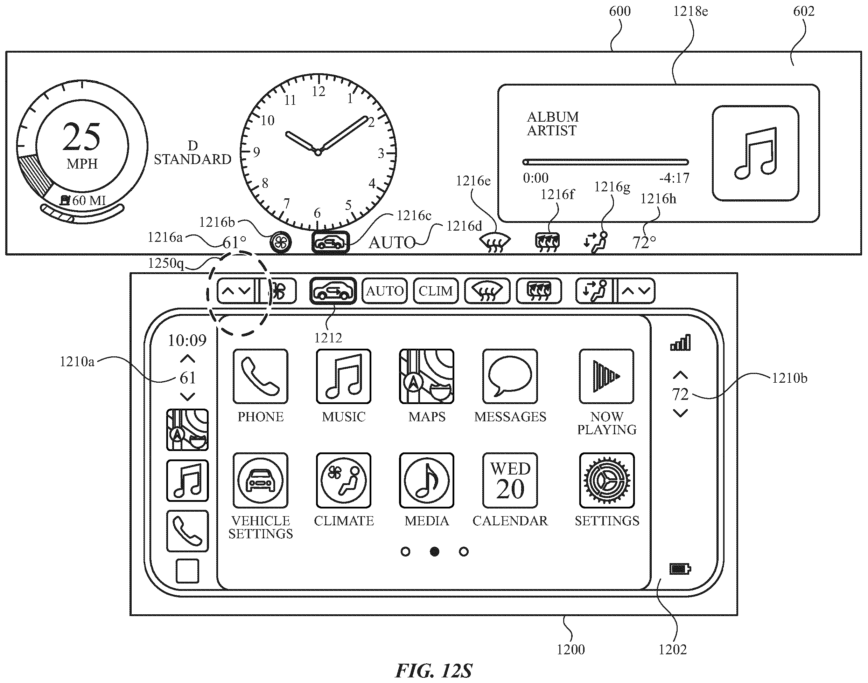

In some embodiments, control indicators 1216a-1216h indicate a state of a corresponding parameter (e.g., the appearance of a control indicator is based on the state of the parameter that corresponds to the control indicator). For example, in FIG. 12R, control indicator 1216c corresponds to recirculation control 1212c and has a first appearance (e.g., non-highlighted) to indicate that recirculation is off. In response to detection of input 1250o corresponding to selection of control 1212c, the recirculation state is set to on and the appearance of control indicator 1216c is changed to reflect the "recirculation on" state, as shown in FIG. 12S. In FIG. 12S, other control indicators (e.g., 1216a-1216b and 1216d-1216h) remain displayed (e.g., even though there has been no change in the state of the parameters associated with the other control indicators and no input corresponding to selection of the controls associated with the other control indicators).

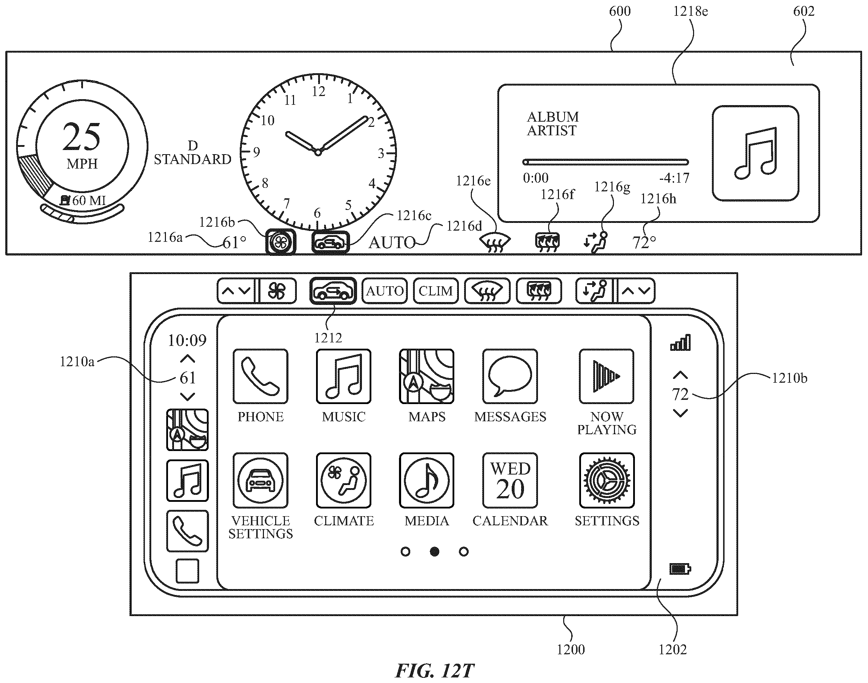

In FIG. 12S, input 1250q corresponding to selection of fan speed control 1212a is detected (e.g., a request to increase fan speed). In response to detection of input 1250q, the appearance of fan control indicator 1216b on display 602 is changed to reflect the new fan speed state, as shown in FIG. 12T. As shown in FIG. 12T, because computer system 600 and/or display 602 is operating in the second mode, control indicator 1216c maintains the same appearance as in FIG. 12S (e.g., even though FIG. 12T represents a state that occurs more than the threshold amount of time after initiation of display of control indicator 1216c having the appearance shown in FIG. 12S). In some embodiments, because computer system 600 and/or display 602 is operating in the second mode, control indicator 1216b maintains the appearance shown in FIG. 12T after the threshold amount of time has elapsed after initiation of display of control indicator 1216b having the appearance shown in FIG. 12T.

In some embodiments, in the first mode (e.g., FIGS. 12O-12Q2), climate settings are displayed (e.g., persistently displayed) on display 1202 (e.g., driver-side temperature element 1210a and passenger-side temperature element 1210b are displayed on display 1202).In some embodiments, in the second display mode (e.g., FIGS. 12R-12T), climate settings are not displayed on display 1202 (e.g., driver-side temperature element 1210a and passenger-side temperature element 1210b are not displayed on display 1202).

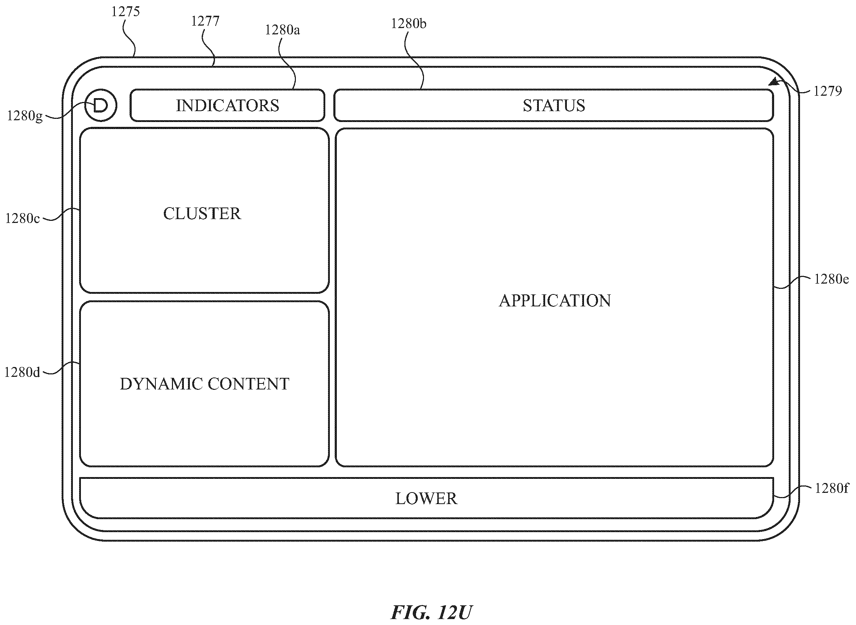

FIGS. 12U-12AD illustrate examples of user interfaces having various layouts. FIG. 12U illustrates computer system 1275, which includes display 1277. Computer system 1275 can display, via display 1277, an instrument cluster (e.g., also referred to as a dashboard) of a vehicle (e.g., a car, an airplane, and/or a boat). In some embodiments, an instrument cluster includes some or all the features of instrument clusters 604A, 604B, 604C, and/or 804A, and/or 1004A. In some embodiments, computer system 1275 is integrated into a vehicle and/or is in communication with a vehicle. In some embodiments, computer system 1275 includes multiple displays. In some embodiments (e.g., as illustrated in FIGS. 12U-12AC), computer system 1275 includes a single display (e.g., only one display). In some embodiments, computer system 1275 is part of a user-wearable device, such as a headset. In some embodiments, computer system 1275 includes one or more features of electronic devices 100, 300, 500, 600, and/or 1200, as described above. In some embodiments, computer system 1275 includes a smartphone, a smartwatch, a tablet computer, and/or a laptop computer. In some embodiments, computer system 1275 and/or display 1277 is in communication with a smartphone, a smartwatch, a tablet computer, and/or a laptop computer.

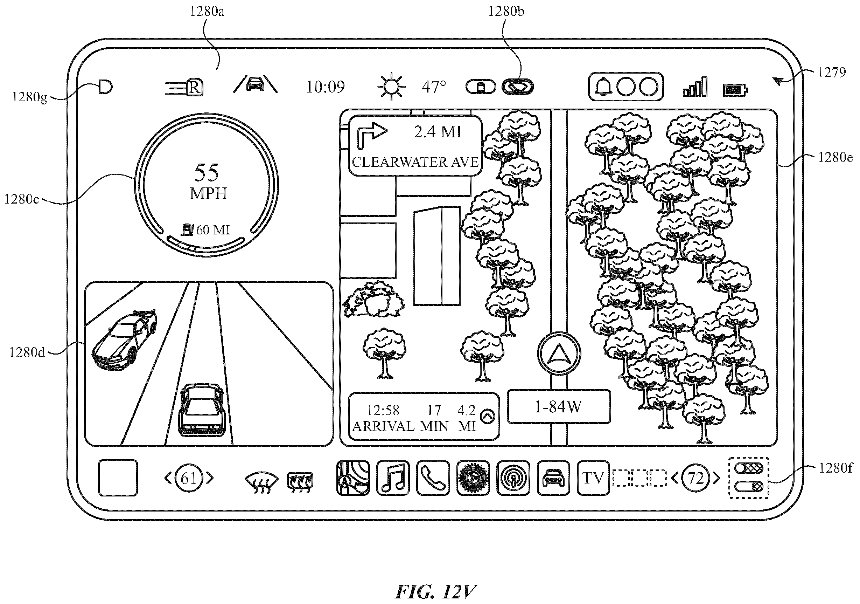

In FIG. 12U, computer system 1275 displays, on display 1277, user interface 1279. User interface 1279 includes indicator region 1280a (e.g., an indicator bar), status region 1280b (e.g., a status and/or notification bar), cluster region 1280c, dynamic content region 1280d, application region 1280e, lower region 1280f (e.g., a bottom bar), and gauge 1280g. In some embodiments, user interface 1279 is displayed on a single display (e.g., only one display). In some embodiments, the borders and/or outlines of some or all the regions in user interface 1279 are shown in the figures to describe the regions but are not visible and/or are not displayed on display 1277 (e.g., as shown in FIG. 12V).

In some embodiments, gauge 1280g displays a gear status and/or shifter status (e.g., "P" for park, "D" for drive, "R" for reverse, and/or "N" for neutral). In some embodiments, indicator region 1280a displays and/or is configured to display a first set of status indicators. In some embodiments, the first set of status indicators includes a headlight status indicator (e.g., on, off, fog lights, flood lights, and/or high beams), parking brake status indicator, seatbelt status indicator, anti-lock braking system (ABS) indicator, lane-assist indicator (e.g., in lane, changing lane, and/or out of lane), a traction control indicator, a turn signal indicator (e.g., left turn signal activated and/or right turn signal activated), a check engine indicator, a check coolant indicator, a warning indicator, and/or an error indicator.

In some embodiments, status region 1280b displays and/or is configured to display a second set of status indicators. In some embodiments, the second set of status indicators that can be displayed in status region 1280b is different from the first set of status indicators that can be displayed in indicator region 1280a (e.g., the first set of status indicators and the second set of status indicators are mutually exclusive). In some embodiments, the second set of status indicators includes an indication of time (e.g., digital and/or analog), a temperature indicator, a locked status indicator of a vehicle (e.g., locked and/or unlocked), a windshield wiper status indicator (e.g., on, off, rear wiper on, and/or wiper speed), a battery status indicator (e.g., a charge level of a battery of computer system 1275 and/or a device connected to and/or in communication with computer system 1275), a Wi-Fi signal status indicator (e.g., of computer system 1275 and/or a device connected to and/or in communication with computer system 1275), and/or cellular signal status indicator (e.g., of computer system 1275 and/or a device connected to and/or in communication with computer system 1275). In some embodiments, the second set of status indicators includes one or more notifications such as, e.g., an alarm notification, new message notification, unread message(s) notification, incoming call notification, missed call notification, voicemail notification, and/or an upcoming event notification.

In some embodiments, cluster region 1280c includes an instrument cluster that displays some or all the elements of instrument clusters 604A, 604B, 604C, and/or 804A, and/or 1004A. In some embodiments, cluster region 1280c displays one or more gauges (e.g., speedometer gauge 606, fuel gauge 606F, power gauge 610, an odometer, and/or one or more temperature gauges, such as an oil temperature gauge and/or an engine temperature gauge).

In some embodiments, dynamic content region 1280d displays and/or is configured to display dynamic content (e.g., one or more widgets and/or content that changes and/or updates over time). In some embodiments, the content in dynamic content region 1280d includes content from one or more applications (e.g., a weather application, a music application, a clock application, a camera application (e.g., that provides a view of a front camera, side camera, and/or rear camera of a vehicle), a calendar application, an email application, a messaging application, a phone application, a settings application, a multimedia (e.g., video, podcast, and/or streaming application), a vehicle control and/or status application, a maps application, and/or a navigation application). In some embodiments, the content in dynamic content region 1280d is configurable as described above with reference to FIGS. 12A-12T.

In some embodiments, application region 1280e displays and/or is configured to display a user interface of an application such as, e.g., a weather application, a music application, a clock application, a camera application (e.g., that provides a view of a front camera, side camera, and/or rear camera of a vehicle), a calendar application, an email application, a messaging application, a phone application, a settings application, a multimedia (e.g., video, podcast, and/or streaming application), a vehicle control and/or status application, a maps application, and/or a navigation application. In some embodiments, application region 1280e displays one or more application control elements that can be selected to control an application displayed in application region 1280e.

In some embodiments, lower region 1280f displays and/or is configured to display a set of user interface elements. In some embodiments, the set of user interface elements includes one or more application icons that can be selected to launch, open, and/or display a user interface of a corresponding application (e.g., in application region 1280e). In some embodiments, lower region 1280f includes a persistent set (e.g., a base set) of application icons (e.g., a set of application icons that are displayed regardless of whether the corresponding applications are open, closed, active, or inactive). In some embodiments, lower region 1280f includes a dynamic set of application icons (e.g., application icons that are displayed when the corresponding applications are open, running, active, and/or have been recently selected and are not displayed when the corresponding applications are closed, inactive, and/or have not been recently selected). In some embodiments, the set of user interface elements includes one or more climate control indicators such as, e.g., cabin temperature, driver side temperature, passenger side temperature, rear temperature, and/or fan speed. In some embodiments, the set of user interface elements includes one or more controls that can be selected to set a climate parameter (e.g., AC on/off, temperature, fan speed, vent selection, front defroster on/off, and/or rear defroster on/off). In some embodiments, the set of user interface elements is predefined (e.g., cannot be selected and/or changes via user input). In some embodiments, the set of user interface elements is user-configurable (e.g., the set of user interface elements can be selected, changed, rearranged, and/or reconfigured in response to user input at computer system 1275 and/or an external device that is configured to communicate with computer system 1275).

FIG. 12U illustrates a template for the regions in user interface 1279 (e.g., without content). In some embodiments, regions 1280a-1280g in user interface 1279 are arranged in a layout (sometimes also referred to as a configuration or arrangement). In some embodiments, the layout of user interface 1279 is predefined, fixed, and/or static (e.g., the layout is not configurable and/or cannot be changed by a user). In some embodiments, the layout of user interface 1279 is configurable and/or selectable (e.g., the regions can be resized, changed, removed, added, and/or rearranged in response to user input). In the layout of user interface 1279, indicator region 1280a and status region 1280b are aligned horizontally above the other regions (e.g., along the top of user interface 1279 and/or display 1277), with indicator region 1280a to the left of status region 1280b. Cluster region 1280c is below (e.g., immediately adjacent below) indicator region 1280a and dynamic content region 1280d is below (e.g., immediately adjacent below) cluster region 1280c. In user interface 1279, cluster region 1280c and dynamic content region 1280d are approximately the same size (e.g., the width and/or height of cluster region 1280c is within a threshold size and/or percentage of the width and/or height of cluster region 1280d). Application region 1280e is below (e.g., immediately adjacent below) status region 1280b and to the right (e.g., immediately adjacent to the right) of cluster region 1280c and dynamic content region 1280d. In user interface 1279, application region 1280e has a height that is approximately twice the heigh of cluster region 1280c and a width that is approximately twice the width of cluster region 1280c. Lower region 1280f is aligned along a bottom of display 1277 below (e.g., immediately adjacent below) dynamic content region 1280d and/or application region 1280e. Gauge 1280g is in a top left corner of display 1277 (e.g., immediately adjacent to the left of indicator region 1280a). FIG. 12V illustrates an example of user interface 1279 with content displayed in regions 1280a-1280g.

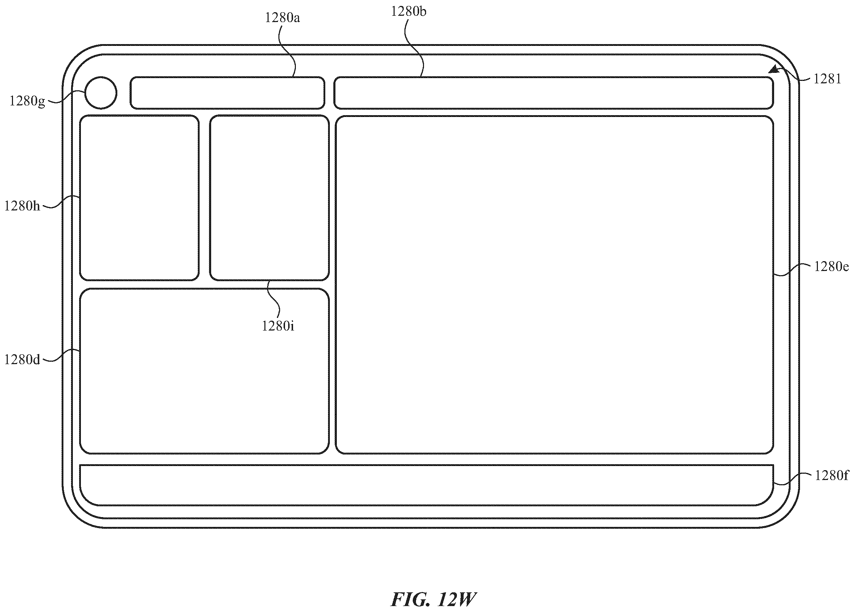

FIG. 12W illustrates user interface 1281 (e.g., a template of user interface 1281). User interface 1281 includes indicator region 1280a, status region 1280b, module region 1280h (e.g., a vertical module), module region 1280i (e.g., a vertical module), dynamic content region 1280d, application region 1280e, lower region 1280f, and gauge 1280g. In some embodiments, user interface 1281 is displayed on a single display (e.g., only one display). In some embodiments, the borders and/or outlines of some or all the regions in user interface 1281 are shown in the figures to describe the regions but are not visible and/or are not displayed on display 1277. User interface 1281 is similar to user interface 1279 except user interface 1281 includes module region 1280h and module region 1280i instead of cluster region 1280c. In some embodiments, module region 1280h and/or module region 1280i include one or more gauges. Module region 1280h and module region 1280i in user interface 1281 occupy the same area of display 1277 as cluster region 1280c in user interface 1279. Module region 1280h and module region 1280i have a same height as cluster region 1280c and a width that is approximately half the width of cluster region 1280c. Indicator region 1280a, status region 1280b, dynamic content region 1280d, application region 1280e, lower region 1280f, and gauge 1280g have the same size and position in user interface 1281 as in user interface 1279. User interface 1281 is configured to display content according to the respective regions (e.g., in a manner analogous to the example illustrated in FIG. 12V).

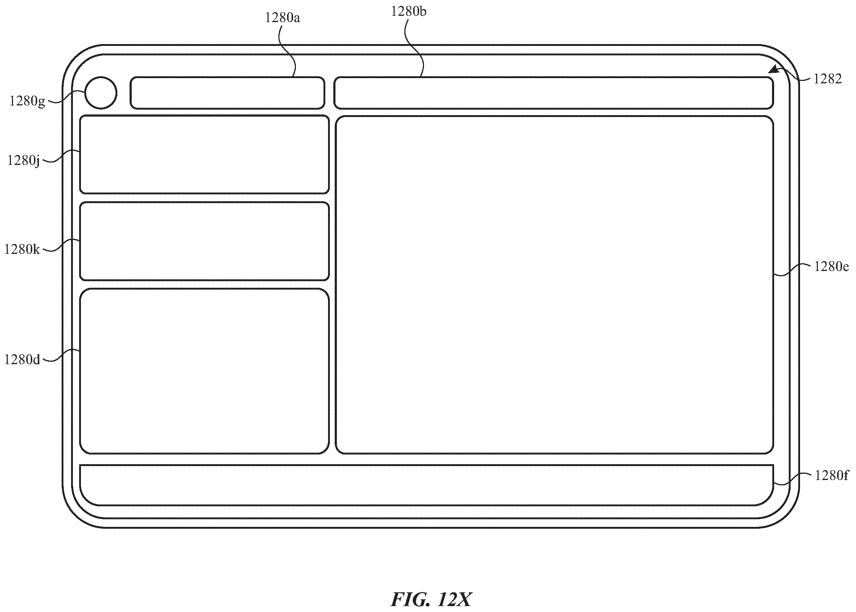

FIG. 12X illustrates user interface 1282 (e.g., a template of user interface 1282). User interface 1282 includes indicator region 1280a, status region 1280b, module region 1280j (e.g., a horizontal module), module region 1280k (e.g., a horizontal module), dynamic content region 1280d, application region 1280e, lower region 1280f, and gauge 1280g. In some embodiments, user interface 1282 is displayed on a single display (e.g., only one display). In some embodiments, the borders and/or outlines of some or all the regions in user interface 1282 are shown in the figures to describe the regions but are not visible and/or are not displayed on display 1277. User interface 1282 is similar to user interface 1279 except user interface 1282 includes module region 1280j and module region 1280k instead of cluster region 1280c. In some embodiments, module region 1280j and/or module region 1280k include one or more gauges. Module region 1280j and module region 1280k in user interface 1282 occupy the same area of display 1277 as cluster region 1280c in user interface 1279. Module region 1280j and module region 1280k have a same width as cluster region 1280c and a heigh that is approximately half the height of cluster region 1280c. Indicator region 1280a, status region 1280b, dynamic content region 1280d, application region 1280e, lower region 1280f, and gauge 1280g have the same size and position in user interface 1282 as in user interface 1279. User interface 1282 is configured to display content according to the respective regions (e.g., in a manner analogous to the example illustrated in FIG. 12V).

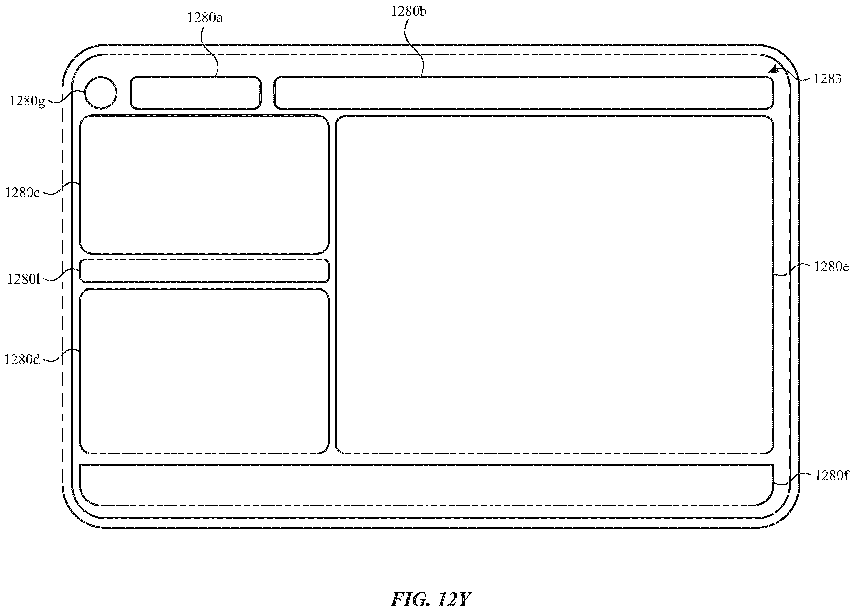

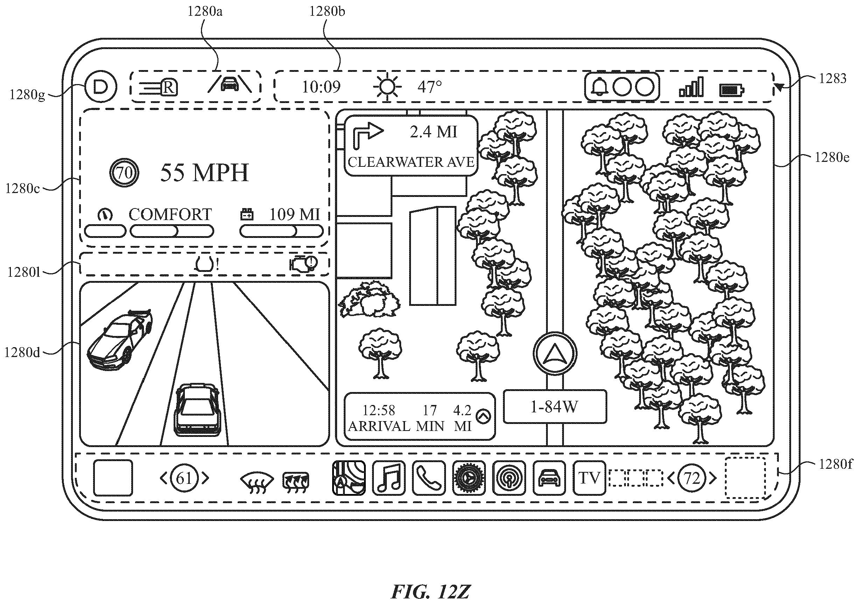

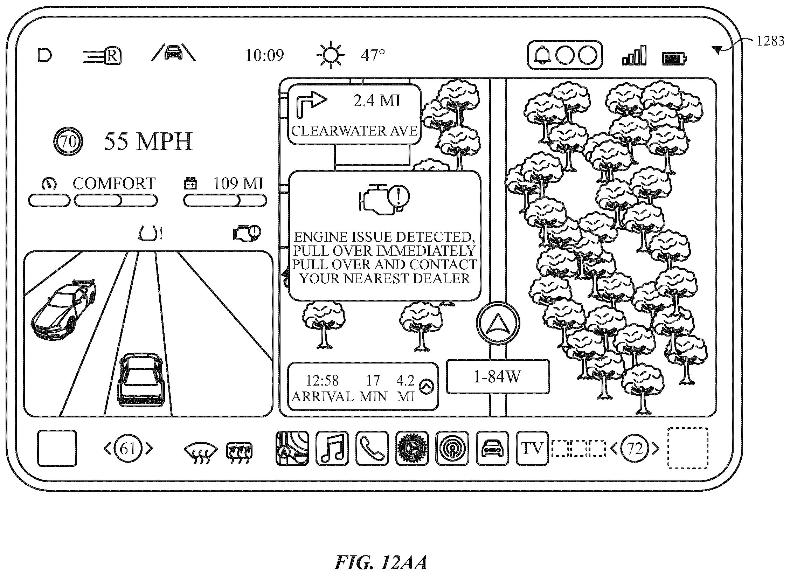

FIG. 12Y illustrates user interface 1283 (e.g., a template of user interface 1283). User interface 1283 includes indicator region 1280a, status region 1280b, cluster region 1280c, indicator region 1280l, dynamic content region 1280d, application region 1280e, lower region 1280f, and gauge 1280g. In some embodiments, user interface 1283 is displayed on a single display (e.g., only one display). In some embodiments, the borders and/or outlines of some or all the regions of user interface 1283 are shown in the figures to describe the regions but are not visible and/or are not displayed on display 1277 (e.g., as shown in FIG. 12AA). User interface 1283 is similar to user interface 1279 except user interface 1281 includes indicator region 1280l between cluster region 1280c and dynamic content region 1280d. In some embodiments, indicator region 1280l displays and/or is configured to display one or more status indicators of the first set of status indicators described above for indicator region 1280a. In some embodiments, indicator region 1280a is configured to display a first subset of the first set of status indicators (e.g., common indicators such as headlight state and/or turn signal indicators) and indicator region 1280l is configured to display a second subset of the first set of status indicators (e.g., infrequent and/or less common indicators such as a check engine indicator, failure indicators, error indicators, and/or warning indicators). In some embodiments, the first subset and the second subset are mutually exclusive. Indicator region 1280l has approximately a same width as cluster region 1280c. Compared to user interface 1279, cluster region 1280c and/or dynamic content region 1280d have a smaller height (e.g., due to the height of indicator region 1280l). Indicator region 1280a, status region 1280b, application region 1280e, lower region 1280f, and gauge 1280g have the same size and position in user interface 1283 as in user interface 1279. FIG. 12Z illustrates an example of user interface 1283 with content displayed according to the respective regions.

FIG. 12AA illustrates an embodiment of user interface 1283 that includes user interface element 1280m. In some embodiments, user interface element 1280m is an alert, a notification, and/or a pop-up. In some embodiments, computer system 1275 displays user interface element 1280m in response to detecting (or receiving an indication of detection of) a failure and/or error (e.g., a failure and/or error corresponding to a status indicator in indicator region 1280a and/or indicator region 1280l). For example, in some embodiments, user interface element 1280m provides a more prominent notification of a failure, error, and/or issue that requires attention than an indicator in indicator region 1280a or indicator region 1280l. In FIG. 12AA, user interface element 1280m includes a description of a detected issue (e.g., "Engine issue detected") and instructions associated with the issue (e.g., "Pull over immediately. Pull over and contact your nearest dealer"). In some embodiments, computer system 1275 displays user interface element 1280m for an amount of time (e.g., 1 second, 3 seconds, 5 second, 10 seconds, or 30 seconds) and ceases displaying user interface element 1280m after the amount of time has elapsed (e.g., user interface element 1280m is displayed temporarily). In some embodiments, user interface element 1280m is displayed in user interface 1279, user interface 1281, and/or other user interfaces described herein in response to detecting (or receiving an indication of detection of) a failure and/or error.

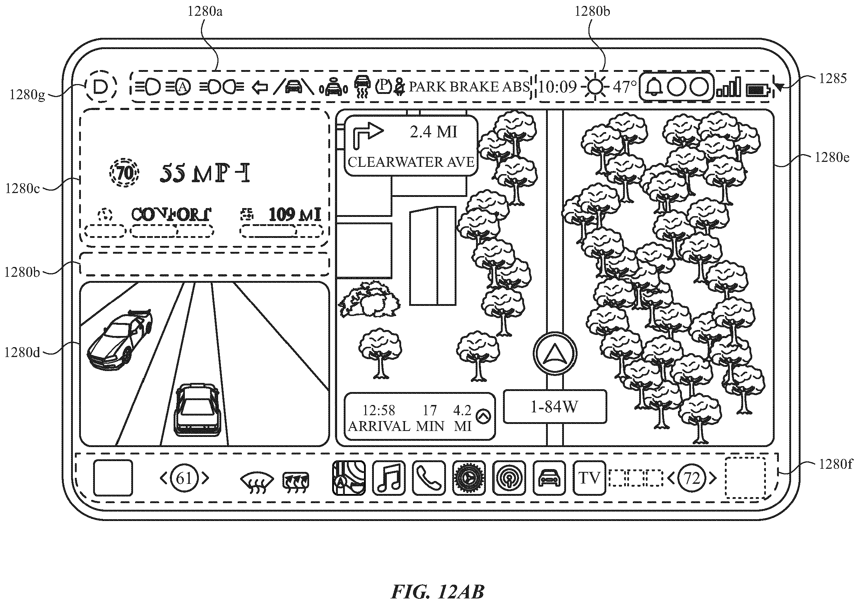

FIG. 12AB illustrates user interface 1285. User interface 1285 includes indicator region 1280a, status region 1280b, cluster region 1280c, indicator region 1280l, dynamic content region 1280d, application region 1280e, lower region 1280f, and gauge 1280g. In some embodiments, user interface 1285 is displayed on a single display (e.g., only one display). In some embodiments, the borders and/or outlines of some or all the regions in user interface 1285 are shown in the figures to describe the regions but are not visible and/or are not displayed on display 1277. User interface 1285 is similar to (e.g., the same as) user interface 1283 except indicator region 1280a is wider in user interface 1285 than in user interface 1283 and status region 1280b is narrower in user interface 1285 than in user interface 1283 (e.g., because indicator region 1280a is wider). Cluster region 1280c, indicator region 1280l, dynamic content region 1280d, application region 1280e, lower region 1280f, and gauge 1280g have the same size and position in user interface 1285 as in user interface 1283. In some embodiments, the configuration (e.g., sizes and/or positions) of indicator region 1280a and status region 1280b shown in user interface 1285 are applied to user interface 1279, user interface 1281, and/or user interface 1282 (e.g., without affecting other regions of the user interface).

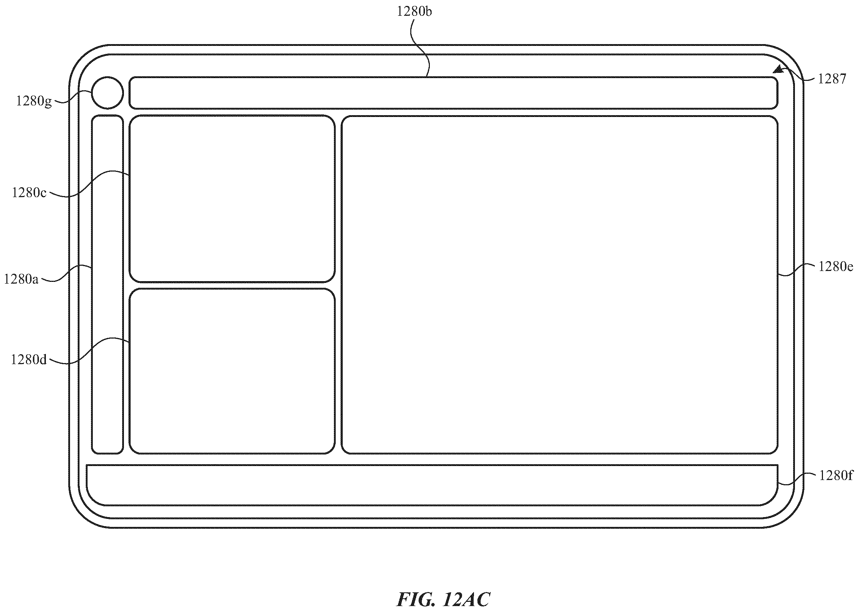

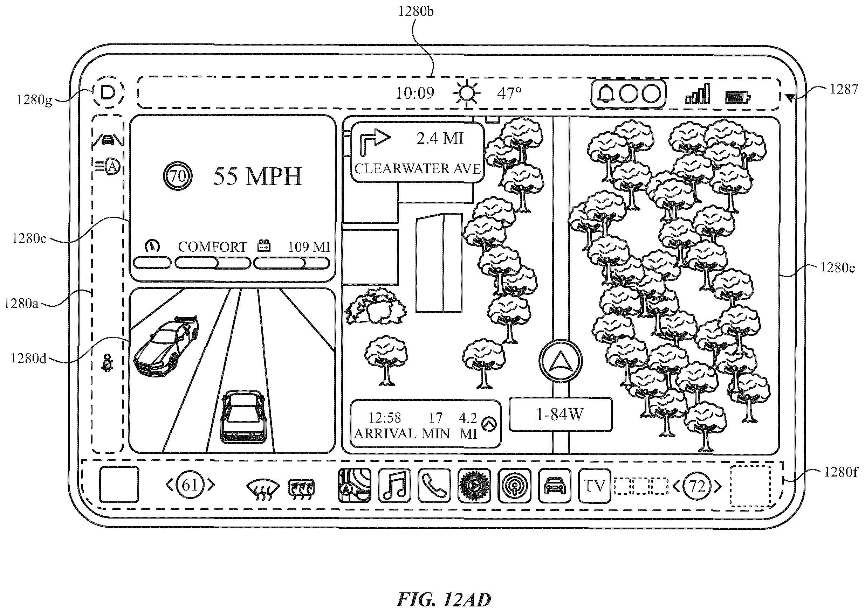

FIG. 12AC illustrates user interface 1287 (e.g., a template of user interface 1287). User interface 1287 includes indicator region 1280a, status region 1280b, cluster region 1280c, dynamic content region 1280d, application region 1280e, lower region 1280f, and gauge 1280g. In some embodiments, user interface 1287 is displayed on a single display (e.g., only one display). In some embodiments, the borders and/or outlines of some or all the regions in user interface 1287 are shown in the figures to describe the regions but are not visible and/or are not displayed on display 1277. User interface 1287 is similar to user interface 1279 except indicator region 1280a is aligned vertically to the left (e.g., immediately adjacent to the left) of cluster region 1280c and dynamic content region 1280d (e.g., along a left side of display 1277). Compared to user interface 1279, a width of cluster region 1280c, dynamic content region 1280d, and/or application region 1280e is smaller in user interface 1287 (e.g., due to the width of indicator region 1280a) and a width of status region 1280b is greater. Lower region 1280f and gauge 1280g have the same size and position in user interface 1287 as in user interface 1279. FIG. 12AD illustrates an example of user interface 1287 with content displayed in regions 1280a-1280g.

FIG. 13 is a flow diagram illustrating methods of managing a user interface, in accordance with some embodiments. Method 1300 is performed at a computer system (e.g., 100, 300, 500, 600, 1200, and/or 1275) (e.g., a smartphone, a tablet computer, a laptop computer, a wearable (e.g., head-mounted and/or wrist-worn) device, and/or a computer system of a vehicle (e.g., an automobile, a boat, or an airplane)), where the computer system is in communication with a first set of one or more display generation components (e.g., 602 and/or 1202) (e.g., one or more display generation components of the computer system, one or more display generation components of the vehicle, one or more displays set within a front console of the vehicle, one or more displays positioned ahead of and/or in front of a driver's seat of the vehicle and/or a passenger seat of the vehicle, one or more heads-up displays, one or more display drivers, and/or one or more displays of a wearable device) and one or more input devices (e.g., 602, 1202, a touch-sensitive surface (e.g., a touch-sensitive display); a mouse; a keyboard; a remote control; a visual input device (e.g., one or more cameras such as, e.g., an infrared camera, a depth camera, a visible light camera, and/or a gaze tracking camera); an audio input device (e.g., a microphone); a biometric sensor (e.g., a fingerprint sensor, a face identification sensor, a gaze tracking sensor, and/or an iris identification sensor); and/or one or more mechanical input devices (e.g., a depressible input mechanism; a button; a joystick; a rotatable input mechanism; a crown; and/or a dial)). In some embodiments, a display generation component includes a display, a touch-screen display, a monitor, a holographic display system, and/or a head-mounted display system. In some embodiments, the computer system is in communication with a vehicle (e.g., an automobile, a boat, or an airplane). For example, in some embodiments, the computer system is integrated into the vehicle, is in wired communication with the vehicle, and/or is in wireless communication with the vehicle (e.g., a smartphone, a smartwatch, a tablet computer, and/or a laptop computer that is wirelessly connected to and/or paired with the vehicle). Some operations in the method are, optionally, combined, the orders of some operations are, optionally, changed, and some operations are, optionally, omitted.

As described below, the method 1300 provides an intuitive way for managing user interfaces (e.g., for vehicle displays). The method reduces the cognitive burden on a user that views gauges to determine the state of a vehicle and/or computer system of the vehicle, thereby creating a more efficient human-machine interface. For battery-operated computing devices, enabling a user to managing user interfaces for vehicle displays faster and more efficiently conserves power and increases the time between battery charges.

The computer system displays (1302), via the first set of one or more display generation components (e.g., 1202), a representation (e.g., 1206, a graphical representation, an outline, and/or a template) of a respective region (e.g., 1204a and/or 1204b) of a second set of one or more display generation components (e.g., 602) that is different from the first set of one or more display generation components. In some embodiments, the second set of one or more display generation components includes one or more display generation components of the vehicle, one or more displays set within a front console of the vehicle, one or more displays positioned ahead of/in front of a driver's seat of the vehicle and/or a passenger seat of the vehicle, one or more heads-up displays, one or more display drivers, one or more displays of a computer system that is in communication with the vehicle, and/or one or more displays of a wearable device. In some embodiments, the representation of the respective region of the second set of one or more display generation components includes a designated and/or visually distinguished region of the first set of one or more display generation components. In some embodiments, displaying the representation of the respective region of the second set of one or more display generation components includes displaying (e.g., in the representation of the respective region of the second set of one or more display generation components) a representation of one or more graphical elements (e.g., icons, gauges, and/or widgets) associated with (e.g., displayed in) the respective region of the second set of one or more display generation components and/or displaying a representation of a configuration (e.g., a current configuration) of the one or more graphical elements associated with the respective region of the second set of one or more display generation components. In some embodiments, the one or more graphical elements are active (e.g., dynamic, interactive, updated over time, and/or selectable) when displayed in the respective region of the second set of one or more display generation components. **In** some embodiments, the representation of the one or more graphical elements is not active (e.g., the representation is static, not interactive, not updated over time, and/or not selectable). While displaying the representation of the respective region of the second set of one or more display generation components, the computer system detects (1304), via the one or more input devices, a first set of one or more inputs (e.g., 1250c, 1250d, 1250e, 1250f, 1250g, 1250h, 1250i, 1250j, 1250l, and/or 1250m) (e.g., one or more touch gestures on the first set of one or more display generation components, one or more verbal inputs, one or more button presses, one or more rotations of a rotatable input mechanism, one or more directional inputs, one or more eye gestures, and/or one or more air gestures). In response to detecting the first set of one or more inputs, the computer system sets (1306) (e.g., changing and/or adjusting) a configuration of one or more graphical elements (e.g., 1218a, 1218b, 1218c, 1218d, 1218e, user-interactive graphical elements, and/or widgets) of the respective region of the second set of one or more display generation components, including: in accordance with a determination (1308) that the respective region of the second set of one or more display generation components corresponds to a first region (e.g., 1204a) of the second set of one or more display generation components, the computer system sets a configuration of one or more graphical elements (e.g., 1218a, 1218b, 1218c, and/or 1218d) of the first region of the second set of one or more display generation components; and in accordance with a determination (1310) that the respective region of the second set of one or more display generation components corresponds to a second region (e.g., 1204b) of the second set of one or more display generation components that is different from the first region of the second set of one or more display generation components, the computer system sets a configuration of one or more graphical elements (e.g., 1218e) of the second region of the second set of one or more display generation components. The one or more graphical elements are displayed (or, in some embodiments, configured to be displayed) in the respective region of the second set of one or more display generation components (e.g., 602) according to the configuration set in response to detecting the first set of one or more inputs. For example, the set of one or more inputs configures the graphical elements displayed in a selected region of the second set of one or more display generation components. In some embodiments, the first set of display generation components is separate from the second set of one or more display generation components. For example, in some embodiments, a user can configure the display of the second set of display generation components using a device and/or display that is easier for the user to interact with than the second set of display generation components (e.g., the first set of one or more display generation components is used to configure how the one or more graphical elements are displayed on the second set of one or more display generation components). In some embodiments, the second set of display generation components does not include an input device and/or user interface for configuring graphical elements on the second set of one or more display generation components. Setting a configuration of one or more graphical elements of either a first region or a second region of a second set of one or more display generation components depending on which region the representation of the respective region corresponds to enables a user to quickly and easily configure a selected region, thereby providing reducing the number of inputs needed to perform an operation and performing an operation when a set of conditions has been met without requiring further user input.

In some embodiments, the first region and the second region are mutually exclusive. In some embodiments, the respective region of the second set of one or more display generation components includes a left-side portion of the second set of one or more display generation components (e.g., and does not include a center portion and/or a right-side portion of the second set of display generation components). In some embodiments, the respective region of the second set of one or more display generation components includes a region in front of a driver's seat of the vehicle. In some embodiments, the respective region of the second set of one or more display generation components includes a center portion of the second set of one or more display generation components (e.g., and does not include a left-side portion and/or a right-side portion of the second set of display generation components). In some embodiments, the respective region of the second set of one or more display generation components includes a region between the driver's seat of the vehicle and a passenger seat of the vehicle. In some embodiments, the respective region of the second set of one or more display generation components includes a right-side portion of the second set of one or more display generation components (e.g., and does not include a left-side portion and/or the center portion of the second set of display generation components). In some embodiments, the respective region of the second set of one or more display generation components includes a region in front of a passenger seat of the vehicle. In some embodiments, the first region includes a region in front of a driver's seat of the vehicle (e.g., a driver's region) and the second region includes a region between the driver's seat and the passenger seat (e.g., a center region) and/or a region in front of the passenger seat (e.g., a passenger region). In some embodiments, the first region includes a region between the driver's seat and the passenger seat (e.g., a center region) and the second region includes a region in front of a driver's seat of the vehicle (e.g., a driver's region) and/or a region in front of the passenger seat (e.g., a passenger region). In some embodiments, the first region of the second set of one or more display generation components includes a first set of one or more graphical elements and the second region of the second set of one or more display generation components includes a second set of one or more graphical elements that is different from the first set of one or more graphical elements (e.g., the one or more graphical elements of the first region are different from the one or more graphical elements of the second region; and/or the first region includes different graphical elements than the second region).

In some embodiments, the respective region of the second set of one or more display generation components includes a region of an instrument cluster (e.g., 604A, 604B, 604C, 804A, and/or 1004A) of a vehicle. In some embodiments, the instrument cluster includes (e.g., displays) one or more gauges (e.g., digital gauges), a tachometer (e.g., a digital tachometer), and/or one or more graphical indicators of status of a vehicle. Setting the configuration of a region of an instrument cluster by displaying a representation of the region of the instrument cluster via the first set of one or more display generation components makes it easier to configure the instrument cluster, thereby providing improved visual feedback to the user, reducing the number of inputs needed to perform an operation, and/or providing additional control options without cluttering the user interface with additional displayed controls.

In some embodiments, the one or more graphical elements of the respective region of the second set of one or more display generation components include a widget. In some embodiments, a widget includes (e.g., displays) information obtained from an application (e.g., a weather application, a music application, a clock application, a calendar application, an email application, a messaging application, a camera application, a phone application, a multimedia (e.g., video, podcast, and/or streaming application, a vehicle control and/or status application, a maps application, and/or a navigation application) that is updated over time as new information is obtained from the application. In some embodiments, a user can interact with (e.g., tap and/or select) a widget (e.g., to open a corresponding application). Setting a configuration of widgets by displaying a representation of the region via the first set of one or more display generation components makes it easier to configure the widgets on the second set of one or more display generation components, thereby providing improved visual feedback to the user, reducing the number of inputs needed to perform an operation, and providing additional control options without cluttering the user interface with additional displayed controls.

In some embodiments, configuring the one or more graphical elements of the respective region of the second set of one or more display generation components includes removing a graphical element from the respective region of the second set of one or more display generation components (e.g., 1218b is removed in FIGS. 12E-12F). Enabling the computer system to remove a graphical element from the respective region of the second set of one or more display generation components provides greater control over the appearance and functionality of the respective region, thereby providing improved visual feedback to the user, reducing the number of inputs needed to perform an operation, and providing additional control options without cluttering the user interface with additional displayed controls.

In some embodiments, configuring the one or more graphical elements of the respective region of the second set of one or more display generation components includes changing a position of one or more of the one or more graphical elements of the respective region of the second set of one or more display generation components (e.g., moving a graphical element from a first position in the respective region to a second position in the respective region that is different from the first position). For example, the positions of 1218b and 1218c are changed in FIGS. 12C-12E. Enabling a user to change a position of one or more of the one or more graphical elements of the respective region of the second set of one or more display generation components provides the user with greater control over the appearance and functionality of the respective region, thereby providing improved visual feedback to the user, reducing the number of inputs needed to perform an operation, and providing additional control options without cluttering the user interface with additional displayed controls.

In some embodiments, while the representation of the respective region of the second set of one or more display generation components corresponds to the first region (e.g., 1204a) of the second display generation component, the computer system detects, via the one or more input devices, a set of one or more inputs (e.g., 1250k) (e.g., one or more touch gestures on the first set of one or more display generation components, one or more verbal inputs, one or more button presses, one or more rotations of a rotatable input mechanism, one or more directional inputs, one or more eye gestures, and/or one or more air gestures) corresponding to a request to select the second region (e.g., 1204b) of the second set of one or more display generation components; and in response to detecting the set of one or more inputs corresponding to a request to select the second region of the second set of one or more display generation components, the computer system causes the representation of the respective region (e.g., 1206) of the second set of one or more display generation components to correspond to the second region of the second set of one or more display generation components. Changing the region of the second set of one or more display generation components to which the representation of the respective region corresponds in response to a set of one or more inputs enables the user to configure different regions of the second set of one or more display generation components and reduces the amount of space on the first set of one or more display generation components required to configure the second set of one or more display generation components, thereby providing improved visual feedback to the user, reducing the number of inputs needed to perform an operation, and providing additional control options without cluttering the user interface with additional displayed controls. **In** some embodiments, causing the representation of the respective region of the second set of one or more display generation components to correspond to the second region of the second set of one or more display generation components includes displaying a representation of the second region of the second set of one or more display generation components (e.g., including displaying a representation of a configuration of one or more graphical elements associated with the second region of the second set of one or more display generation components). In some embodiments, in response to detecting the set of one or more inputs corresponding to a request to select the second region of the second set of one or more display generation components, the computer system places focus on (e.g., visually highlights and/or outlines) a graphical representation on the first set of one or more display generation components of the second region (e.g., moves focus from a representation of the first region to a representation of the second region). In some embodiments, the set of one or more inputs corresponding to the request to select the second region of the second set of one or more display generation components includes selection of an option (e.g., a user interface element, a graphical user interface element, an icon, a button, an affordance, and/or a user interactive user interface object) that corresponds to the second region of the second set of one or more display generation components.

In some embodiments, the respective region of the second set of one or more display generation components component is aligned with a driver's seat of a vehicle. For example, in some embodiments, center region 1204a is at least partially aligned with a driver's seat of a vehicle. Enabling the computer system to set a configuration of a display region that is aligned with a driver's seat of a vehicle provides greater control over the appearance and functionality of the respective region, thereby providing improved visual feedback to the user, reducing the number of inputs needed to perform an operation, and providing additional control options without cluttering the user interface with additional displayed controls.

In some embodiments, the respective region of the second set of one or more display generation components component is aligned with a passenger seat of a vehicle (e.g., passenger region 1204b is aligned with a passenger seat of a vehicle). Enabling the computer system to set a configuration of a display region that is aligned with a passenger seat of a vehicle provides greater control over the appearance and functionality of the respective region, thereby providing improved visual feedback to the user, reducing the number of inputs needed to perform an operation, and providing additional control options without cluttering the user interface with additional displayed controls.

In some embodiments, the respective region of the second set of one or more display generation components is aligned with (e.g., in front of and/or above) a center console of a vehicle (e.g., at least a portion of the respective region of the second set of one or more display generation components is between a driver's seat and a passenger seat of the vehicle). For example, in some embodiments, center region 1204a is at least partially aligned with a center console of a vehicle. Enabling the computer system to set a configuration of a display region that is aligned with a center console of a vehicle provides greater control over the appearance and functionality of the respective region, thereby providing improved visual feedback to the user, reducing the number of inputs needed to perform an operation, and providing additional control options without cluttering the user interface with additional displayed controls.

In some embodiments, the set of one or more inputs includes a touch input on a touch-sensitive surface (e.g., of the first set of one or more display generation components). For example, in some embodiments, a user can provide touch inputs on the first set of one or more display generation components to configure an appearance of an interface displayed on the second set of one or more display generation components. In some embodiments, one or more of inputs 1250c, 1250d, 1250e, 1250f, 1250g, 1250h, 1250i, 1250j, 1250l, and/or 1250m includes a touch input on a touch-sensitive surface. Providing a user interface that enables a user to configure the second set of one or more display generation components using touch inputs provides an easier and more efficient technique for configuring the second set of one or more display generation components, thereby providing improved visual feedback to the user, reducing the number of inputs needed to perform an operation, and providing additional control options without cluttering the user interface with additional displayed controls.

In some embodiments, displaying, via the first set of one or more display generation components, the representation of a respective region of the second set of one or more display generation components includes displaying a representation (e.g., 1220a, 1220b, 1220c, 1220d, 1220e, 1220f, 1220g, 1220h, 1220i, and/or 1220j) of one or more graphical elements of the respective region of the second set of one or more display generation components. For example, the first set of one or more display generation components displays a representation of a current configuration of the one or more graphical elements of the respective region of the second set of one or more display generation components and/or a change in configuration of the one or more graphical elements of the respective region of the second set of one or more display generation components. For example, in some embodiments, the representation displayed on the first set of one or more display generation components illustrates how the one or more graphical elements will be (or are) displayed on the second set of one or more display generation components. Displaying a representation of one or more graphical elements of the respective region via the first set of one or more display generation components provides a preview of the appearance of the respective region, thereby providing improved visual feedback to the user, reducing the number of inputs needed to perform an operation, and providing additional control options without cluttering the user interface with additional displayed controls.

In some embodiments, setting the configuration of the one or more graphical elements of the respective region of the second set of one or more display generation components includes: in accordance with a determination that the respective region of the second set of one or more display generation components corresponds to a third region of the second set of one or more display generation components (e.g., a region of 602 that is different from 1204a and 1204b), setting a configuration of one or more graphical elements of the third region of the second set of one or more display generation components, wherein the third region of the second set of one or more display generation components is different from the first region of the second set of one or more display generation components and is different from the second region of the second set of one or more display generation components. Setting a configuration of one or more graphical elements of either a first region, a second region, or a third region of a second set of one or more display generation components depending on which region the representation of the respective region corresponds to enables a user to quickly and easily configure a selected region, thereby providing reducing the number of inputs needed to perform an operation and performing an operation when a set of conditions has been met without requiring further user input. In some embodiments, the third region of the second set of one or more display generation components includes a third set of one or more graphical elements that is different from the one or more graphical elements of the first region of the second set of one or more display generation components and/or is different from the one or more graphical elements of the second region of the second set of one or more display generation components (e.g., the one or more graphical elements of the third region are different from the one or more graphical elements of the first region and/or the second region; and/or the third region includes different graphical elements than the first region and/or the second region). In some embodiments, while the representation of the respective region of the second set of one or more display generation components corresponds to the first region of the second display generation component or the second region of the second display generation component, the computer system detects, via the one or more input devices, a set of one or more inputs corresponding to a request to select the third region of the second set of one or more display generation components; and in response to detecting the set of one or more inputs corresponding to a request to select the third region of the second set of one or more display generation components, the computer system causes the representation of the respective region of the second set of one or more display generation components to correspond to the third region of the second set of one or more display generation components. In some embodiments, the set of one or more inputs corresponding to the request to select the third region of the second set of one or more display generation components includes selection of an option (e.g., a user interface element, a graphical user interface element, an icon, a button, an affordance, and/or a user interactive user interface object) that corresponds to the third region of the second set of one or more display generation components.

Note that details of the processes described with respect to method 1300 (e.g., FIG. 13) are also applicable in an analogous manner to the methods described above and below. For example, methods 700, 900, 1100, and/or 1400 optionally include one or more of the characteristics of the various methods described above with reference to method 1300. For example, the computer system in methods 700, 900, 1100, and/or 1400 is the same computer system as in method 1300.

FIG. 14 is a flow diagram illustrating methods of managing a user interface, in accordance with some embodiments. Method 1400 is performed at a computer system (e.g., 100, 300, 500, 600, 1200, and/or 1275) (e.g., a smartphone, a tablet computer, a laptop computer, a wearable (e.g., head-mounted and/or wrist-worn) device, and/or a computer system of a vehicle (e.g., an automobile, a boat, or an airplane)), where the computer system is in communication with one or more display generation components (e.g., 602 and/or 1202) (e.g., one or more display generation components of the computer system, one or more display generation components of the vehicle, one or more displays set within a front console of the vehicle, one or more displays positioned ahead of and/or in front of a driver's seat of the vehicle and/or a passenger seat of the vehicle, one or more heads-up displays, one or more display drivers, and/or one or more displays of a wearable device). In some embodiments, the computer system is in communication with one or more input devices (e.g., a touch-sensitive surface (e.g., a touch-sensitive display); a mouse; a keyboard; a remote control; a visual input device (e.g., one or more cameras such as, e.g., an infrared camera, a depth camera, a visible light camera, and/or a gaze tracking camera); an audio input device (e.g., a microphone); a biometric sensor (e.g., a fingerprint sensor, a face identification sensor, a gaze tracking sensor, and/or an iris identification sensor); and/or one or more mechanical input devices (e.g., a depressible input mechanism; a button; a joystick; a rotatable input mechanism; a crown; and/or a dial)). In some embodiments, a display generation component includes a display, a touch-screen display, a monitor, a holographic display system, and/or a head-mounted display system. In some embodiments, the computer system is in communication with a vehicle (e.g., an automobile, a boat, or an airplane). For example, in some embodiments, the computer system is integrated into the vehicle, is in wired communication with the vehicle, and/or is in wireless communication with the vehicle (e.g., a smartphone, a smartwatch, a tablet computer, and/or a laptop computer that is wirelessly connected to and/or paired with the vehicle). Some operations in the method are, optionally, combined, the orders of some operations are, optionally, changed, and some operations are, optionally, omitted.

As described below, the method provides an intuitive way for managing user interfaces (e.g., for vehicle displays). The method reduces the cognitive burden on a user that views gauges to determine the state of a vehicle and/or computer system of the vehicle, thereby creating a more efficient human-machine interface. For battery-operated computing devices, enabling a user to managing user interfaces for vehicle displays faster and more efficiently conserves power and increases the time between battery charges.

The computer system receives (1402) an indication of an input (e.g., 1250n, 1250o, 1250p, and/or 1250q) corresponding to a parameter (e.g., a climate parameter and/or a vehicle parameter). In some embodiment, the input corresponding to the parameter includes an input corresponding to a request to set, confirm, change, and/or display a state of the parameter (e.g., a request to change the state of the parameter from a first state to a second state). In some embodiments, the input includes activation of an input device (e.g., a button, dial, knob, lever, joystick, and/or touch-sensitive surface) and/or other input. In some embodiments, the indication of the input corresponding to the parameter includes data that represents the input, the parameters, a state of the parameter, and/or a change in the state of the parameter. In some embodiments, receiving the indication of the input corresponding to the parameter includes receiving the indication (e.g., data) from an external computer system that detects the input. In some embodiments, receiving the indication of the input corresponding to the parameter includes detecting the input via one or more input devices that are in communication with the computer system. In response to receiving the indication of the input corresponding to the parameter, the computer system initiates (1404), via the one or more display generation components, display of a respective graphical indication corresponding to the parameter (e.g., initiating display of 1208a and/or 1208b, highlighting 1216c in FIG. 12R, and/or updating the appearance of 1216b in FIG. 12T). After (e.g., in response to a determination that) a threshold amount of time (e.g., 1 second, 2 seconds, 3 seconds, 5 seconds, 10 seconds, or 30 seconds) has elapsed (1406) since initiating display of the respective graphical indication corresponding to the parameter: in accordance with a determination (1408) that the computer system is operating in a first mode of operation (e.g., a first display mode and/or a temporary display mode), the computer system ceases (e.g., the computer system stops and/or removes) display of the respective graphical indication corresponding to the parameter (e.g., the computer system displays a user interface, such as an instrument cluster, without the respective graphical indication corresponding to the parameter) (e.g., control indicator 1208a ceases being displayed in FIG. 12Q and/or control indicator 1208b ceases being displayed in FIG. 12Q2); and in accordance with a determination (1410) that the computer system is operating in a second mode of operation (e.g., a second display mode, an extended display mode, and/or a permanent display mode) that is different from the first mode of operation, the computer system maintains display of the respective graphical indication corresponding to the parameter (e.g., 1216c remains highlighted in FIG. 12T and/or the appearance of 1216b is maintained after the threshold amount of time has elapsed since the appearance of 1216b was updated in FIG. 12T). Ceasing or maintaining display of the respective graphical indication corresponding to the parameter based on the mode of operation of the computer system enables the computer system to provide a customizable user interface and conserve display space, thereby providing improved visual feedback to the user and performing an operation when a set of conditions has been met without requiring further user input.

In some embodiments, an appearance of the respective graphical indication corresponding to the parameter is based on the parameter (e.g., the respective graphical indication has a first appearance for a first parameter and a second appearance for a second parameter, where the second appearance is different from the first appearance and the second parameter is different from the first parameter). For example, in some embodiments, initiating display of the respective graphical indication corresponding to the parameter includes: in accordance with a determination that the parameter corresponds to a first parameter, initiating display of a graphical indication of the first parameter (e.g., the respective graphical indication is the graphical indication of the first parameter); and in accordance with a determination that the parameter corresponds to a second parameter that is different from the first parameter, initiating display of a graphical indication of the second parameter (e.g., the respective graphical indication is the graphical indication of the second parameter), where the graphical indication of the first parameter is different from the graphical indication of the second parameter. In some embodiments, an appearance of the respective graphical indication corresponding to the parameter is based on a state of the parameter (e.g., the respective graphical indication has a first appearance for a first state of the parameter and a second appearance for a second state of the parameter, where the second appearance is different from the first appearance and the second state of the parameter is different from the first state of the parameter). For example, in some embodiments, initiating display of the respective graphical indication corresponding to the parameter includes: in accordance with a determination that the parameter is set to a first state, initiating display of the respective graphical indication having a first appearance; and in accordance with a determination that the parameter is set to a second state that is different from the first state, initiating display of the respective graphical indication having a second appearance, where the first appearance is different from the second appearance.

In some embodiments, the input corresponding to the parameter includes a press of a physical button (e.g., on a console of a vehicle) (e.g., a press of one or more of controls 1212a-1212i). In some embodiments, the input corresponding to the parameter includes a contact on a touch-sensitive surface (e.g., a contact on the one or more display generation components in communication with the computer system and/or a contact on a touch-sensitive surface that is separate from the one or more display generation components in communication with the computer system). Initiating display of the respective graphical indication corresponding to the parameter in response to a press of a physical button informs a user of the state of the parameter and of the result of the input, thereby providing improved visual feedback to the user.

In some embodiments, the input corresponding to the parameter includes a request to change a state of the parameter (e.g., from a first state to a second state that is different from the first state). For example, input 1250n and input 1250o correspond to requests to change a state of a recirculation parameter and input 1250q corresponds to a request to change a state of a fan speed parameter. In some embodiments, the state of the parameter is not changed in response to a request to change the state of the parameter (e.g., if the parameter is already in the requested state, if the request is to decrease a state when the parameter is already in a minimum state, and/or if the request is to increase a state when the parameter is already in a maximum state). Initiating display of the respective graphical indication corresponding to the parameter in response to a request to change a state of the parameter informs the user about whether the state of the parameter was changed as requested and the resulting state of the parameter which enables the user to provide more accurate inputs and reduce mistakes, thereby providing improved visual feedback to the user and reducing the number of inputs needed to perform an operation.

In some embodiments, the parameter is a climate setting of a vehicle (e.g., a temperature, fan speed, circulation mode, defroster mode, heater mode, and/or vent setting). In some embodiments, the parameter is a vehicle parameter that corresponds to a state and/or setting of the vehicle (e.g., gear state, seat position, speed, proximity to an external object, and/or location of the vehicle). Selectively ceasing or maintaining display of an indication of a climate setting of a vehicle based on the mode of operation of the computer system enables the computer system to provide a customizable user interface and conserve display space, thereby providing improved visual feedback to the user and performing an operation when a set of conditions has been met without requiring further user input.

In some embodiments, the one or more display generation components include an instrument cluster (e.g., 604A, 604B, 604C, 804A, and/or 1004A) of a vehicle (e.g., the respective graphical indication corresponding to the parameter is displayed on an instrument cluster and/or dashboard of the vehicle). Displaying a graphical indication of a parameter on an instrument cluster of the vehicle efficiently and conspicuously informs the user of the state of the parameter, thereby providing improved visual feedback to the user and reducing the number of inputs needed to perform an operation.

In some embodiments, in accordance with a determination that the computer system is operating in the first mode of operation, a second graphical indication (e.g., 1210a and/or 1210b) corresponding to the parameter (e.g., a cabin temperature) is displayed (e.g., persistently displayed) on a second display generation component (e.g., 1202) that is not included in the one or more display generation components; and in accordance with a determination that the computer system is operating in the second mode of operation, the second graphical indication corresponding to the parameter is not displayed on the second display generation component (e.g., in some embodiments, computer system 1200 does not display temperature element 1210a and/or temperature element 1210b on display 1202 in FIG. 12T). In some embodiments, when the computer system is operating in the first mode of operation, the second graphical indication is displayed on the second display generation component prior to the input corresponding to the parameter and remains displayed on the second display generation component after the computer system ceases display of the respective graphical indication on the one or more display generation components. Selectively displaying a second graphical indication corresponding to the parameter on a second display generation component based on whether the computer system is operating in the first or second mode informs the user of the state of the parameter while conserving display space, thereby providing improved visual feedback to the user, providing additional control options without cluttering the user interface with additional displayed controls, and performing an operation when a set of conditions has been met without requiring further user input.

In some embodiments, the respective graphical indication corresponding to the parameter includes an indication of a state (e.g., on, off, high, low, min, max, a level, and/or a value) of the parameter (e.g., a current state of the parameter and/or a state to which the parameter was changed). In some embodiments, the indication of the state of the parameter includes a number, a color, an image, a symbol, and/or text that represents the state of the parameter (e.g., the appearance of the indication is based on the state of the parameter). For example, control indicator 1208a includes the word "on" and control indicator 1216b includes a ring, the fill of which indicates a fan speed state. Including an indication of the state of the parameter provides additional information about the parameter to the user, thereby providing improved visual feedback to the user.

Note that details of the processes described with respect to method 1400 (e.g., FIG. 14) are also applicable in an analogous manner to the methods described above. For example, methods 700, 900, 1100, and/or 1300 optionally include one or more of the characteristics of the various methods described above with reference to method 1400. For example, the computer system in methods 700, 900, 1100, and/or 1300 is the same computer system as in method 1400.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the techniques and their practical applications. Others skilled in the art are thereby enabled to best utilize the techniques and various embodiments with various modifications as are suited to the particular use contemplated.

Although the disclosure and examples have been fully described with reference to the accompanying drawings, it is to be noted that various changes and modifications will become apparent to those skilled in the art.

As described above, one aspect of the present technology is the gathering and use of data available from various sources to improve display of gauges. The present disclosure contemplates that in some instances, this gathered data may include personal information data that uniquely identifies or can be used to contact or locate a specific person. Such personal information data can include demographic data, location-based data, telephone numbers, email addresses, social network IDs, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to provide navigation instructions. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case instrument clusters and gauges, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, the location of the user or vehicle can be inferred based on non-personal information data or a bare minimum amount of personal information, such as the content being requested by the device associated with a user, other non-personal information available to the content delivery services, or publicly available information.

## Claims

1. A method (700), comprising:
at a computer system (600), wherein the computer system is in communication with one or more display generation components:
displaying (702), via the one or more display generation components and as part of an instrument cluster, a power gauge that includes:
a path that corresponds to amounts of power (704), including electric power and combustion power, wherein the path includes:
a first segment that corresponds to an amount of electric power being generated and/or stored;
a second segment that corresponds to an amount of electric power being used; and
a third segment that corresponds to an amount of power of a combustion engine; and
an indicator that moves along the path based on changes in the amounts of electric power and combustion power (706), and wherein the indicator indicates amounts of electric power and combustion power;
while displaying the power gauge, detecting (708) a change in amount of power; and
in response to detecting the change in amount of power:
updating (710), via the one or more display generation components, the power gauge by moving the indicator along the path based on the change in amount of power;
in accordance with a determination that the change in the amount of power indicates a non-zero amount of power of the combustion engine, displaying, via the one or more display generation components, a visual indication of a redline portion; and
in accordance with a determination that the change in the amount of power indicates zero amount of power of the combustion engine, forgoing displaying, via the one or more display generation components, the visual indication of the redline portion.

2. The method (700) of claim 1, wherein the amount of electric power being generated and/or stored is an amount of electric power being generated by one or more electric motors and/or an amount of electric power being stored in one or more batteries of a vehicle.

3. The method (700) of any of claims 1-2, wherein the amount of electric power being used is an amount of power being output by one or more batteries of a vehicle.

4. The method (700) of any of claims 1-2, wherein the amount of electric power being used is based on an amount of power usage of one or more electric motors.

5. The method (700) of any of claims 1-4, wherein the amount of power of the combustion engine is based on a power output of the combustion engine.

6. The method (700) of any of claims 1-5, wherein the amount of power of the combustion engine is based on revolutions per minute of the combustion engine.

7. The method (700) of any preceding claim, further comprising:
while displaying the power gauge with the indicator indicating zero amount of power of the combustion engine, forgoing displaying, via the one or more display generation components, the visual indication of a redline portion

8. The method (700) of any preceding claim, further comprising:
in response to detecting a change in amount of power and in accordance with a determination that the change in amount of power corresponds to a change from using electric power to generate and/or store electric power, updating the power gauge by moving the indicator along the path based on the change in amount of power including moving the indicator from indicating an amount of power in the second segment to indicating an amount of power in the first segment.

9. The method (700) of any preceding claim, further comprising:
in response to detecting a change in amount of power and in accordance with a determination that the change in amount of power corresponds to a change from generating and/or storing electric power to using electric power, updating the power gauge by moving the indicator along the path based on the change in amount of power including moving the indicator from indicating an amount of power in the first segment to indicating an amount of power in the second segment.

10. The method (700) of any preceding claim, further comprising:
in response to detecting a change in amount of power and in accordance with a determination that the change in amount of power corresponds to a change from not using combustion power to using combustion power, updating the power gauge by moving the indicator along the path based on the change in amount of power including moving the indicator from indicating an amount of power in the second segment to indicating an amount of power in the third segment.

11. The method (700) of any preceding claim, wherein updating the power gauge by moving the indicator along the path based on the change in amount of power includes:
in accordance with a determination that the change in amount of power includes an increase in amount of electric power being generated and/or stored, moving the indicator in a first direction to indicate the increase in amount of electric power being generated and/or stored; and
in accordance with a determination that the change in amount of power includes an increase in amount of electric power being used, moving the indicator in a second direction, different from the first direction, to indicate the increase in amount of electric power being used.

12. The method (700) of preceding claim, further comprising:
in accordance with a determination that the indicator indicates an amount of electric power being generated and/or stored, displaying, via the one or more display generation components, a visual indication that electric power is being generated and/or store that is separate from the indicator; and
in accordance with a determination that the indicator indicates an amount of electric power being used, forgoing display of the visual indication that electric power is being generated and/or store.

13. The method (700) of any preceding claim, wherein the second segment corresponds to a first unit of measure and the third segment corresponds to a second unit of measure that is different from the first unit of measure.

14. A computer-readable medium comprising one or more programs configured to be executed by one or more processors of a computer system (600) that is in communication with one or more display generation components, the one or more programs including instructions for performing the method (700) of any preceding claim.

15. A computer system (600) that is configured to communicate with one or more display generation components, the computer system comprising:
one or more processors; and
memory storing one or more programs configured to be executed by the one or more processors, the one or more programs including instructions for performing the method (700) of any of claims 1-13.

## Patentansprüche

1. Ein Verfahren (700), umfassend:
an einem Computersystem (600), wobei das Computersystem mit einer oder mehreren Anzeigeerzeugungskomponenten in Verbindung steht:
Anzeigen (702), über die eine oder die mehreren Anzeigeerzeugungskomponenten und als Teil eines Kombiinstruments,
eines Leistungsmessers, der Folgendes beinhaltet:
einen Pfad, der Leistungsmengen (704) entspricht, einschließlich elektrischer Leistung und Verbrennungsleistung, wobei der Pfad Folgendes beinhaltet:
ein erstes Segment, das einer Menge an elektrischer Leistung entspricht, die erzeugt und/oder gespeichert wird;
ein zweites Segment, das einer Menge an elektrischer Leistung entspricht, die verwendet wird; und
ein drittes Segment, das einer Leistungsmenge eines Verbrennungsmotors entspricht; und
einen Indikator, der sich basierend auf Änderungen der Mengen an elektrischer Leistung und Verbrennungsleistung (706) entlang des Pfads bewegt, und wobei der Indikator Mengen an elektrischer Leistung und Verbrennungsleistung angibt;
während Anzeigens des Leistungsmessers, Erfassen (708) einer Änderung der Leistungsmenge; und
als Reaktion auf Erfassen der Änderung der Leistungsmenge:
Aktualisieren (710), über die eine oder die mehreren Anzeigeerzeugungskomponenten, des Leistungsmessers durch Bewegen des Indikators entlang des Pfads basierend auf der Änderung der Leistungsmenge;
gemäß einer Bestimmung, dass die Änderung der Leistungsmenge eine von Null verschiedene Leistungsmenge des Verbrennungsmotors angibt, Anzeigen, über die eine oder die mehreren
Anzeigeerzeugungskomponenten, einer visuellen Angabe eines Rotlinienabschnitts; und
gemäß einer Bestimmung, dass die Änderung der Leistungsmenge eine von Null verschiedene Leistungsmenge des Verbrennungsmotors angibt,
Verzichten auf Anzeigen, über die eine oder die mehreren Anzeigeerzeugungskomponenten, der visuellen Angabe des Rotlinienabschnitts.

2. Das Verfahren (700) nach Anspruch 1, wobei die Menge an elektrischer Leistung, die erzeugt und/oder gespeichert wird, eine Menge an elektrischer Leistung, die durch einen oder mehrere Elektromotoren erzeugt wird, und/oder eine Menge an elektrischer Leistung, die in einer oder mehreren Batterien eines Fahrzeugs gespeichert wird, ist.

3. Das Verfahren (700) nach einem der Ansprüche 1-2, wobei die Menge an elektrischer Leistung, die verwendet wird, eine Leistungsmenge ist, die durch eine oder mehrere Batterien eines Fahrzeugs ausgegeben wird.

4. Das Verfahren (700) nach einem der Ansprüche 1-2, wobei die Menge an elektrischer Leistung, die verwendet wird, auf einer Leistungsverbrauchsmenge eines oder mehrerer Elektromotoren basiert.

5. Das Verfahren (700) nach einem der Ansprüche 1-4, wobei die Leistungsmenge des Verbrennungsmotors auf einer Leistungsausgabe des Verbrennungsmotors basiert.

6. Das Verfahren (700) nach einem der Ansprüche 1-5, wobei die Leistungsmenge des Verbrennungsmotors auf Umdrehungen pro Minute des Verbrennungsmotors basiert.

7. Das Verfahren (700) nach einem der vorhergehenden Ansprüche, ferner umfassend:
während Anzeigens des Leistungsmessers mit dem Indikator, der eine von Null verschiedene Leistungsmenge des Verbrennungsmotors angibt, Verzichten auf Anzeigen, über die eine oder die mehreren Anzeigeerzeugungskomponenten, der visuellen Angabe eines Rotlinienabschnitts.

8. Das Verfahren (700) nach einem der vorhergehenden Ansprüche, ferner umfassend:
als Reaktion auf Erfassen einer Änderung der Leistungsmenge und gemäß einer Bestimmung, dass die Änderung der Leistungsmenge einer Änderung von Verwenden elektrischer Leistung zum Erzeugen und/oder Speichern elektrischer Leistung entspricht, Aktualisieren des Leistungsmessers durch Bewegen des Indikators entlang des Pfads basierend auf der Änderung der Leistungsmenge, einschließlich Bewegen des Indikators von Angeben einer Leistungsmenge in dem zweiten Segment zu Angeben einer Leistungsmenge in dem ersten Segment.

9. Das Verfahren (700) nach einem der vorhergehenden Ansprüche, ferner umfassend:
als Reaktion auf Erfassen einer Änderung der Leistungsmenge und gemäß einer Bestimmung, dass die Änderung der Leistungsmenge einer Änderung von Erzeugen und/oder Speichern elektrischer Leistung zu Verwenden elektrischer Leistung entspricht, Aktualisieren des Leistungsmessers durch Bewegen des Indikators entlang des Pfads basierend auf der Änderung der Leistungsmenge, einschließlich Bewegen des Indikators von Angeben einer Leistungsmenge in dem ersten Segment zu Angeben einer Leistungsmenge in dem zweiten Segment.

10. Das Verfahren (700) nach einem der vorhergehenden Ansprüche, ferner umfassend:
als Reaktion auf Erfassen einer Änderung der Leistungsmenge und gemäß einer Bestimmung, dass die Änderung der Leistungsmenge einer Änderung von Nichtverwenden von Verbrennungsleistung zu Verwenden von Verbrennungsleistung entspricht, Aktualisieren des Leistungsmessers durch Bewegen des Indikators entlang des Pfads basierend auf der Änderung der Leistungsmenge, einschließlich Bewegen des Indikators von Angeben einer Leistungsmenge in dem zweiten Segment zu Angeben einer Leistungsmenge in dem dritten Segment.

11. Das Verfahren (700) nach einem der vorhergehenden Ansprüche, wobei Aktualisieren des Leistungsmessers durch Bewegen des Indikators entlang des Pfads basierend auf der Änderung der Leistungsmenge Folgendes beinhaltet:
gemäß einer Bestimmung, dass die Änderung der Leistungsmenge eine Erhöhung der Menge an elektrischer Leistung beinhaltet, die erzeugt und/oder gespeichert wird, Bewegen des Indikators in eine erste Richtung, um die Erhöhung der Menge an elektrischer Leistung anzugeben, die erzeugt und/oder gespeichert wird; und
gemäß einer Bestimmung, dass die Änderung der Leistungsmenge eine Erhöhung der Menge an elektrischer Leistung beinhaltet, die verwendet wird, Bewegen des Indikators in eine zweite Richtung, die sich von der ersten Richtung unterscheidet, um die Erhöhung der Menge an elektrischer Leistung anzugeben, die verwendet wird.

12. Das Verfahren (700) nach dem vorhergehenden Anspruch, ferner umfassend:
gemäß einer Bestimmung, dass der Indikator eine Menge an elektrischer Leistung angibt, die erzeugt und/oder gespeichert wird, Anzeigen, über die eine oder die mehreren Anzeigeerzeugungskomponenten, einer visuellen Angabe, dass elektrische Leistung erzeugt und/oder gespeichert wird, die von dem Indikator getrennt ist; und
gemäß einer Bestimmung, dass der Indikator eine Menge an elektrischer Leistung angibt, die verwendet wird, Verzichten auf Anzeigen der visuellen Angabe, dass elektrische Leistung erzeugt und/oder gespeichert wird.

13. Das Verfahren (700) nach einem der vorhergehenden Ansprüche, wobei das zweite Segment einer ersten Maßeinheit entspricht und das dritte Segment einer zweiten Maßeinheit entspricht, die sich von der ersten Maßeinheit unterscheidet.

14. Ein computerlesbares Medium, umfassend ein oder mehrere Programme, die konfiguriert sind, um von einem oder mehreren Prozessoren eines Computersystems (600) ausgeführt zu werden, das mit einer oder mehreren Anzeigeerzeugungskomponenten in Verbindung steht, wobei das eine oder die mehreren Programme Anweisungen zum Durchführen des Verfahrens (700) nach einem der vorhergehenden Ansprüche beinhalten.

15. Ein Computersystem (600), das konfiguriert ist, um mit einer oder mehreren Anzeigeerzeugungskomponenten zu kommunizieren, wobei das Computersystem Folgendes umfasst:
einen oder mehrere Prozessoren; und
Speicher, der ein oder mehrere Programme speichert, die konfiguriert sind, um von dem einen oder den mehreren Prozessoren ausgeführt zu werden, wobei das eine oder die mehreren Programme Anweisungen zum Durchführen des Verfahrens (700) nach einem der Ansprüche 1-13 beinhalten.

## Revendications

1. Un procédé (700), comprenant :
sur un système informatique (600), le système informatique étant en communication avec un ou plusieurs composants de génération d'affichage :
l'affichage (702), via les un ou plusieurs composants de génération d'affichage et en tant que partie d'un groupe d'instruments, d'une jauge d'énergie qui comprend :
une ligne qui correspond à des quantités d'énergie (704), comprenant énergie électrique et énergie de combustion, la ligne comprenant :
un premier segment qui correspond à une quantité d'énergie électrique qui est en train d'être générée et/ou stockée ;
un second segment qui correspond à une quantité d'énergie électrique qui est en train d'être utilisée ; et
un troisième segment qui correspond à une quantité d'énergie d'un moteur à combustion ; et
un indicateur qui se déplace le long de la ligne sur la base de changements des quantités d'énergie électrique et d'énergie de combustion (706), et
l'indicateur indiquant des quantités d'énergie électrique et d'énergie de combustion ;
pendant l'affichage de la jauge d'énergie, la détection (708) d'un changement de quantité d'énergie ; et
en réponse à la détection du changement de quantité d'énergie :
la mise à jour (710), via les un ou plusieurs composants de génération d'affichage, de la jauge d'énergie par déplacement de l'indicateur le long de la ligne sur la base du changement de quantité d'énergie ;
suite à une détermination que le changement de la quantité d'énergie indique une quantité non nulle d'énergie du moteur à combustion, l'affichage, via les un ou plusieurs composants de génération d'affichage, d'une indication visuelle d'une partie de zone rouge ; et
suite à une détermination que le changement de la quantité d'énergie indique une quantité nulle d'énergie du moteur à combustion, le renoncement à l'affichage, via les un ou plusieurs composants de génération d'affichage, de l'indication visuelle de la partie de zone rouge.

2. Le procédé (700) de la revendication 1, dans lequel la quantité d'énergie électrique qui est en train d'être générée et/ou stockée est une quantité d'énergie électrique qui est en train d'être générée par un ou plusieurs moteurs électriques et/ou une quantité d'énergie électrique qui est en train d'être stockée dans une ou plusieurs batteries d'un véhicule.

3. Le procédé (700) de l'une des revendications 1 à 2, dans lequel la quantité d'énergie électrique en train d'être utilisée est une quantité d'énergie qui est en train d'être délivrée par une ou plusieurs batteries d'un véhicule.

4. Le procédé (700) de l'une des revendications 1 à 2, dans lequel la quantité d'énergie électrique en train d'être utilisée est basée sur une quantité de besoin en énergie d'un ou plusieurs moteurs électriques.

5. Le procédé (700) de l'une des revendications 1 à 4, dans lequel la quantité d'énergie du moteur à combustion est basée sur une énergie délivrée par le moteur à combustion.

6. Le procédé (700) de l'une des revendications 1 à 5, dans lequel la quantité d'énergie du moteur à combustion est basée sur des tours par minute du moteur à combustion.

7. Le procédé (700) de l'une des revendications précédentes, comprenant en outre :
pendant l'affichage de la jauge d'énergie avec l'indicateur qui indique une quantité nulle d'énergie du moteur à combustion, le renoncement à l'affichage, via les un ou plusieurs composants de génération d'affichage,
de l'indication visuelle d'une partie de zone rouge.

8. Le procédé (700) de l'une des revendications précédentes, comprenant en outre :
en réponse à la détection d'un changement de quantité d'énergie et suite à une détermination que le changement de quantité d'énergie correspond à un changement d'une utilisation d'énergie électrique à une génération et/ou à un stockage d'énergie électrique, la mise à jour de la jauge d'énergie par déplacement de l'indicateur le long de la ligne sur la base du changement de quantité d'énergie, comprenant le déplacement de l'indicateur de l'indication d'une quantité d'énergie dans le second segment à une indication d'une quantité d'énergie dans le premier segment.

9. Le procédé (700) de l'une des revendications précédentes, comprenant en outre :
en réponse à la détection d'un changement de quantité d'énergie et suite à une détermination que le changement de quantité d'énergie correspond à un changement d'une génération et/ou d'un stockage d'énergie électrique à une utilisation d'énergie électrique, la mise à jour de la jauge d'énergie par déplacement de l'indicateur le long de la ligne sur la base du changement de quantité d'énergie, comprenant le déplacement de l'indicateur de l'indication d'une quantité d'énergie dans le premier segment à une indication d'une quantité d'énergie dans second le segment.

10. Le procédé (700) de l'une de l'une des revendications précédentes, comprenant en outre :
en réponse à la détection d'un changement de quantité d'énergie et suite à une détermination que le changement de quantité d'énergie correspond à un changement d'une non-utilisation d'énergie de combustion à une utilisation d'une énergie de combustion, la mise à jour de la jauge d'énergie par déplacement de l'indicateur le long de la ligne sur la base du changement de quantité d'énergie, comprenant le déplacement de l'indicateur de l'indication d'une quantité d'énergie dans le second segment à une indication d'une quantité d'énergie dans le troisième segment.

11. Le procédé (700) de l'une des revendications précédentes, dans lequel la mise à jour de la jauge d'énergie par déplacement de l'indicateur le long de la ligne sur la base du changement de quantité d'énergie comprend :
suite à une détermination que le changement de quantité d'énergie comprend une augmentation de quantité d'énergie électrique en train d'être générée et/ou stockée, le déplacement de l'indicateur dans une première direction pour indiquer l'augmentation de la quantité d'énergie électrique en train d'être générée et/ou stockée ; et
suite à une détermination que le changement de quantité d'énergie comprend une augmentation de quantité d'énergie électrique en train d'être utilisée, le déplacement de l'indicateur d'une seconde direction, différente de la première direction, pour indiquer l'augmentation de la quantité d'énergie électrique en train d'être utilisée.

12. Le procédé (700) de l'une des revendications précédentes, comprenant en outre :
suite à une détermination que l'indicateur indique une quantité d'énergie électrique en train d'être générée et/ou stockée, l'affichage, via les un ou plusieurs composants de génération d'affichage, d'une indication visuelle, qui est distincte de l'indicateur, que de l'énergie électrique est en train d'être générée et/ou stockée ; et
suite à une détermination que l'indicateur indique une quantité d'énergie électrique en train d'être utilisée, le renoncement à l'affichage de l'indication visuelle que de l'énergie électrique est en train d'être générée et/ou stockée.

13. Le procédé (700) de l'une des revendications précédentes, dans lequel le second segment correspond à une première unité de mesure, et le troisième segment correspond à une seconde unité de mesure qui est différente de la première unité de mesure.

14. Un support lisible par calculateur comprenant un ou plusieurs programmes configurés pour être exécutés par un ou plusieurs processeurs d'un système informatique (600) qui est en communication avec un ou plusieurs composants de génération d'affichage, les un ou plusieurs programmes comprenant des instructions pour mettre en œuvre le procédé (700) de l'une des revendications précédentes.

15. Un système informatique (600) qui est configuré pour communiquer avec un ou plusieurs composants de génération d'affichage, le système informatique comprenant :
un ou plusieurs processeurs ; et
une mémoire stockant un ou plusieurs programmes configurés pour être exécutés par les un ou plusieurs processeurs, les un ou plusieurs programmes comprenant des instructions pour mettre en œuvre le procédé (700) de l'une des revendications 1 à 13.
